# EUROPÄISCHE PATENTSCHRIFT

(11) **EP 3 789 676 B1**
(45) Veröffentlichungstag und Bekanntmachung des Hinweises auf die Patenterteilung: **16.06.2021**
(21) Anmeldenummer: 20194307.3
(22) Anmeldetag: 03.09.2020
(51) Int. Cl.: F23H 13/06, F23H 15/00, F23L 1/02

(54) **DREHROST MIT EINER REINIGUNGSEINRICHTUNG FÜR EINE BIOMASSE-HEIZANLAGE**
ROTARY GRATE WITH A CLEANING DEVICE FOR A BIOMASS HEATING SYSTEM
GRILLE ROTATIVE DOTÉE D'UN DISPOSITIF DE NETTOYAGE POUR UNE INSTALLATION DE CHAUFFAGE À BIOMASSE

(30) Priorität: 03.09.2019 EP 19195118; 19.11.2019 EP 19210080; 20.11.2019 EP 19210444
(43) Veröffentlichungstag der Anmeldung: 10.03.2021
(60) Teilanmeldung: 21172182.4
(73) Patentinhaber: SL-Technik GmbH, 5120 St. Pantaleon (AT)
(72) Erfinder: SOMMERAUER, Thilo, 5120 St. Pantaleon (AT)
(74) Vertreter: Kuhnen & Wacker Patent- und Rechtsanwaltsbüro PartG mbB

(56) Entgegenhaltungen:
- AT-A1- 506 615
- AT-A4- 503 043
- AT-U1- 6 972
- AT-U1- 13 825
- DE-C- 277 440
- DE-C- 557 091
- DE-C1- 19 528 422

## Beschreibung

### TECHNISCHES GEBIET

Die Erfindung betrifft einen verbesserten Drehrost mit einer Reinigungseinrichtung für eine Biomasse-Heizanlage.

Insbesondere betrifft die Erfindung einen dreiteiligen Drehrost mit einer verbesserten Abreinigung und verbesserter Perforierung.

### STAND DER TECHNIK

Biomasse-Heizanlagen in einem Leistungsbereich von 20 bis 500 kW sind bekannt. Biomasse kann als ein günstiger, heimischer, krisensicherer und umweltfreundlicher Brennstoff angesehen werden. Als verfeuerbare Biomasse gibt es beispielsweise Hackgut oder Pellets.

Die Pellets bestehen meistens aus Holzspänen, Sägespänen, Biomasse oder anderen Materialien, die in kleine Scheiben oder Zylinder mit einem Durchmesser von ca. 3 bis 15 mm und einer Länge von 5 bis 30 mm verdichtet worden sind. Hackgut (auch als Holzschnitzel, Holzhackschnitzel oder Hackschnitzel bezeichnet) ist mit schneidenden Werkzeugen zerkleinertes Holz.

Biomasse-Heizanlagen für Brennstoff in Form von Pellets und Hackgut weisen im Wesentlichen einen Kessel mit einer Brennkammer (der Verbrennungsraum) und mit einer daran anschließenden Wärmetauschvorrichtung auf. Aufgrund in vielen Ländern verschärfter gesetzlicher Vorschriften weisen einige Biomasse-Heizanlagen auch einen Feinstaubfilter auf. Regelmäßig ist weiteres verschiedenes Zubehör vorhanden, wie beispielsweise Regelungseinrichtungen, Sonden, Sicherheitsthermostate, Druckschalter, eine Abgas- bzw. Rauchgasrückführung und ein separater Brennstoffbehälter.

Bei der Brennkammer sind regelmäßig eine Einrichtung zur Zuführung von Brennstoff, eine Einrichtung für die Zufuhr der Luft und eine Zündvorrichtung für den Brennstoff vorgesehen. Die Einrichtung zur Zufuhr der Luft weist wiederum normalerweise ein Hochleistungsgebläse mit niedrigem Druck auf, um die thermodynamischen Faktoren bei der Verbrennung in der Brennkammer vorteilhaft zu beeinflussen. Eine Einrichtung zur Zuführung von Brennstoff kann beispielsweise mit einem seitlichen Einschub vorgesehen sein (sog. Quereinschubfeuerung). Dabei wird der Brennstoff von der Seite über eine Schnecke oder einen Kolben in die Brennkammer eingeschoben.

In der Brennkammer ist weiter üblicherweise ein Feuerungsrost vorgesehen, auf welchem kontinuierlich der Brennstoff im Wesentlichen zugeführt und verbrannt wird. Dieser Feuerungsrost lagert den Brennstoff für die Verbrennung und weist Öffnungen auf, die den Durchgang eines Teils der Verbrennungsluft als Primärluft zu dem Brennstoff erlauben. Weiter kann der Rost starr oder beweglich ausgeführt sein. Bewegliche Roste dienen üblicherweise einer einfachen Entsorgung der bei der Verbrennung entstehenden Verbrennungsrückstände, beispielsweise Asche und Schlacke. Diese Verbrennungsrückstände können jedoch an dem Rost anhaften oder anbacken und müssen regelmäßig nachteilhaft manuell abgereinigt werden. Dabei können durch die Asche und Schlacke zudem die Öffnungen im Rost zur Luftzufuhr mit der Asche oder Schlacke verstopfen, womit die Verbrennungseffizienz nachteilhaft beeinflusst wird. Die Praxis zeigt, dass die Verbrennungsrückstände insbesondere in den Öffnungen des Rostes fest anhaften oder anbacken können, womit eine Abreinigung des Rostes nochmals erschwert wird.

Beim Durchströmen des Rosts mit der Primärluft wird unter anderem auch der Rost gekühlt, wodurch das Material geschont wird. Sollten die Öffnungen nun verstopfen, so wird auch dieser Kühleffekt verschlechtert.

Zudem kann es bei unzureichender Luftzuführung auf dem Rost nochmals zu erhöhter Schlackenbildung kommen. Insbesondere Feuerungen, die mit unterschiedlichen Brennstoffen beschickt werden sollen, womit sich die vorliegende Offenbarung insbesondere beschäftigt, weisen die inhärente Problematik auf, dass die unterschiedlichen Brennstoffe unterschiedliche Ascheschmelzpunkte, Wassergehalte und unterschiedliches Brennverhalten aufweisen. Damit ist es problematisch eine Heizanlage vorzusehen, die für unterschiedliche Brennstoffe gleichermaßen gut geeignet ist und deren Roste entsprechend verbessert abgereinigt werden können.

Die Brennkammer kann weiterhin regelmäßig in eine Primärverbrennungszone (unmittelbare Verbrennung des Brennstoffes auf dem Rost) und eine Sekundärverbrennungszone (Nachverbrennung des Rauchgases) eingeteilt werden. In der Brennkammer erfolgt die Trocknung, pyrolytische Zersetzung sowie die Vergasung des Brennstoffes. Um die entstehenden brennbaren Gase vollständig zu verbrennen kann zudem eine Sekundärluft eingeführt werden.

Die Verbrennung der Pellets oder des Hackguts weist nach der Trocknung im Wesentlichen zwei Phasen auf. In der ersten Phase wird der Brennstoff durch hohe Temperaturen und Luft, die in die Brennkammer eingeblasen werden kann, und zumindest teilweise pyrolytisch zersetzt und in Gas umgewandelt, In der zweiten Phase treten die Verbrennung des in Gas umgewandelten Teils sowie die Verbrennung der eventuell vorhandenen restlichen Feststoffe ein. Insofern gast der Brennstoff aus, und das entstandene Gas wird mitverbrannt.

Unter Pyrolyse versteht man die thermische Zersetzung eines festen Stoffes unter Sauerstoffabschluss. Die Pyrolyse lässt sich in die primäre und sekundäre Pyrolyse aufteilen. Die Produkte der primären Pyrolyse sind Pyrolysekoks und Pyrolysegase, wobei sich die Pyrolysegase in bei Raumtemperatur kondensierbare und nicht kondensierbare Gase unterteilen lassen. Die primäre Pyrolyse findet bei grob 250-450°C und die sekundäre Pyrolyse bei ungefähr 450-600°C statt. Die in weiterer Folge auftretende sekundäre Pyrolyse basiert auf der Weiterreaktion der primär gebildeten Pyrolyseprodukte. Die Trocknung und Pyrolyse finden zumindest weitgehend ohne den Einsatz von Luft statt, da flüchtige CH - Verbindungen vom Partikel austreten und daher keine Luft an die Partikeloberfläche gelangt. Die Vergasung kann als Teil der Oxidation gesehen werden; es werden die bei der pyrolytischen Zersetzung entstandenen festen, flüssigen und gasförmigen Produkte durch weitere Wärmeeinwirkung in Reaktion gebracht. Dies geschieht unter Zugabe eines Vergasungsmittels wie Luft, Sauerstoff oder auch Wasserdampf. Der Lambda-Wert bei der Vergasung ist größer als null und kleiner als eins. Die Vergasung findet bei rund 300 bis 850°C statt. Oberhalb von ungefähr 850°C findet die vollständige Oxidation mit Luftüberschuss (Lambda größer 1) statt. Die Reaktionsendprodukte sind im Wesentlichen Kohlendioxid, Wasserdampf und Asche. Bei allen Phasen sind die Grenzen nicht starr, sondern fließend. Mittels einer am Abgasausgang des Kessels vorgesehenen Lamdasonde kann der Verbrennungsprozess vorteilhaft geregelt werden.

Allgemein ausgedrückt wird der Wirkungsgrad der Verbrennung durch die Umwandlung der Pellets in Gas erhöht, weil gasförmiger Brennstoff mit der Verbrennungsluft besser vermischt wird, und eine geringere Emission von Schadstoffen, weniger unverbrannte Partikel und Asche erzeugt werden.

Bei der Verbrennung von Biomasse entstehen luftgetragene Verbrennungsprodukte, deren Hauptbestandteile Kohlenstoff, Wasserstoff und Sauerstoff sind. Diese können in Emissionen aus vollständiger Oxidation, aus unvollständiger Oxidation und Stoffen aus Spurenelementen bzw. Verunreinigungen unterschieden werden. Bei den Emissionen aus vollständiger Oxidation handelt es sich im Wesentlichen um Kohlenstoffdioxid (CO₂) und Wasserdampf (H₂O). Die Bildung von Kohlenstoffdioxid aus dem Kohlenstoff der Biomasse ist das Ziel der Verbrennung, da so die freigesetzte Energie genutzt werden kann. Die Freisetzung von Kohlenstoffdioxid (CO₂) verhält sich weitgehend proportional zum Kohlenstoffgehalt der verbrannten Brennstoffmenge; somit ist das Kohlenstoffdioxid auch abhängig von der bereitzustellenden Nutzenergie. Eine Reduzierung kann im Wesentlichen nur durch eine Verbesserung des Wirkungsgrades erzielt werden. Ebenso entstehen in jedem Falle Verbrennungsrückstände, wie beispielsweise Asche und Schlacke, die entsprechend fest an dem Rost anhaften können.

Insbesondere bei Biomasse-Heizanlagen, welche für verschiedene Arten von biologischem Brennstoff tauglich sein sollen, erschwert es die variierende Qualität und Konsistenz des Brennstoffs, eine durchgängig hohe Effizienz der Biomasse-Heizanlage aufrechtzuerhalten, insbesondere da die Asche- und Schlackebildung auf dem Rost in sehr unterschiedlichem Maße erfolgen kann. Diesbezüglich besteht erheblicher Optimierungsbedarf.

Zudem kann der biologische Brennstoff verunreinigt sein. Diese Verunreinigungen können die Asche- und Schlackebildung verstärken und/oder Verstopfungen in den Öffnungen des Rostes verursachen.

Ein weiterer Nachteil der herkömmlichen Biomasse-Heizanlagen für Pellets kann darin bestehen, dass Pellets, die in die Brennkammer fallen, aus dem Gitter bzw. Rost herausrollen bzw. herausrutschen können und in einen Bereich der Brennkammer gelangen können, in dem die Temperatur niedriger ist oder in dem die Luftzufuhr schlecht ist, oder sie können sogar in die unterste Kammer des Kessels fallen. Pellets, die nicht auf dem Gitter bzw. Rost verbleiben, verbrennen unvollständig und verursachen dadurch einen schlechten Wirkungsgrad, übermäßige Asche und eine bestimmte Menge an unverbrannten Schadstoffpartikeln.

Biomasse-Heizanlagen für Pellets oder Hackgut weisen die folgenden weiteren Nachteile und Probleme auf.

Ein Problem besteht darin, dass eine unvollständige Verbrennung infolge der nicht gleichmäßigen Verteilung des Brennstoffes auf dem Gitter bzw. Rost und infolge der nicht optimalen Mischung von Luft und Brennstoff die Anhäufung und das Herabfallen von unverbrannter Asche durch die Lufteintrittsöffnungen, die direkt auf den Verbrennungsrost führen, in die Luftkanäle begünstigt.

Dies ist besonders störend und verursacht häufige Unterbrechungen, um Wartungsarbeiten wie Reinigen durchzuführen. Aus all diesen Gründen wird in der Brennkammer normalerweise ein großer Luftüberschuss aufrechterhalten, doch dadurch nehmen die Flammentemperatur und der Wirkungsgrad der Verbrennung ab, und es kommt zu hohen NOx-Emissionen.

Die AT 6 972 U1 offenbart eine Kleinfeuerungsanlage oder einen Ofen für rieselfähige Brennstoffe, insbesondere Holzpellets, gekennzeichnet durch eine wesentliche Komfort-, Wirtschaftlichkeits- und Sicherheitssteigerung gegenüber dem Stand der Technik, sowie durch den universellen Einsatz als Wohnraum- oder Kellergerät. Die Erfindung umfasst die feuerfeste, ""heiße"" Brennkammer mit strömungstechnisch optimierter, getrennter, modulierender Primär- und Sekundärluftzufuhr, geregelt über Temperatursensor, voreinstellbarem Sekundärluftdeckel und Saugzugventilator. Die Erfindung umfasst weiters eine gezielte Flugaschen-Rezirkulation über eine kegelförmige ausgeführte Ausbrandzone mit aufgesetzter, glatter Brennkammer-Gussabdeckung, kombiniert mit einer automatischen Brennkammerentaschung bzw. Entschlackung durch automatisch schwenkbaren, temperaturbeständigen Kammrost mit seitlich-vertikal angeordneten Luftleitblechen in Halbschalenform (Restglutentschlackungsschaufeln) für einen langen, wartungsfreien Betrieb. Die spezielle Rauchgasführung über die beidseitig eingebauten, glatten Wärmetauscherflächen mit integriertem Rauchgaskanal, die von vorne zugänglich und daher einfach zu reinigen sind, ist ebenso unverwechselbar.

Die DE 557 091 C offenbart eine Roststab-Reinigungsvorrichtung für Wanderroste, bei welcher mittels Gewichtswirkung betätigte, am vorderen Rostende angebrachte Schlagvorrichtungen durch die Rostglieder-selbst ausgelöst werden, dadurch gekennzeichnet, dass mit einer Welle mittels Hebel Schlagschienen von der Länge der Rostbreite verbunden sind und die Schlagvorrichtung derart angeordnet ist, dass die die Bewegung auslösende Schlagschiene auf die vorlaufende Kante eines Rostgliedes schlägt und sodann dessen Oberfläche abkratzt und dass die andere mit der Welle verbundene Schlagschiene nach erfolgtem Abkratzen der Oberfläche des Rostgliedes auf die nachlaufende Kante schlägt.

Die DE 277 440 C offenbart eine Klopfvorrichtung zum Reinigen von Wanderrosten, wobei die Klopforgane auf frei hängenden, hammerartig wirkenden, oberhalb des Rostes angebrachten Klopfplatten bestehen.

Bei einer Biomasse-Heizanlage sollte eine einfache Entaschung oder Abreinigung des Rostes ermöglicht werden, sowie sollte eine einfache Wartung des Rostes der Biomasse-Heizanlage ermöglicht werden.

Zudem sollte eine hohe Anlagenverfügbarkeit vorhanden sein.

Die Hybridtechnologie soll zudem sowohl den Einsatz von Pellets als auch von Hackgut mit Wassergehalten zwischen 8 und 35 Gewichtsprozent ermöglichen.

Es ist ausgehend von den vorstehend genannten Problemen eine Aufgabe der vorliegenden Erfindung, einen Rost für eine Biomasse-Heizanlage vorzusehen, der einen optimierten Betrieb einer Biomasse-Heizanlage erlaubt.

Diese Aufgabe wird durch die Gegenstände der unabhängigen Ansprüche 1 und 19 gelöst. Weitere Aspekte und vorteilhafte Weiterbildungen sind Gegenstand der abhängigen Ansprüche.

Die Vorteile dieser Konfiguration und auch der folgenden Aspekte ergeben sich aus der folgenden Beschreibung der zugehörigen Ausführungsbeispiele.

Gemäß der Erfindung ist ein Drehrost für eine Biomasse-Heizanlage vorgesehen, der weiter das Folgende aufweist: zumindest ein Drehrostelement; zumindest eine Lagerachse, mittels der das Drehrostelement drehbar gelagert ist; zumindest eine an einem der Drehrostelemente angebrachte Reinigungseinrichtung, wobei die Reinigungseinrichtung ein relativ zum Drehrostelement bewegliches Masseelement aufweist; wobei die Reinigungseinrichtung derart eingerichtet ist, dass bei Drehung des Drehrostelements eine Beschleunigungsbewegung des Masseelements initiiert wird, so dass die Reinigungseinrichtung eine Klopfwirkung auf das Drehrostelement ausübt, um das Drehrostelement abzureinigen.

Weiterbildungen des erfindungsgemäßen Drehrosts sind in den abhängigen Ansprüchen angegeben.

Gemäß der Erfindung ist außerdem ein Verfahren zum Abreinigen eines Drehrosts einer Biomasseheizanlage vorgesehen, wobei der Drehrost das Folgende aufweist: zumindest ein Drehrostelement; zumindest eine Lagerachse, mittels der das Drehrostelement drehbar gelagert ist; zumindest eine an einem der Drehrostelemente angebrachte Reinigungseinrichtung, wobei die Reinigungseinrichtung ein relativ zum Drehrostelement bewegliches Masseelement aufweist; wobei das Verfahren die folgenden Schritte aufweist:
Drehen des Drehrostelements in eine erste Richtung und damit einhergehendes Bewegen des Masseelements der Reinigungseinrichtung; Initiieren einer Beschleunigungsbewegung des Masseelements; Anschlagen des Masseelements mit Klopfwirkung auf einer Anschlagfläche entweder des Drehrostelements oder der Reinigungseinrichtung zur Abreinigung des Drehrostelements.

Weiterbildungen des erfindungsgemäßen Verfahrens sind in den abhängigen Ansprüchen angegeben.

Die einzelnen Effekte und Vorteile der Erfindung ergeben sich aus der nachstehenden Figurenbeschreibung und den zugehörigen Zeichnungen.

"Horizontal" kann vorliegend eine ebene Ausrichtung einer Achse oder eines Querschnitts in der Annahme bezeichnen, dass der Kessel ebenso horizontal aufgestellt ist, womit beispielsweise das Erdniveau die Referenz sein kann. Alternativ kann "horizontal" vorliegend "parallel" zur Grundebene des Kessels bedeuten, so wie diese üblicherweise definiert wird. Weiter alternativ kann, insbesondere bei einem Fehlen einer Bezugsebene, "horizontal" lediglich als zumindest annähernd lotrecht zur Wirkungsrichtung der Gravitationskraft der Erde bzw. Erdbeschleunigung verstanden werden.

Obschon alle vorstehenden Einzelmerkmale und Details eines Aspekts der Erfindung und der Weiterbildungen dieses Aspekts in Zusammenhang mit der Biomasse-Heizanlage beschrieben sind, so sind diese Einzelmerkmale und Details auch als solche unabhängig von der Biomasse-Heizanlage offenbart.

Die Biomasse-Heizanlage mit dem erfindungsgemäßen Rost mit der Reinigungseinrichtung / den Reinigungseinrichtungen wird/werden nachfolgend in Ausführungsbeispielen und einzelnen Aspekten anhand der Figuren näher erläutert:
- Fig. 1: zeigt eine dreidimensionale Überblicksansicht einer Biomasse-Heizanlage ausgestattet mit einer Ausführungsform der Erfindung;
- Fig. 2: zeigt eine Querschnittsansicht durch die Biomasse-Heizanlage der Fig. 1, welche entlang einer Schnittlinie SL1 vorgenommen wurde und welche aus der Seitenansicht S betrachtet dargestellt ist;
- Fig. 3: zeigt ebenso eine Querschnittsansicht durch die Biomasse-Heizanlage der Fig. 1 mit einer Darstellung des Strömungsverlaufs, wobei die Querschnittsansicht entlang einer Schnittlinie SL1 vorgenommen wurde und aus der Seitenansicht S betrachtet dargestellt ist;
- Fig. 4: zeigt eine Teilansicht der Fig. 2, die eine Brennkammergeometrie des Kessels der Fig. 2 und Fig. 3 darstellt;
- Fig. 5: zeigt eine Schnittansicht durch den Kessel bzw. die Brennkammer des Kessels entlang der Vertikalschnittlinie A2 der Fig. 4;
- Fig. 6: zeigt eine dreidimensionale Schnittansicht auf die Primärverbrennungszone der Brennkammer mit dem Drehrost der Fig. 4;
- Fig. 7: zeigt entsprechend zur Fig. 6 eine Explosionsdarstellung der Brennkammersteine;
- Fig. 8: zeigt eine Aufsicht auf den Drehrost mit Drehrostelementen von oben aus Sicht der Schnittlinie A1 der Fig. 2;
- Fig. 9: zeigt den Drehrost der Fig. 2 in geschlossener Position, wobei alle Drehrostelemente horizontal ausgerichtet bzw. geschlossen sind;
- Fig. 10: zeigt den Drehrost der Fig. 9 in dem Zustand einer Teilabreinigung des Drehrosts im Gluterhaltungsbetrieb;
- Fig. 11: zeigt den Drehrost der Fig. 9 im Zustand der Universalabreinigung, welche bevorzugt während eines Anlagenstillstands durchgeführt wird;
- Figuren 12a bis 12d: zeigen eine Prinzipdarstellung des erfindungsgemäßen Drehrosts mit einer Reinigungseinrichtung;
- Figuren 13a und 13b: zeigen eine Prinzipdarstellung des erfindungsgemäßen Drehrosts mit einer alternativen Reinigungseinrichtung;
- Figuren 14a bis 14b: zeigen Ansichten auf einen erfindungsgemäßen Drehrost mit Reinigungseinrichtungen;
- Figuren 15a und 15b: zeigen vertikale Querschnittsansicht und eine dreidimensionale Schnittansicht auf den Rost der Fig. 14a in einem ersten Zustand;
- Figuren 16a und 16b: zeigen vertikale Querschnittsansicht und eine dreidimensionale Schnittansicht auf den Rost der Fig. 14a in einem zweiten Zustand.
- Figuren 17a und 17b: zeigen eine vertikale Querschnittsansicht und eine dreidimensionale Schnittansicht auf den Rost der Fig. 14a in einem dritten Zustand;
- Figuren 18a und 18b: zeigen vertikale Querschnittsansicht und eine dreidimensionale Schnittansicht auf den Rost der Fig. 14a in einem vierten Zustand;
- Figuren 19a und 19b: zeigen vertikale Querschnittsansicht und eine dreidimensionale Schnittansicht auf den Rost der Fig. 14a in einem fünften Zustand;
- Figuren 20a und 20b: zeigen eine vertikale Querschnittsansicht und eine dreidimensionale Schnittansicht auf den Rost der Fig. 14a in einem sechsten Zustand;
- Figuren 21a und 21b: zeigen vertikale Querschnittsansicht und eine dreidimensionale Schnittansicht auf den Rost der Fig. 14a in einem siebten Zustand;
- Figuren 22a und 22b: zeigen vertikale Querschnittsansicht und eine dreidimensionale Schnittansicht auf den Rost der Fig. 14a in einem achten Zustand.
- Figuren 23a und 23b: zeigen eine vertikale Querschnittsansicht und eine dreidimensionale Schnittansicht auf den Rost der Fig. 14a in einem neunten Zustand;
- Figuren 24a und 24b: zeigen vertikale Querschnittsansicht und eine dreidimensionale Schnittansicht auf den Rost der Fig. 14a in einem zehnten Zustand;
- Figuren 25a und 25b: zeigen vertikale Querschnittsansicht und eine dreidimensionale Schnittansicht auf den Rost der Fig. 14a in einem elften Zustand;
- Fig. 26: zeigt eine Draufsicht auf den Rost der Fig. 14 mit Perforation bzw. schlitzförmigen Öffnungen.

### BESCHREIBUNG VON BEISPIELHAFTEN AUSFÜHRUNGSFORMEN

Im Folgenden werden verschiedene lediglich beispielhafte Ausführungsformen der vorliegenden Offenbarung unter Bezugnahme auf die beigefügten Zeichnungen offenbart.

Sollten in der Beschreibung allgemeinere Begriffe für in den Figuren dargestellte Merkmale oder Elemente verwendet werden, so ist beabsichtigt, dass für den Fachmann nicht nur das spezielle Merkmal oder Element in den Figuren offenbart ist, sondern auch die allgemeinere technische Lehre.

In Bezug auf die Beschreibung der Figuren können die gleichen Bezugszeichen in den einzelnen Figuren verwendet werden, um auf ähnliche oder technisch entsprechende Elemente zu verweisen. Weiter können der Übersichtlichkeit halber in einzelnen Detail- oder Ausschnittsansichten mehr Elemente oder Merkmale mit Bezugszeichen dargestellt sein, als in den Überblicksansichten. Dabei ist davon auszugehen, dass diese Elemente oder Merkmale auch entsprechend in den Überblicksdarstellungen offenbart sind, auch wenn diese dort nicht explizit aufgeführt sind.

Es ist zu verstehen, dass eine Singularform eines Substantivs, das einem Gegenstand entspricht, eines oder mehrere der Dinge beinhalten kann, es sei denn, der betreffende Kontext weist eindeutig auf etwas anderes hin.

In der vorliegenden Offenbarung kann ein Ausdruck wie "A oder B", "mindestens einer von A oder/und B" oder "einer oder mehrere von A oder/und B" alle möglichen Kombinationen von zusammen aufgeführten Merkmalen beinhalten. Ausdrücke wie "erster", "zweiter", "primär" oder "sekundär", die hierin verwendet werden, können verschiedene Elemente unabhängig von ihrer Reihenfolge und/oder Bedeutung darstellen und schränken entsprechende Elemente nicht ein. Wenn beschrieben wird, dass ein Element (z.B. ein erstes Element) "funktionsfähig" oder "kommunikativ" mit einem anderen Element (z.B. einem zweiten Element) gekoppelt oder verbunden ist, kann das Element direkt mit dem anderen Element verbunden werden oder mit dem anderen Element über ein anderes Element (z.B. ein drittes Element) verbunden werden.

Ein in der vorliegenden Offenbarung verwendeter Ausdruck "konfiguriert zu" (oder "eingerichtet") kann beispielsweise durch "geeignet für", "geeignet zu", "angepasst zu", "gemacht zu", "fähig zu" oder "entworfen zu" ersetzt werden, je nach dem technisch Möglichen. Alternativ kann in einer bestimmten Situation ein Ausdruck "Vorrichtung konfiguriert zu" oder "eingerichtet zu" bedeuten, dass die Vorrichtung zusammen mit einer anderen Vorrichtung oder Komponente arbeiten kann, oder eine entsprechende Funktion ausführen kann.

Alle Größenangaben, welche in "mm" angegeben sind, sind als ein Größenbereich von +- 1 mm um den angegebenen Wert zu verstehen, sofern nicht eine andere Toleranz oder andere Bereiche oder Bereichsgrenzen explizit angegeben ist.

Anzumerken ist, dass die vorliegenden Einzelaspekte, beispielsweise die Reinigungseinrichtung, gesondert von bzw. getrennt von der Biomasse-Heizanlage hierin als Einzelteile oder Einzelvorrichtungen offenbart sind. Es ist dem Fachmann also klar, dass auch einzelne Aspekte oder Anlagenteile hierin auch für sich genommen offenbart sind. Vorliegend sind die einzelnen Aspekte oder Anlageteile insbesondere in den durch Klammern gekennzeichneten Unterkapiteln offenbart. Es ist vorgesehen, dass diese einzelnen Aspekte auch gesondert beansprucht werden können.

Weiter sind der Übersichtlichkeit halber in den Figuren nicht alle Merkmale und Elemente, insbesondere wenn sich diese wiederholen, einzeln bezeichnet. Es sind vielmehr die Elemente und Merkmale jeweils exemplarisch bezeichnet. Analoge oder gleiche Elemente sind dann als solche zu verstehen.

### (Biomasse-Heizanlage)

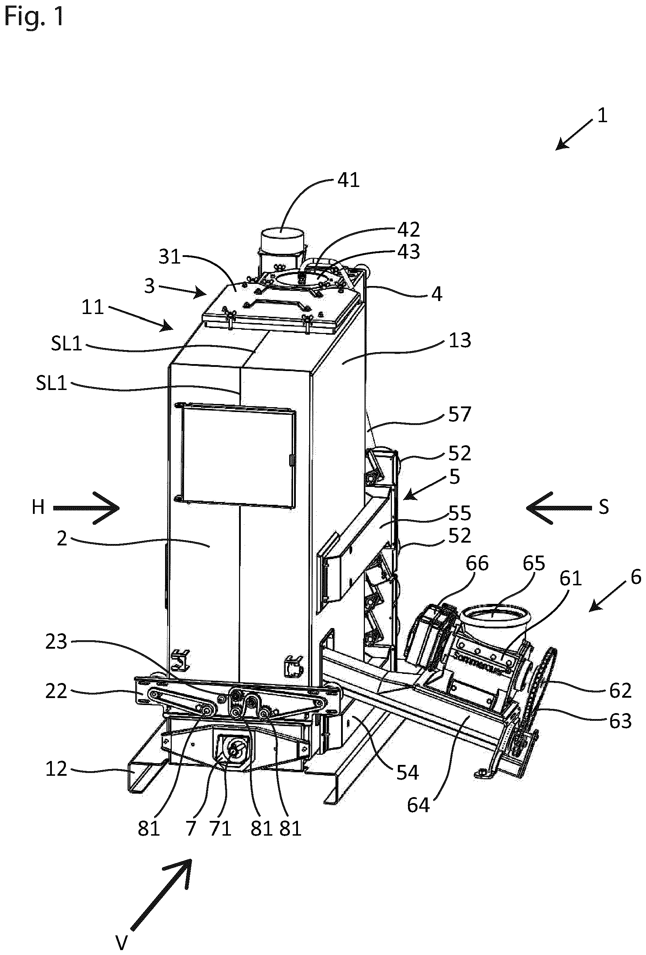

Fig. 1 zeigt eine dreidimensionale Überblicksansicht einer beispielhaften Biomasse-Heizanlage 1, welche den erfindungsgemäßen Drehrost 25 mit einer Reinigungseinrichtung 125 beinhalten kann.

Der Pfeil V bezeichnet in den Figuren die Vorderansicht der Anlage 1, und der Pfeil S bezeichnet in den Figuren die Seitenansicht der Anlage 1.

Die Biomasse-Heizanlage 1 weist einen Kessel 11 auf, der auf einem Kesselfuß 12 gelagert ist. Der Kessel 11 weist ein Kesselgehäuse 13, beispielsweise aus Stahlblech, auf.

Im vorderen Teil des Kessels 11 befindet sich eine Brenneinrichtung 2 (nicht dargestellt), die über eine erste Wartungsöffnung mit einem Verschluss 21 erreicht werden kann. Eine Drehmechanikhalterung 22 für einen Drehrost 25 (nicht dargestellt) lagert eine Drehmechanik 23, mit der Antriebskräfte auf Lagerachsen 81 des Drehrosts 25 übertragen werden können.

Im Mittelteil des Kessels 11 befindet sich ein Wärmetauscher 3 (nicht dargestellt), der von oben über eine zweite Wartungsöffnung mit einem Verschluss 31 erreicht werden kann.

Im Hinterteil des Kessels 11 befindet sich eine optionale Filtereinrichtung 4 (nicht dargestellt) mit einer Elektrode 44 (nicht dargestellt), die mit einer isolierenden Elektrodenhalterung 43 aufgehängt ist, und die über eine Elektrodenversorgungsleitung 42 unter Spannung gesetzt wird. Das Abgas der Biomasse-Heizanlage 1 wird über einen Abgasausgang 41 abgeführt, der der Filtereinrichtung 4 strömungstechnisch (fluidisch) nachgelagert angeordnet ist. Hier kann ein Ventilator vorgesehen sein.

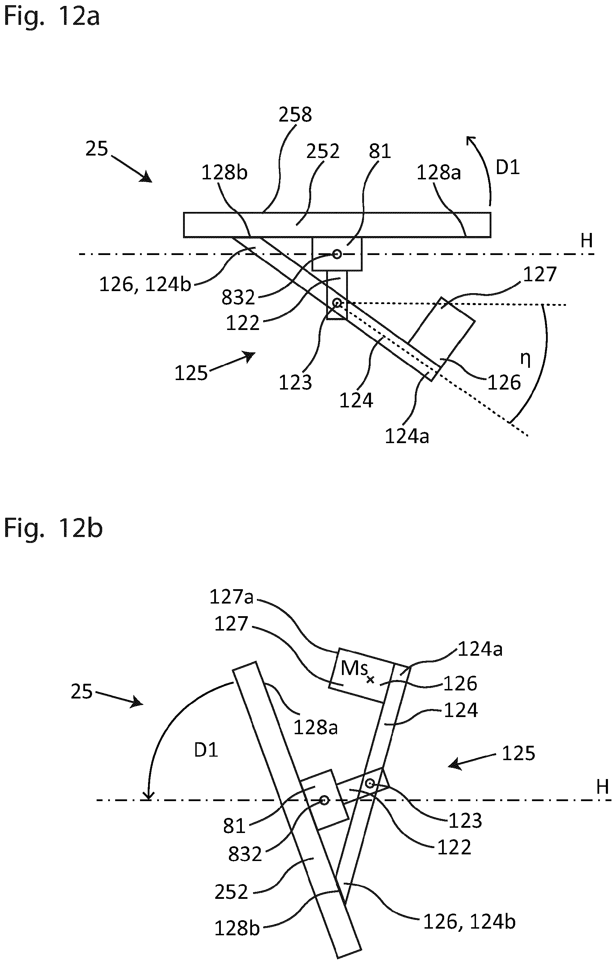

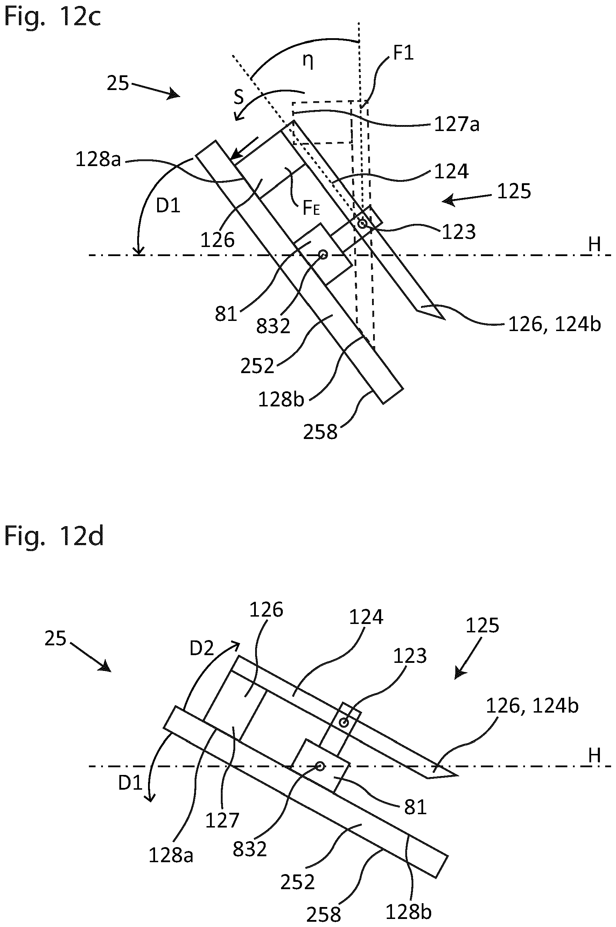

Hinter dem Kessel 11 ist eine Rezirkulationseinrichtung 5 vorgesehen, die einen Teil des Rauch- bzw. Abgases über Rezirkulationskanäle 54 und 55 und Luftventile 52 zur Wiederverwendung beim Verbrennungsvorgang rezirkuliert. Diese Rezirkulationseinrichtung 5 wird später mit Bezug auf die Figuren 12 bis 17 im Detail erläutert.

Weiter weist die Biomasse-Heizanlage 1 eine Brennstoffzufuhr 6 auf, mit der der Brennstoff kontrolliert zu der Brenneinrichtung 2 in die Primärverbrennungszone 26 von der Seite auf den Drehrost 25 befördert wird. Die Brennstoffzufuhr 6 weist eine Zellradschleuse 61 mit einer Brennstoffzufuhröffnung 65 auf, wobei die Zellradschleuse 61 einen Antriebsmotor 66 mit einer Ansteuerelektronik aufweist. Eine von dem Antriebsmotor 66 angetriebene Achse 62 treibt eine Übersetzungsmechanik 63 an, die eine (nicht dargestellte) Brennstoff-Förderschnecke 67 antreiben kann, so dass der Brennstoff in einem Brennstoff-Zufuhrkanal 64 zu der Brenneinrichtung 2 gefördert wird.

Im unteren Teil der Biomasse-Heizanlage 1 ist eine Ascheabfuhreinrichtung 7 vorgesehen, welche eine Ascheaustragungsschnecke 71 mit einer Übergangsschnecke 73 in einem Ascheaustragungskanal aufweist, die von einem Motor 72 betrieben wird.

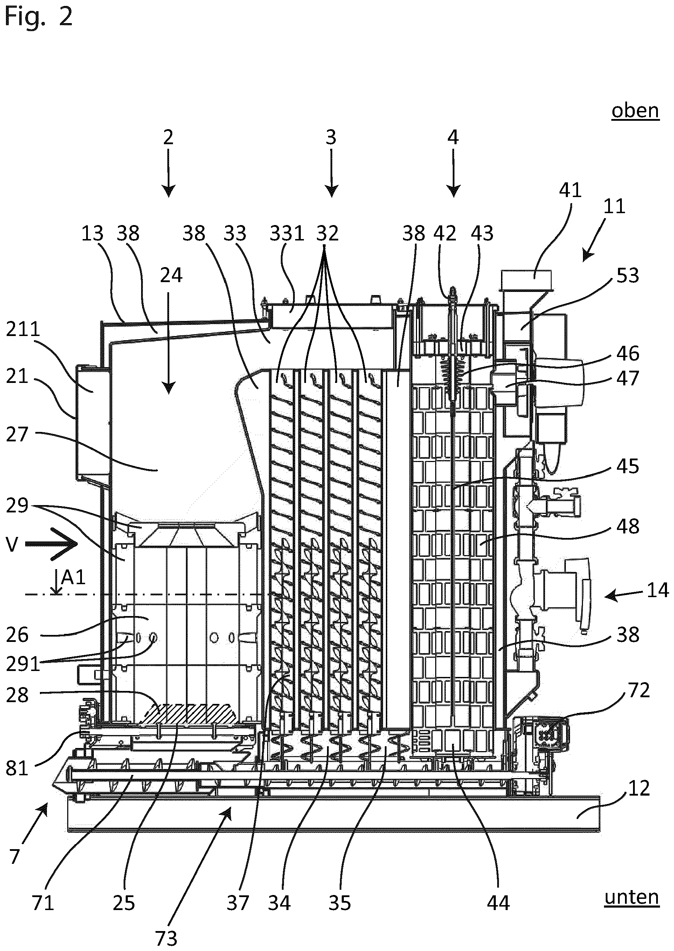

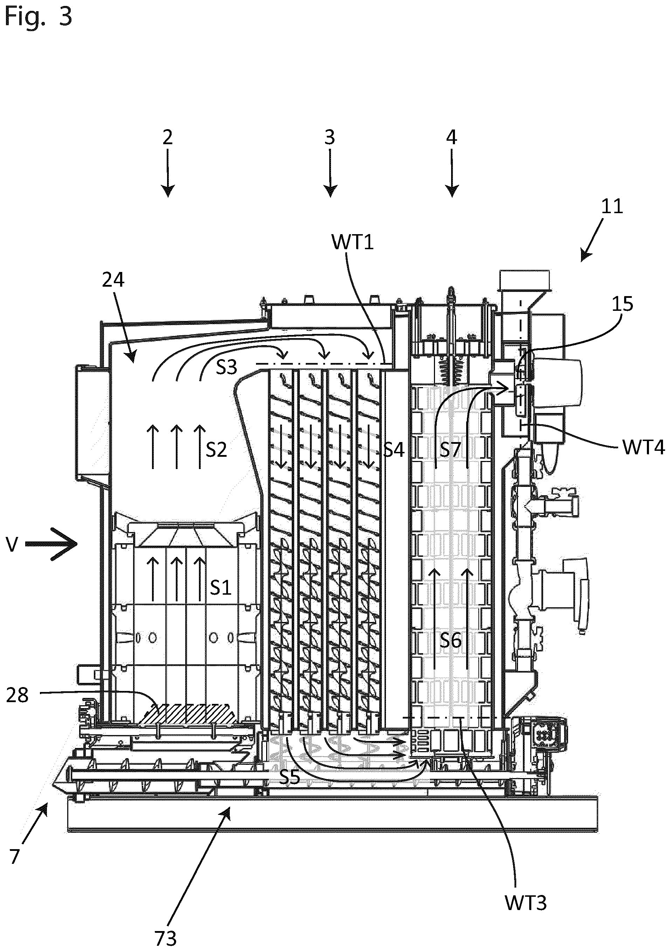

Fig. 2 zeigt nun eine Querschnittsansicht durch die Biomasse-Heizanlage 1 der Fig. 1, welche entlang einer Schnittlinie SL1 vorgenommen wurde und welche aus der Seitenansicht S betrachtet dargestellt ist. In der korrespondierenden Fig. 3, welche den gleichen Schnitt wie Fig. 2 darstellt, sind der Übersichtlichkeit halber die Strömungen des Rauchgases und strömungstechnische Querschnitte schematisch dargestellt. Zu Fig. 3 anzumerken ist, dass einzelne Bereiche im Vergleich zu der Fig. 2 abgeblendet dargestellt sind. Dies dient nur der Übersichtlichkeit der Fig. 3 und der Sichtbarkeit der Strömungspfeile S5, S6 und S7.

Von links nach rechts sind in Fig. 2 die Brenneinrichtung 2, der Wärmetauscher 3 und eine (optionale) Filtereinrichtung 4 des Kessels 11 vorgesehen. Der Kessel 11 ist auf dem Kesselfuß 12 gelagert, und weist ein mehrwandiges Kesselgehäuse 13 auf, in welchem Wasser oder ein anderes fluides Wärmetauschmedium zirkulieren kann. Zur Zufuhr und Abfuhr des Wärmetauschmediums ist eine Wasserzirkulationseinrichtung 14 mit Pumpe, Ventilen, Leitungen, etc. vorgesehen.

Die Brenneinrichtung 2 weist eine Brennkammer 24 auf, in der im Kern der Verbrennungsprozess des Brennstoffes stattfindet. Die Brennkammer 24 weist einen, später näher erläuterten, mehrteiligen Drehrost 25 auf, auf dem das Brennstoffbett 28 aufliegt. Der mehrteilige Drehrost 25 ist mittels einer Mehrzahl von Lagerachsen 81 drehbar gelagert angeordnet.

Weiter bezugnehmend auf Fig. 2 ist die Primärverbrennungszone 26 der Brennkammer 24 durch (eine Mehrzahl von) Brennkammersteine(n) 29 umfasst, womit die Brennkammersteine 29 die Geometrie der Primärverbrennungszone 26 definieren. Der Querschnitt der Primärverbrennungszone 26 (beispielsweise) entlang der Horizontalschnittlinie A1 ist im Wesentlichen oval (beispielsweise 380 mm +- 60mm x 320 mm +- 60 mm; dabei ist anzumerken, dass einige der vorstehenden Größenkombinationen auch einen kreisförmigen Querschnitt ergeben können). Die Pfeile S1 der korrespondierenden Fig. 3 geben die Primärströmung in der Primärverbrennungszone 26 schematisch wieder, wobei diese Primärströmung zudem (nicht näher dargestellt) einen Drall aufweist, um die Durchmischung des Rauchgases zu verbessern. Die Brennkammersteine 29 bilden die Innenverkleidung der Primärverbrennungszone 26 aus, speichern Wärme und sind dem Feuer direkt ausgesetzt. Damit schützen die Brennkammersteine 29 auch das weitere Material der Brennkammer 24, beispielsweise Gusseisen, vor der direkten Flammeneinwirkung in der Brennkammer 24. Die Brennkammersteine 29 sind vorzugsweise an die Form des Rosts 25 angepasst. Die Brennkammersteine 29 weisen weiter Sekundärluft- bzw. Rezirkulationsdüsen 291 auf, die das Rauchgas in die Primärverbrennungszone 26 zur erneuten Teilnahme am Verbrennungsprozess rezirkulieren. Die Sekundärluftdüsen bzw. Rezirkulationsdüsen 291 sind dabei nicht auf die Mitte der Primärverbrennungszone 26 ausgerichtet, sondern sind azentrisch ausgerichtet, um einen Drall der Strömung in der Primärverbrennungszone 26 zu bewirken (d. h. eine Wirbelströmung). Die Brennkammersteine 29 werden später noch eingehender erläutert. Eine Isolation 311 ist am Kesselrohreintritt vorgesehen. Die ovale Querschnittsform der Primärverbrennungszone 26 (und der Düse) begünstigen die Ausbildung einer Wirbelströmung vorteilhaft.

Eine Sekundärverbrennungszone 27 schließt sich an die Primärverbrennungszone 26 der Brennkammer 24 an und definiert den Strahlungsteil der Brennkammer 24. In dem Strahlungsteil gibt das bei der Verbrennung entstandene Rauchgas seine Wärmeenergie hauptsächlich durch Wärmestrahlung insbesondere an das Wärmetauschmedium ab, welches sich in den beiden linken Kammern für das Wärmetauschmedium 38 befindet. Die entsprechende Rauchgasströmung ist in Fig. 3 durch die Pfeile S2 und S3 angegeben. Die erste Wartungsöffnung 21 ist mit einem Dämmmaterial, beispielsweise Vermiculite™, isoliert. Die vorliegende Sekundärverbrennungszone 27 ist derart eingerichtet, dass ein Ausbrand des Rauchgases gewährleistet wird. Die spezielle geometrische Ausgestaltung der Sekundärverbrennungszone 27 wird später noch eingehender erläutert. Anzumerken ist, dass die Sekundärverbrennungszone 27 strömungstechnisch betrachtet erst auf der Höhe der entsprechenden Luftdüsen beginnt. Allerdings kann vorliegend die Sekundärverbrennungszone 27 strukturell betrachtet auch als der gesamte durchströmbare Raum oberhalb der Primärverbrennungszone 26 betrachtet werden.

Nach der Sekundärverbrennungszone 27 strömt das Rauchgas über dessen Eintritt 33 in die Wärmetauscheinrichtung 3, welche ein Bündel von parallel zueinander vorgesehenen Kesselrohren 32 aufweist. In den Kesselrohren 32 strömt das Rauchgas nun abwärts, wie in Fig. 3 durch die Pfeile S4 angegeben. Man kann diesen Teil der Strömung auch als Konvektionsteil bezeichnen, da die Wärmeabgabe des Rauchgases im Wesentlichen an den Kesselrohrwänden über eine erzwungene Konvektion erfolgt. Durch die im Kessel 11 verursachten Temperaturgradienten im Wärmetauschermedium, beispielsweise im Wasser, stellt sich eine natürliche Konvektion des Wassers ein, welche eine Durchmischung des Kesselwassers begünstigt.

In den Kesselrohren 32 sind Federturbulatoren 36 und Spiral- bzw. Bandturbulatoren 37 angeordnet, um den Wirkungsgrad der Wärmetauscheinrichtung 4 zu verbessern.

Der Ausgang der Kesselrohre 32 mündet über den Wendekammereintritt 34 bzw. -einlass in die Wendekammer 35. Dabei ist die Wendekammer 35 derart gegenüber der Brennkammer 24 abgedichtet, dass kein Rauchgas aus der Wendekammer 35 direkt zurück in die Brennkammer 24 strömen kann. Allerdings ist trotzdem ein gemeinsamer (Ab-)Transportweg für die Verbrennungsrückstände vorgesehen, die im gesamten Strömungsbereich des Kessels 11 anfallen können. Falls die Filtereinrichtung 4 nicht vorgesehen ist, wird das Rauchgas wieder im Kessel 11 nach oben abgeführt. Der andere Fall der optionalen Filtereinrichtung 4 ist in den Fig. 2 und 3 dargestellt. Dabei wird das Rauchgas nach der Wendekammer 35 wieder nach oben in die Filtereinrichtung 4 eingeleitet (vgl. Pfeile S5), welche vorliegend beispielhaft eine elektrostatische Filtereinrichtung 4 ist. Dabei können am Eintritt 44 der Filtereinrichtung 4 Strömungsblenden vorgesehen sein, die die Rauchgasströmung homogenisieren.

Elektrostatische Staubfilter, oder auch Elektroabscheider genannt, sind Einrichtungen zur Abscheidung von Partikeln aus Gasen, die auf dem elektrostatischen Prinzip beruhen. Diese Filtereinrichtungen werden insbesondere zur elektrischen Reinigung von Abgasen verwendet. Bei Elektrofiltern werden Staubteilchen durch eine Koronaentladung elektrisch aufgeladen und zur entgegengesetzt aufgeladenen Elektrode gezogen. Die Koronaentladung findet auf einer dafür geeigneten, geladenen Hochspannungselektrode im Inneren des Elektrofilters statt. Die Elektrode ist bevorzugt mit herausragenden Spitzen und eventuell scharfen Kanten ausgeführt, weil dort die Dichte der Feldlinien und damit auch die elektrische Feldstärke am größten und somit die Koronaentladung begünstigt ist. Die gegengesetzte Elektrode besteht für gewöhnlich aus einem geerdeten Rauchgas- bzw. Abgasrohrabschnitt, der um die Elektrode gelagert ist. Der Abscheidungsgrad eines Elektrofilters ist insbesondere von der Verweilzeit der Abgase im Filtersystem und der Spannung zwischen Sprüh- und Abscheidungselektrode abhängig. Die dafür notwendige gleichgerichtete Hochspannung wird von einer Hochspannungserzeugungseinrichtung (nicht dargestellt) bereitgestellt. Die Hochspannungserzeugungsanlage und die Halterung für die Elektrode sind vor Staub und Verschmutzung zu schützen, um ungewollte Kriechströme zu vermeiden und die Standzeit der Anlage 1 zu verlängern.

Wie in Fig. 2 gezeigt, ist eine stabförmige Elektrode 45 (welche vorzugsweise wie eine längliche, plattenförmige Stahlfeder ausgestaltet ist) in etwa mittig in einem annähernd kaminförmigen Innenraum der Filtereinrichtung 4 gehaltert. Die Elektrode 45 besteht zumindest weitgehend aus einem hochwertigen Federstahl oder Chromstahl und ist von einer Elektrodenhalterung 43 über einen Hochspannungsisolator, d. h. eine Elektrodenisolation 46, gehaltert.

Die Elektrode 45 hängt schwingungsfähig nach unten in den Innenraum der Filtereinrichtung 4. Dabei kann die Elektrode 45 beispielsweise quer zur Längsachse der Elektrode 45 hin- und her schwingen.

Ein Käfig 48 dient gleichzeitig als Gegenelektrode und als Abreinigungsmechanik für die Filtereinrichtung 4. Der Käfig 48 ist mit dem Masse- bzw. Erdpotential verbunden. Durch den herrschenden Potentialunterschied wird das in der Filtereinrichtung 4 strömende Rauchgas bzw. Abgas, vgl. die Pfeile S6, gefiltert, wie vorstehend erläutert. Im Falle der Abreinigung der Filtereinrichtung 4 wird die Elektrode 45 stromlos geschaltet. Der Käfig 48 weist vorzugsweise ein achteckiges regelmäßiges Querschnittsprofil auf. Der Käfig 48 kann vorzugsweise bei der Herstellung mit dem Laser zugeschnitten werden.

Das Rauchgas strömt nach dem Austritt aus dem Wärmetauscher 3 (aus dessen Austritt) durch die Wendekammer 34 in den Eintritt 44 der Filtereinrichtung 4.

Dabei ist die (optionale) Filtereinrichtung 4 optional vollintegriert in den Kessel 11 vorgesehen, womit die dem Wärmetauscher 3 zugewandte und von dem Wärmetauschermedium durchspülte Wandfläche auch aus Richtung der Filtereinrichtung 4 zum Wärmetausch eingesetzt wird, womit die Effizienz der Anlage 1 nochmals verbessert wird. Damit kann zumindest ein Teil der Wand die Filtereinrichtung 4 mit dem Wärmetauschmedium durchspült sein.

Am Filteraustritt 47 strömt das gereinigte Abgas aus der Filtereinrichtung 4 hinaus, wie durch die Pfeile S7 angegeben. Nach dem Filteraustritt wird ein Teil des Abgases über die Rezirkulationseinrichtung 5 wieder zu der Primärverbrennungszone 26 zurückgeführt. Auch dies wird später noch näher erläutert werden. Dieses zur Rezirkulierung bestimmte Abgas bzw. Rauchgas kann kurz auch als "Rezi" oder "Rezi-Gas" bezeichnet werden. Der verbleibende Teil des Abgases wird über den Abgasausgang 41 aus dem Kessel 11 hinausgeleitet.

Eine Ascheabfuhr 7 ist im unteren Teil des Kessels 11 angeordnet. Über eine Ascheaustragungsschnecke 71 wird die beispielsweise aus der Brennkammer 24, den Kesselrohren 32 und der Filtereinrichtung 4 herausfallende Asche seitlich aus dem Kessel 11 ausgefördert.

Der Kessel 11 wurde mittels CFD-Simulationen berechnet. Weiter wurden Praxisexperimente durchgeführt, um die CFD-Simulationen zu bestätigen. Ausgangspunkt der Überlegungen waren Berechnungen für einen 100 kW Kessel, wobei jedoch ein Leistungsbereich von 20 bis 500 kW berücksichtigt wurde.

Eine CFD-Simulation (CFD = Computational Fluid Dynamics = numerische Strömungsmechanik) ist die räumlich und zeitlich aufgelöste Simulation von Strömungs- und Wärmeleitprozessen. Dabei können die Strömungsprozesse laminar und/oder turbulent sein, von chemischen Reaktionen begleitet auftreten, oder es kann sich um ein mehrphasiges System handeln. CFD-Simulationen eignen sich somit gut als Design- und Optimierungswerkzeug. Bei der vorliegenden Erfindung wurden CDF-Simulationen eingesetzt, um die strömungstechnischen Parameter derart zu optimieren, dass die vorstehend aufgeführten Aufgaben gelöst werden. Insbesondere wurden im Ergebnis die mechanische Ausgestaltung und Dimensionierung des Kessels 11 maßgeblich durch die CFD-Simulation und auch durch zugehörige praktische Experimente definiert. Die Simulationsergebnisse basieren auf einer Strömungssimulation mit Berücksichtigung der Wärmeübertragung.

Die vorstehend aufgeführten Bestandteile der Biomasse-Heizanlage 1 und des Kessels 11, die Ergebnis der CFD-Simulationen sind, werden nachstehend eingehender beschrieben.

### (Brennkammer)

Die nachfolgenden Ausführungen zur Gestaltung der Brennkammerform beschreiben beispielhaft, wo der erfindungsgemäße Rost eingesetzt werden kann. Durch die Brennkammerform bzw. -geometrie erreicht werden sollen eine möglichst gute turbulente Durchmischung und Homogenisierung der Strömung über den Querschnitt des Rauchgaskanals, eine Minimierung des Feuerungsvolumens, eine Reduktion des Luftüberschusses und des Rezirkulationsverhältnisses (Wirkungsgrad, Betriebskosten), eine Reduktion der CO-Emissionen und der NOx-Emissionen, eine Reduktion von Temperaturspitzen (Fouling und Verschlackung) sowie eine Reduktion von Rauchgas-Geschwindigkeitsspitzen (Materialbeanspruchung und Erosion).

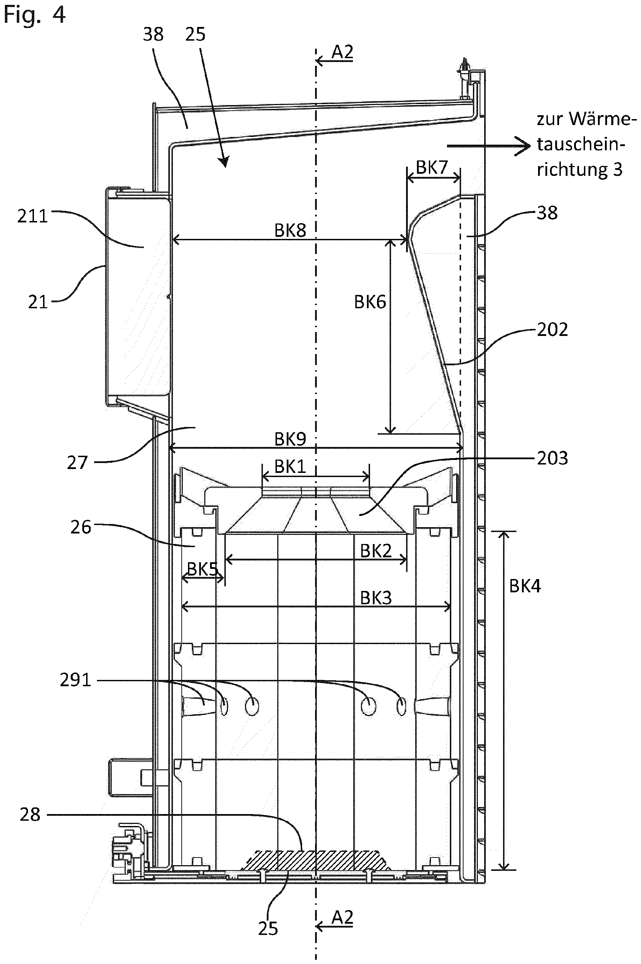

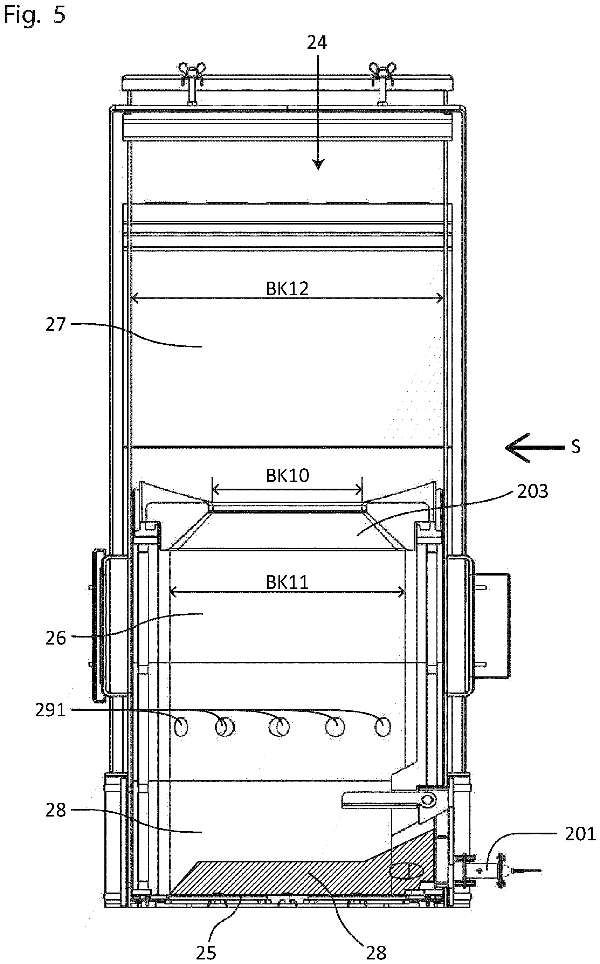

Die Fig. 4, die eine Teilansicht der Fig. 2 ist, und die Fig. 5, welche eine Schnittansicht durch den Kessel 11 entlang der Vertikalschnittlinie A2 ist, stellen eine Brennkammergeometrie dar, die den vorstehend genannten Anforderungen für Biomasse-Heizanlagen über einen weiten Leistungsbereich von beispielsweise 20 bis 500 kW gerecht wird.

Die in den Figuren 3 und 4 angegebenen und über CFD-Berechnungen und Praxisexperimente ermittelten Maße sind im Einzelnen wie folgt:
BK1 = 172 mm +- 40 mm, vorzugsweise +- 17 mm;
BK2 = 300 mm +- 50 mm, vorzugsweise +- 30 mm;
BK3 = 430 mm +- 80 mm, vorzugsweise +- 40 mm;
BK4 = 538 mm +- 80 mm, vorzugsweise +- 50 mm;
BK5 = (BK3 - BK2) / 2 = bspw. 65 mm +- 30 mm, vorzugsweise +- 20 mm;
BK6 = 307 mm +- 50 mm, vorzugsweise +- 20 mm;
BK7 = 82 mm +- 20 mm, vorzugsweise +- 20 mm;
BK8 = 379 mm +- 40 mm, vorzugsweise +- 20 mm;
BK9 = 470 mm +- 50 mm, vorzugsweise +- 20 mm;
BK10 = 232 mm +- 40 mm, vorzugsweise +- 20 mm;
BK11 = 380 mm +- 60 mm, vorzugsweise +- 30 mm;
BK12 = 460 mm +- 80 mm, vorzugsweise +- 30 mm.

Diese Maßangaben sind allerdings lediglich beispielhaft, und dienen der Verdeutlichung der vorliegenden technischen Lehre.

Mit diesen Werten können vorliegend sowohl die Geometrien der Primärverbrennungszone 26 als auch der Sekundärverbrennungszone 27 der Brennkammer 24 für einen 100 kW Kessel 11 optimiert werden. Die angegebenen Größenbereiche sind Bereiche, mit denen die Anforderungen ebenso (annähernd) erfüllt werden, wie mit den angegebenen exakten Werten.

Dabei kann vorzugsweise eine Kammergeometrie der Primärverbrennungszone 26 der Brennkammer 24 (bzw. ein Innenvolumen der Primärverbrennungszone 26 der Brennkammer 24) anhand der folgenden Grundparameter definiert werden:
Ein Volumen mit einer ovalen horizontalen Grundfläche mit den Maßen von 380 mm +- 60mm (vorzugsweise +-30mm) x 320 mm +- 60 mm (vorzugsweise +-30mm), sowie einer Höhe von 538 mm +- 80 mm (vorzugsweise +- 50 mm).

Als Fortbildung dessen kann das vorstehend definierte Volumen eine obere Öffnung in Form einer Brennkammerdüse 203 aufweisen, die in die Sekundärverbrennungszone 27 der Brennkammer 24 mündet, welche eine in die Sekundärverbrennungszone 27 hineinragende Brennkammerschräge 202 aufweist, welche vorzugsweise das Wärmetauschmedium 38 beinhaltet. Die Brennkammerschräge 202 verringert den Querschnitt der Sekundärverbrennungszone 27 zumindest um 5%, bevorzugt um zumindest 15% und noch mehr bevorzugt um zumindest 19%.

Die Brennkammerschräge 202 dient der Homogenisierung der Strömung S3 in Richtung des Wärmetauschers 3 und damit der Beströmung der Kesselrohre 32.

Im Stand der Technik gibt es häufig Brennkammern mit rechteckiger oder polygonaler Brennkammer und Düse, wobei jedoch die unregelmäßige Form der Brennkammer und der Düse ein weiteres Hindernis für eine gleichmäßige Luftverteilung und eine gute Mischung von Luft und Brennstoff darstellt, wie vorliegend erkannt wurde.

Deshalb ist vorliegend die Brennkammer 24 ohne Totecken oder Totkanten vorgesehen.

Vorliegend wurde somit erkannt, dass die Geometrie der Brennkammer (und des gesamten Strömungsverlaufs im Kessel) eine maßgebliche Rolle bei den Überlegungen zur Optimierung der Biomasse-Heizanlage 1 spielt. Deshalb wurde (in Abkehr von den üblichen rechteckigen oder mehr-eckigen Formgebungen) die hierin beschriebene ovale oder runde Grundgeometrie ohne Totecken gewählt. Zudem wurde auch diese Grundgeometrie der Brennkammer und deren Aufbau mit den vorstehend angegebenen Maßen/Maßbereichen optimiert. Dabei sind diese Maße/Maßbereiche derart gewählt, dass insbesondere auch unterschiedliche Brennstoffe (Hackgut und Pellets) mit unterschiedlicher Qualität (beispielsweise mit unterschiedlichem Wassergehalt) bei sehr hohem Wirkungsgrad verbrannt werden können. Dies haben die Praxistests und CFD-Simulationen ergeben.

Insbesondere kann die Primärverbrennungszone 26 der Brennkammer 24 ein Volumen umfassen, das bevorzugt im Außenumfang einen ovalen oder annähernd kreisförmigen Horizontalquerschnitt aufweist (ein solcher Querschnitt ist in Fig. 2 beispielhaft mit A1 gekennzeichnet). Dieser Horizontalquerschnitt kann zudem bevorzugt die Grundfläche der Primärverbrennungszone 26 der Brennkammer 24 darstellen. Über die durch den Doppelpfeil BK4 angegebene Höhe kann die Brennkammer 24 einen annähernd gleichbleibenden Querschnitt aufweisen. Insofern kann die Primärverbrennungszone 24 ein annähernd oval-zylindrisches Volumen aufweisen. Bevorzugt können die Seitenwände und die Grundfläche (der Rost) der Primärverbrennungszone 26 senkrecht aufeinander stehen.

Vorstehend wird der Begriff "annähernd" verwendet, da selbstverständlich einzelne Kerben, konstruktiv bedingte Abweichungen oder kleine Asymmetrien vorhanden sein können, beispielsweise bei den Übergängen der einzelnen Brennkammersteine 29 zueinander. Diese geringfügigen Abweichungen spielen strömungstechnisch jedoch nur eine untergeordnete Rolle.

Der Horizontalquerschnitt der Brennkammer 24 und insbesondere der Primärverbrennungszone 26 der Brennkammer 24 kann ebenso bevorzugt regelmäßig ausgeführt sein. Weiter kann der Horizontalquerschnitt der Brennkammer 24 und insbesondere der Primärverbrennungszone 26 der Brennkammer 24 bevorzugt eine regelmäßige (und/oder symmetrische) Ellipse sein.

Zudem kann der Horizontalquerschnitt (der Außenumfang) der Primärverbrennungszone 26 über eine vorgegebene Höhe, beispielsweise 20 cm) dieser gleichbleibend ausgestaltet sein.

Damit ist vorliegend eine oval-zylindrische Primärverbrennungszone 26 der Brennkammer 24 vorgesehen, die nach CFD-Berechnungen eine deutlich gleichmäßigere und bessere Luftverteilung in der Brennkammer 24 ermöglicht als bei rechteckigen Brennkammern des Stands der Technik. Die fehlenden Toträume vermeiden zudem Zonen in der Brennkammer mit schlechter Luftdurchströmung, was die Effizienz steigert und die Schlackebildung verringert.

Ebenso ist die Düse 203 zwischen der Primärverbrennungszone 26 und der Sekundärverbrennungszone 27 als ovale oder annähernd kreisförmige Verengung ausgestaltet, um ebenso die Strömungsverhältnisse zu optimieren. Der vorstehend erläuterte Drall der Strömung in der Primärverbrennungszone 26 führt zu einem helixförmig nach oben gerichteten Strömungsverlauf, wobei eine ebenso ovale oder annähernd kreisförmige Düse diesen Strömungsverlauf begünstigt, und nicht wie übliche rechteckige Düsen stört. Diese optimierte Düse 203 bündelt die nach oben strömende Luft und sorgt für eine gleichmäßige Zuströmung in die Sekundärverbrennungszone 27. Dies verbessert den Verbrennungsvorgang und erhöht die Effizienz.

Zudem wird vorliegend der Strömungsverlauf in der Sekundärverbrennungszone 27 und aus der Sekundärverbrennungszone 27 zu den Kesselrohren 32 optimiert, wie nachstehend näher erläutert.

Die Brennkammerschräge 202 der Fig. 4, welche ohne Bezugszeichen auch in den Fig. 2 und 3 zu erkennen ist und an der sich die Brennkammer 25 (bzw. deren Querschnitt) von unten nach oben hin zumindest annähernd linear verjüngt, sorgt nach CFD-Berechnungen für eine Vergleichmäßigung der Rauchgasströmung in Richtung der Wärmetauscheinrichtung 4, womit deren Effizienz verbessert werden kann. Dabei verjüngt sich die horizontale Querschnittsfläche der Brennkammer 25 von Anfang bis Ende der Brennkammerschräge 202 bevorzugt zumindest um 5%. Die Brennkammerschräge 202 ist dabei auf der Seite der Brennkammer 25 zur Wärmetauscheinrichtung 4 vorgesehen, und ist an der Stelle der maximalen Verjüngung abgerundet vorgesehen. Im Stand der Technik üblich sind parallele bzw. gerade Brennkammerwände ohne eine Verjüngung (um die Rauchgasströmung nicht zu behindern).

Die Umlenkung des Rauchgasstromes vor dem Rohrbündelwärmetauscher ist derart ausgestaltet, dass eine ungleichmäßige Anströmung der Rohre bestmöglich vermieden wird, womit Temperaturspitzen in einzelnen Kesselrohren 32 niedrig gehalten werden können. In der Folge ist die Effizienz der Wärmetauscheinrichtung 4 verbessert.

Im Detail wird der gasförmige Volumenstrom des Rauchgases durch die schräge Brennkammerwandung mit einer gleichmäßigen Geschwindigkeit (auch im Falle unterschiedlicher Verbrennungszustände) zu den Wärmetauscherrohren bzw. den Kesselrohren 32 geführt. Dadurch entsteht eine gleichmäßige Wärmeverteilung der einzelnen Kesselrohre 32 betreffenden Wärmetauscherflächen. Die Abgastemperatur wird somit gesenkt und der Wirkungsgrad erhöht. Dabei ist die Strömungsverteilung insbesondere an der in der Fig. 3 dargestellten Indikatorlinie WT1 deutlich gleichmäßiger als im Stand der Technik. Die Linie WT1 stellt eine Eintrittsfläche für den Wärmetauscher 3 dar. Die Indikatorlinie WT3 gibt eine beispielshafte Querschnittslinie durch die Filtereinrichtung 4 an, in der die Strömung möglichst homogen eingerichtet ist (u. A. aufgrund von Strömungsblenden am Eingang der Filtereinrichtung 4 und aufgrund der Geometrie der Wendekammer 35).

Weiter ist im unteren Teil der Brennkammer 25 am Brennstoffbett 28 eine Zündeinrichtung 201 vorgesehen. Diese kann eine Initialzündung oder eine erneute Zündung des Brennstoffes bewirken. Es kann die Zündeinrichtung 201 ein Glühzünder sein. Die Zündeinrichtung ist vorteilhaft ortsfest und horizontal seitlich versetzt zum Ort der Einschüttung des Brennstoffs angeordnet.

Weiter kann (optional) nach dem Ausgang des Rauchgases (d. h. nach S7) aus der Filtereinrichtung eine Lamdasonde (nicht dargestellt) vorgesehen sein. Durch die Lambdasonde kann eine Steuerung (nicht dargestellt) den jeweiligen Heizwert erkennen. Die Lambdasonde kann somit für das ideale Mischverhältnis zwischen den Brennstoffen und der Sauerstoffzufuhr sorgen. Trotz unterschiedlicher Brennstoffqualitäten werden im Ergebnis eine hohe Effizienz und ein höherer Wirkungsgrad erreichbar.

Das in Fig. 5 gezeigte Brennstoffbett 28 zeigt eine beispielhafte Brennstoffverteilung aufgrund der Zuführung des Brennstoffs von der rechten Seite der Fig. 5. Dieses Brennstoffbett 28 wird von unten mit einem Rauchgas-Frischluft Gemisch beströmt, das von der Rezirkulationseinrichtung 5 bereitgestellt wird. Dieses Rauchgas-Frischluft Gemisch ist vorteilhaft vortemperiert und weist die ideale Menge (Massenstrom) und das ideale Mischungsverhältnis auf, so wie das eine nicht näher gezeigte Anlagensteuerung aufgrund diverser sensorisch erfasster Messwerte und zugehöriger Luftventile 52 regelt.

Weiter ist in den Fig. 4 und 5 eine Brennkammerdüse 203 gezeigt, die die Primärverbrennungszone 26 von der Sekundärverbrennungszone 27 trennt und die Rauchgasströmung beschleunigt und bündelt. Dadurch wird die Rauchgasströmung besser durchmischt und kann in der Sekundärverbrennungszone 27 effizienter verbrennen. Das Flächenverhältnis der Brennkammerdüse 203 liegt in einem Bereich von 25% bis 45%, beträgt jedoch bevorzugt 30% bis 40%, und ist idealerweise 36 % +- 1% (Verhältnis der gemessenen Eingangsfläche zur gemessenen Ausgangsfläche der Düse 203).

Mithin stellen die vorstehenden Angaben zur Brennkammergeometrie der Primärverbrennungszone 26 zusammen mit der Geometrie der Düse 203 eine vorteilhafte Weiterbildung der vorliegenden Offenbarung dar.

### (Brennkammersteine)

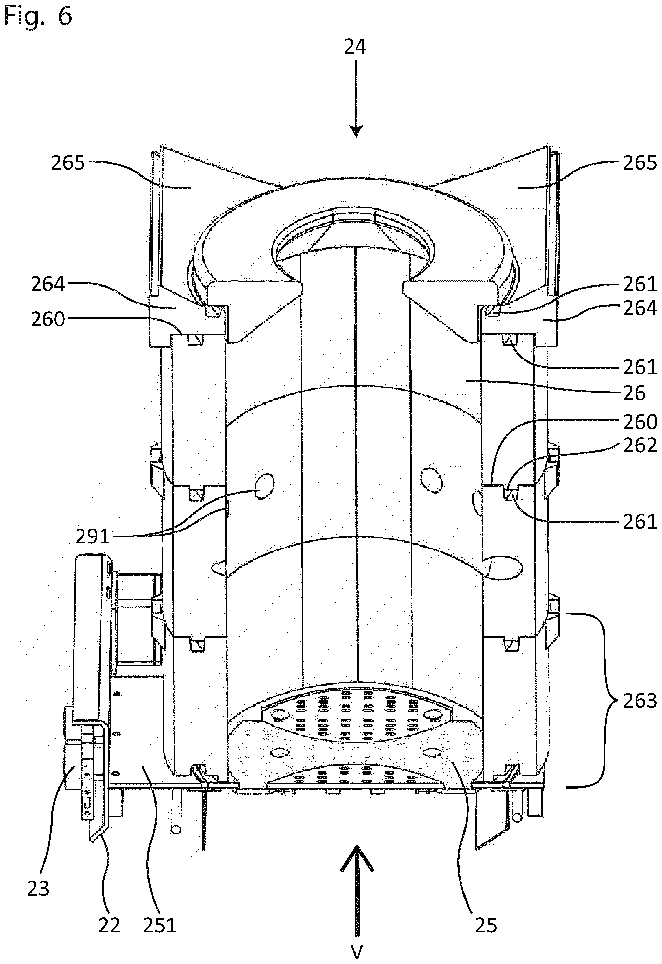

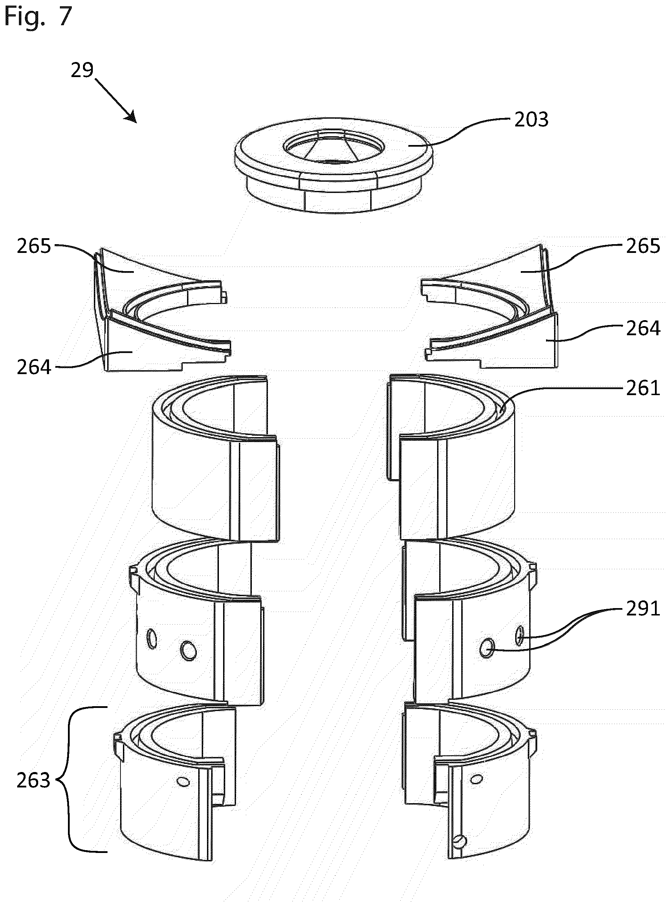

Die Fig. 6 zeigt eine dreidimensionale Schnittansicht (von schräg oben) auf die Primärverbrennungszone 26 der Brennkammer 24 mit dem Drehrost 25, und insbesondere auf die besondere Ausgestaltung der Brennkammersteine 29. Die Fig. 7 zeigt entsprechend zur Fig. 6 eine Explosionsdarstellung der Brennkammersteine 29. Die Ansichten der Fig. 6 und 7 können bevorzugt mit den vorstehend aufgeführten Abmessungen der Fig. 4 und 5 ausgeführt sein. Dies ist jedoch nicht zwingend der Fall.

Die Kammerwand der Primärverbrennungszone 26 der Brennkammer 24 ist mit einer Mehrzahl von Brennkammersteinen 29 in einem modularen Aufbau vorgesehen, was unter anderem die Fertigung und die Wartung erleichtert. Die Wartung wird insbesondere durch die Möglichkeit der Entnahme einzelner Brennkammersteine 29 erleichtert.

An den Auflageflächen 260 der Brennkammersteine 29 sind formschlüssige Nuten 261 und Vorsprünge 262 (in Fig. 6 sind zur Vermeidung von Redundanzen in den Figuren exemplarisch nur jeweils ein paar dieser bezeichnet) vorgesehen, um eine mechanische und weitgehend luftdichte Verbindung zu schaffen, um wiederum das Eindringen von störender Fremdluft zu vermeiden. Bevorzugt bilden je zwei zumindest weitgehend symmetrische Brennkammersteine (mit Ausnahme eventuell der Öffnungen für das Rezi-Gas) einen vollständigen Ring aus. Weiter sind bevorzugt drei Ringe aufeinandergestapelt, um die oval-zylindrische oder alternativ auch zumindest annähernd kreisförmige (letzteres ist nicht dargestellt) Primärverbrennungszone 26 der Brennkammer 24 auszubilden.

Als oberer Abschluss sind drei weitere Brennkammersteine 29 vorgesehen, wobei die ringförmige Düse 203 durch zwei Halterungssteine 264 gelagert wird, die formschlüssig auf den oberen Ring 263 aufgesetzt werden. Bei allen Auflageflächen 260 sind Nuten 261 entweder für passende Vorsprünge 262 und/oder zur Einfügung von geeignetem Dichtmaterial vorgesehen.

Die Halterungssteine 264, welche bevorzugt symmetrisch ausgebildet sind, können bevorzugt eine nach innen geneigte Schräge 265 aufweisen, um ein Abkehren von Flugasche auf den Drehrost 25 zu vereinfachen.

Der untere Ring 263 der Brennkammersteine 29 liegt auf einer Bodenplatte 251 des Drehrosts 25 auf. An der Innenkannte zwischen diesem unteren Ring 263 der Brennkammersteine 29 lagert sich vermehrt Asche ab, was somit diesen Übergang vorteilhaft im Betrieb der Biomasse-Heizanlage 1 selbstständig und vorteilhaft abdichtet.

Im mittleren Ring der Brennkammersteine 29 sind die (optionalen) Öffnungen für die Rezirkulationsdüsen 291 vorgesehen.

Vorliegend sind drei Ringe von Brennkammersteinen 29 vorgesehen, da dies den effizientesten Weg der Herstellung und auch der Wartung darstellt. Alternativ können auch zwei, vier oder fünf (2, 4 oder 5) solcher Ringe vorgesehen sein.

Die Brennkammersteine 29 bestehen vorzugsweise aus Hochtemperatur-Siliziumkarbid, wodurch diese sehr verschleißfest sind.

Die Brennkammersteine 29 sind als Formsteine vorgesehen. Die Brennkammersteine 29 sind derart geformt, dass das Innenvolumen der Primärverbrennungszone 26 der Brennkammer 24 einen ovalen Horizontalquerschnitt aufweist, womit durch eine ergonomische Formgebung Totecken bzw. Toträume vermieden werden, die üblicherweise von der Primärluft nicht optimal durchströmt werden, wodurch der dort vorhandene Brennstoff nicht optimal verbrannt wird. Aufgrund der vorliegenden Formgebung der Brennkammersteine 29 wird die Durchströmung mit Primärluft und folglich die Effizienz der Verbrennung verbessert.

Der ovale Horizontalquerschnitt der Primärverbrennungszone 26 der Brennkammer 24 ist bevorzugt ein punktsymmetrisches und/oder regelmäßiges Oval mit dem kleinsten Innendurchmesser BK3 und dem größten Innendurchmesser BK11. Diese Maße waren das Ergebnis der Optimierung der Primärverbrennungszone 26 der Brennkammer 24 mittels CFD-Simulation und von praktischen Versuchen.

### (Drehrost)

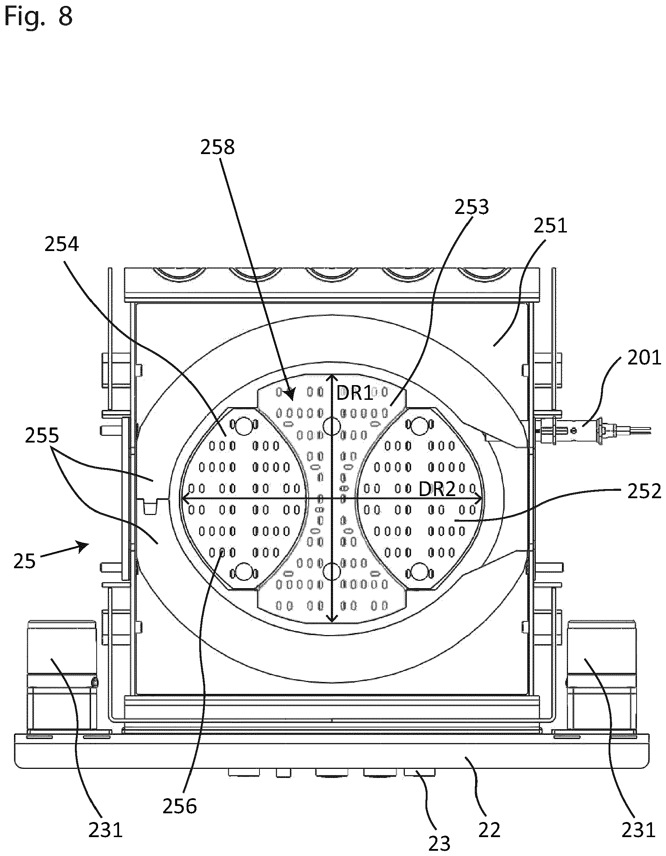

Fig. 8 zeigt eine Aufsicht auf den Drehrost 25 von oben aus Sicht der Schnittlinie A1 der Fig. 2 zur Veranschaulichung von verschiedenen grundsätzlich möglichen Betriebszuständen des Drehrosts 25.

Die Aufsicht der Fig. 8 kann bevorzugt mit den vorstehend aufgeführten Abmessungen ausgeführt sein. Dies ist jedoch nicht zwingend der Fall.

Der Drehrost 25 weist die Bodenplatte 251 als Basiselement auf. In einer grob ovalförmigen Öffnung der Bodenplatte 251 ist ein Übergangselement 255 vorgesehen, welches einen Zwischenraum zwischen einem ersten Drehrostelement 252, einem zweiten Drehrostelement 253 und einem dritten Drehrostelement 254 überbrückt, welche drehbar gelagert sind. Damit ist der Drehrost 25 als Drehrost mit drei Einzelelementen vorgesehen, d. h. dieser kann auch als 3-fach Drehrost bezeichnet werden. In den Drehrostelementen 252, 253 und 254 sind Luftlöcher zur Durchströmung mit Primärluft vorgesehen.

Die Drehrostelemente 252, 253 und 254 sind flache und hitzebeständige Metallplatten, beispielsweise aus einem Metallguss, die auf deren Oberseite eine zumindest weitgehend eben konfigurierte Oberfläche aufweisen und an deren Unterseite mit den Lagerachsen 81 beispielsweise über Zwischenhalterungselemente verbunden sind. Von oben betrachtet weisen die Drehrostelemente 252, 253 und 254 gekrümmte und komplementäre Seiten bzw. Umrisse auf.

Insbesondere können die Drehrostelemente 252, 253, 254 zueinander komplementäre und gekrümmte Seiten aufweisen, wobei vorzugsweise das zweite Drehrostelement 253 jeweils zu dem benachbarten ersten und dritten Drehrostelement 252, 254 konkave Seiten aufweist, und vorzugsweise das erste und dritte Drehrostelement 252, 254 jeweils zu dem zweiten Drehrostelement 253 hin eine konvexe Seite aufweist. Damit wird die Brecherfunktion der Drehrostelemente verbessert, da die Länge des Bruchs vergrößert wird und die zum Brechen wirkenden Kräfte (ähnlich wie bei einer Schere) gezielter angreifen.

Die Drehrostelemente 252, 253 und 254 (sowie deren Umfassung in Form des Übergangselements 255) weisen gemeinsam betrachtet in der Aufsicht eine annähernd ovale Außenform auf, womit hier wiederum Totecken bzw. Toträume vermieden werden, in denen eine nicht optimale Verbrennung stattfinden könnte oder sich Asche unerwünscht ansammeln könnte. Die optimalen Abmessungen dieser Außenform der Drehrostelemente 252, 253 und 254 sind in Fig. 8 mit den Doppelpfeilen DR1 und DR2 bezeichnet. Bevorzugt, aber nicht ausschließlich, sind DR1 und DR2 wie folgt definiert:
DR1 = 288 mm +- 40 mm, bevorzugt +-20 mm
DR2 = 350 mm +- 60 mm, bevorzugt +- 20 mm

Diese Werte haben sich bei den CFD-Simulationen und dem folgenden Praxistest als Optimalwerte (-bereiche) herausgestellt. Diese Maße korrespondieren mit denen der Fig. 4 und 5. Diese Maße sind insbesondere für die Verbrennung von unterschiedlichen Brennstoffen bzw. den Brennstoffarten Hackgut und Pellets (Hybridfeuerung) in einem Leistungsbereich von 20 bis 200 kW vorteilhaft.

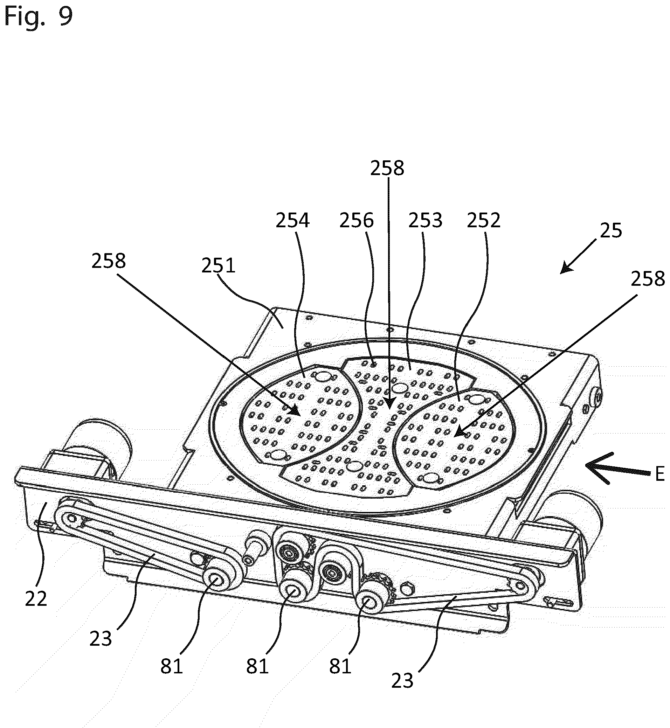

Dabei weist der Drehrost 25 eine ovale Verbrennungsfläche 258 auf, die für die Brennstoffverteilung, die Luftdurchströmung des Brennstoffs und den Abbrand des Brennstoffs günstiger ist als eine übliche rechteckige Verbrennungsfläche. Die Verbrennungsfläche 258 wird im Kern durch die Oberflächen der Drehrostelemente 252, 253 und 254 (im horizontalen Zustand) gebildet. Die Verbrennungsfläche ist somit die nach oben zeigende Oberfläche der Drehrostelemente 252, 253 und 254. Diese ovale Verbrennungsfläche entspricht vorteilhaft der Brennstoffauflagefläche, wenn der Brennstoff seitlich auf den Drehrost 25 aufgebracht bzw. aufgeschoben wird (vgl. der Pfeil E der Fig. 9, 10 und 11). Insbesondere kann die Brennstoffzufuhr aus einer Richtung erfolgen, die parallel zu einer längeren Mittelachse (Hauptachse) der ovalen Verbrennungsfläche des Drehrosts 25 liegt.

Das erste Drehrostelement 252 und das dritte Drehrostelement 254 können bevorzugt in deren Verbrennungsfläche 258 identisch ausgebildet sein. Weiter können das erste Drehrostelement 252 und das dritte Drehrostelement 254 identisch oder baugleich zueinander sein. Dies ist beispielsweise in Fig. 9 zu sehen, wobei das erste Drehrostelement 252 und das dritte Drehrostelement 254 die gleiche Form aufweisen.

Weiter ist das zweite Drehrostelement 253 zwischen dem ersten Drehrostelement 252 und dem dritten Drehrostelement 254 angeordnet.

Bevorzugt ist der Drehrost 25 mit einer annähernd punktsymmetrischen ovalen Verbrennungsfläche 258 vorgesehen.

Ebenso kann der Drehrost 25 eine annähernd elliptische bzw. ovale Verbrennungsfläche 258 ausbilden, wobei DR2 die Maße von deren Hauptachse und DR1 die Maße von deren Nebenachse sind.

Weiter kann der Drehrost 25 eine annähernd ovale Verbrennungsfläche 258 aufweisen, welche achsensymmetrisch in Bezug auf eine Mittenachse der Verbrennungsfläche 258 ist.

Weiter kann der Drehrost 25 eine annähernd kreisförmige Verbrennungsfläche 258 aufweisen, wobei dies geringfügige Nachteile bei der Brennstoffzuführung und der -verteilung nach sich zieht.

Weiter sind zwei Motoren bzw. Antriebe 231 der Drehmechanik 23 vorgesehen, mit denen die Drehrostelemente 252, 253 und 254 entsprechend gedreht werden können. Näheres zur besonderen Funktion und zu den Vorteilen des vorliegenden Drehrosts 25 wird später mit Bezug auf die Figuren 9, 10 und 11 beschrieben.

Insbesondere bei Pelletheizungen kann es vermehrt zu Ausfällen durch SchlackeBildung in der Brennkammer 24, insbesondere auf dem Drehrost 25, kommen. Schlacke entsteht bei einem Verbrennungsvorgang immer dann, wenn in der Glut Temperaturen über dem Ascheschmelzpunkt erreicht werden. Die Asche wird dann weich, verklebt und bildet nach dem Abkühlen feste, dunkel gefärbte Schlacke. Dieser auch als Versinterung bezeichnete Vorgang ist bei der Biomasse-Heizanlage 1 unerwünscht, da es durch die Anreicherung von Schlacke in der Brennkammer 24 zu einer Funktionsstörung kommen kann: sie schaltet sich ab. Die Brennkammer 24 muss üblicherweise geöffnet werden und die Schlacke muss entfernt werden.

Der Ascheschmelzunkt hängt ganz wesentlich von dem verwendeten Brennmaterial ab. Fichtenholz hat beispielsweise einen Ascheschmelzpunkt von ca. 1200 °C. Doch auch der Ascheschmelzpunkt eines Brennstoffes kann starken Schwankungen unterliegen. Je nach Menge und Zusammensetzung der im Holz enthaltenen Mineralien ändert sich das Verhalten der Asche im Verbrennungsprozess.

Ein weiterer Faktor, der die Schlackebildung beeinflussen kann, sind Transport und Lagerung der Holzpellets oder der Hackschnitzel. Diese sollten nämlich möglichst unbeschädigt in die Brennkammer 24 gelangen. Sind die Holzpellets bereits zerbröselt wenn sie in den Verbrennungsprozess gelangen, so erhöht sich dadurch die Dichte des Glutbetts. Stärkere Schlackebildung ist die Folge. Insbesondere der Transport vom Lagerraum zur Brennkammer 24 ist hier von Bedeutung. Besonders lange Wege, sowie Bögen und Winkel, führen zu einer Beschädigung der Holzpellets. Damit besteht ein Problem darin, dass die Schlackenbildung aufgrund der vorstehend beschriebenen Vielzahl von Einflussfaktoren nicht komplett vermieden werden kann.

Ein weiterer Faktor betrifft die Führung des Verbrennungsvorgangs. Bislang war man bestrebt, die Temperaturen eher hoch zu halten, um einen möglichst hohen Ausbrand und niedrige Emissionen zu erzielen. Durch eine optimierte Brennkammergeometrie und Geometrie der Verbrennungszone 258 des Drehrosts 25 ist es möglich, die Verbrennungstemperatur niedriger zu halten, und somit die Schlackebildung zu verringern.

Zudem kann entstehende Schlacke (und auch die Asche) durch die besondere Formgebung und die Funktionalität des vorliegenden Drehrosts 25 vorteilhaft entfernt werden. Dies wird nun mit Bezug auf die Figuren 9, 10 und 11 näher erläutert.

Die Figuren 9, 10 und 11 zeigen eine dreidimensionale Ansicht des Drehrosts 25 mit der Bodenplatte 251, dem ersten Drehrostelement 252, dem zweiten Drehrostelement 253 und dem dritten Drehrostelement 254. Die Ansichten der Fig. 9, 10 und 11 können bevorzugt mit den vorstehend aufgeführten Abmessungen korrespondieren. Dies ist jedoch nicht zwingend der Fall.

Diese Ansicht zeigt den Drehrost 25 als freigestelltes Einschubteil mit Drehrostmechanik 23 und Antrieb(en) 231. Der Drehrost 25 ist mechanisch derart vorgesehen, dass er nach Art des Baukastensystems einzeln vorgefertigt werden kann, und als Einschubteil in eine vorgesehene längliche Öffnung des Kessels 11 eingeführt und eingebaut werden kann. Dies erleichtert zudem die Wartung dieses verschleißanfälligen Teils. Damit kann der Drehrost 25 bevorzugt modular ausgebildet sein, wobei dieser als Komplettteil mit Drehrostmechanik 23 und Antrieb 231 schnell und effizient entnommen und wieder eingesetzt werden kann. Der modularisierte Drehrost 25 kann damit auch mittels Schnellverschlüssen montiert und demontiert werden. Im Gegensatz dazu sind die Drehroste des Stands der Technik regelmäßig fest montiert, und somit schwer zu warten oder zu montieren.

Der Antrieb 231 kann zwei getrennt ansteuerbare Elektromotoren aufweisen. Diese sind vorzugsweise seitlich an der Drehrostmechanik 23 vorgesehen. Die Elektromotoren können Untersetzungsgetriebe aufweisen. Weiter können Endanschlagsschalter vorgesehen sein, die Endanschläge jeweils für die Endpositionen der Drehrostelemente 252, 253 und 254 vorsehen.

Die Einzelkomponenten der Drehrostmechanik 23 sind austauschbar vorgesehen. Beispielsweise sind die Zahnräder aufsteckbar vorgesehen. Dies erleichtert die Wartung und auch einen Seitenwechsel der Mechanik bei der Montage, falls erforderlich.

In den Drehrostelementen 252, 253 und 254 des Drehrosts 25 sind die schon erwähnten Öffnungen 256 vorgesehen. Die Drehrostelemente 252, 253 und 254 können über deren jeweilige Lagerachsen 81, die über die Drehmechanik 23 von dem Antrieb 231, vorliegend den beiden Motoren 231, angetrieben werden, jeweils zumindest um 90 Grad, bevorzugt zumindest um 120 Grad, noch mehr bevorzugt um 170 Grad um die jeweilige Lager- bzw. Drehachse 81 gedreht werden. Dabei kann der maximale Drehwinkel 180 Grad oder auch etwas weniger als 180 Grad sein, so wie das die Rostlippen 257 zulassen. Ebenso ist eine freie Drehung um 360 Grad denkbar, falls keine drehbegrenzenden Rostlippen vorgesehen sind. Dabei ist die Drehmechanik 23 derart eingerichtet, dass das dritte Drehrostelement 254 einzeln und unabhängig vom ersten Drehrostelement 252 und vom zweiten Drehrostelement 243 gedreht werden kann, und dass das erste Drehrostelement 252 und das zweite Drehrostelement 243 gemeinsam und unabhängig von dem dritten Drehrostelement 254 gedreht werden können. Die Drehmechanik 23 kann beispielsweise mittels Laufrädern, Zahn- oder Antriebsriemen und/oder Zahnrädern entsprechend vorgesehen sein.

Die Drehrostelemente 252, 253 und 254 können bevorzugt als Gussrost mit einem Laserzuschnitt hergestellt werden, um eine exakte Formhaltigkeit sicherzustellen. Dies insbesondere, um die Luftführung durch das Brennstoffbett 28 so genau wie möglich zu definieren, und störende Luftströmungen, beispielsweise Luftsträhnen an den Rändern der Drehrostelemente 252, 253 und 254, zu vermeiden.

Die Öffnungen 256 in den Drehrostelementen 252, 253 und 254 sind derart eingerichtet, dass diese für das übliche Pelletmaterial und/oder die üblichen Hackschnitzel klein genug sind, dass diese nicht hindurchfallen, und dass diese groß genug sind, dass der Brennstoff gut mit Luft beströmt werden kann.

Fig. 9 zeigt nun den Drehrost 25 in geschlossener Position bzw. in einer Arbeitsposition, wobei alle Drehrostelemente 252, 253 und 254 horizontal ausgerichtet bzw. geschlossen sind. Dies ist die Position im Regelbetrieb. Durch die gleichmäßige Anordnung der Vielzahl der Öffnungen 256 wird eine gleichmäßige Durchströmung des Brennstoffbetts 28 (dieses ist in Fig. 9 nicht dargestellt) auf dem Drehrost 25 sichergestellt. Insofern kann hier der optimale Verbrennungszustand hergestellt werden. Der Brennstoff wird aus Richtung des Pfeiles E auf den Drehrost 25 aufgebracht; insofern wird der Brennstoff von der rechten Seite der Fig. 9 auf den Drehrost 25 hinaufgeschoben.

Im Betrieb sammelt sich Asche und oder Schlacke auf dem Drehrost 25 und insbesondere auf den Drehrostelementen 252, 253 und 254 an. Mit dem vorliegenden Drehrost 25 kann eine effiziente Abreinigung des Drehrosts 25 (zur später erläuterten Ascheabfuhr 7) erfolgen.

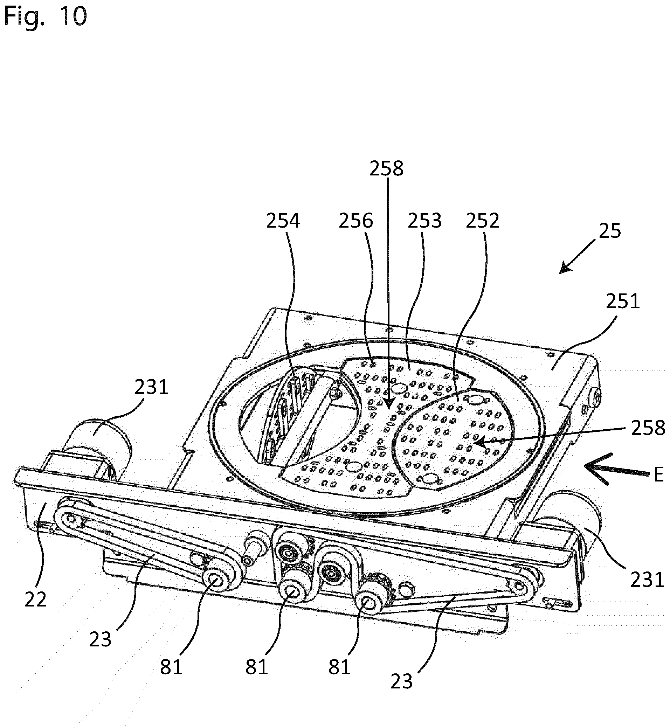

Fig. 10 zeigt den Drehrost in dem Zustand einer Teilabreinigung des Drehrosts 25 im Gluterhaltungsbetrieb. Dazu wird nur das dritte Drehrostelement 254 gedreht. Dadurch, dass nur eines der drei Drehrostelemente gedreht wird, erhält sich die Glut auf dem ersten und dem zweiten Drehrostelement 252, 253, während zugleich die Asche und Schlacke nach unten aus der Brennkammer 24 hinausfallen kann. In der Folge ist keine externe Zündung zur Wiederaufnahme des Betriebs erforderlich (dies spart bis zu 90% Zündenergie). Eine weitere Folge sind eine Verschleißminderung der Zündeinrichtung (beispielsweise eines Zündstabes) und eine Stromersparnis. Weiter kann vorteilhaft eine Aschereinigung im Betrieb der Biomasse-Heizanlage 1 erfolgen.

Fig. 10 zeigt ebenso einen Zustand der Gluterhaltung während einer (oft schon ausreichenden) Teilabreinigung. Damit kann der Betrieb der Anlage 1 vorteilhaft kontinuierlicher erfolgen, womit im Gegensatz zur üblichen Vollabreinigung eines herkömmlichen Rostes keine langwierige vollständige Zündung erfolgen muss, die einige zehn Minuten in Anspruch nehmen kann.

Zudem wird eine potentielle Schlacke an den beiden Außenkanten des dritten Drehrostelements 254 bei der Drehung dessen (auf-)gebrochen, wobei aufgrund der kurvenförmigen Außenkanten des dritten Drehrostelements 254 nicht nur die Abscherung über eine größere Gesamtlänge als bei herkömmlichen rechteckigen Elementen des Stands der Technik erfolgt, sondern auch mit einer ungleichmäßigen Bewegungsverteilung in Bezug auf die Außenkante (in der Mitte erfolgt eine größere Bewegung als an den unteren und oberen Rändern). Damit ist die Brecherfunktion des Drehrosts 25 deutlich verstärkt.

In Fig. 10 sind (beidseitige) Rostlippen 257 des zweiten Drehrostelements 253 erkennbar. Diese Rostlippen 257 sind derart eingerichtet, dass das erste Drehrostelement 252 und das dritte Drehrostelement 254 im geschlossenen Zustand dieser auf der Oberseite der Rostlippen 257 aufliegen, und somit die Drehrostelemente 252, 253 und 254 zueinander spaltfrei vorgesehen und damit dichtend vorgesehen sind. Damit werden Luftsträhnen und unerwünschte Primärluftströmungen durch das Glutbett vermieden. Vorteilhaft wird damit die Effizienz der Verbrennung verbessert.

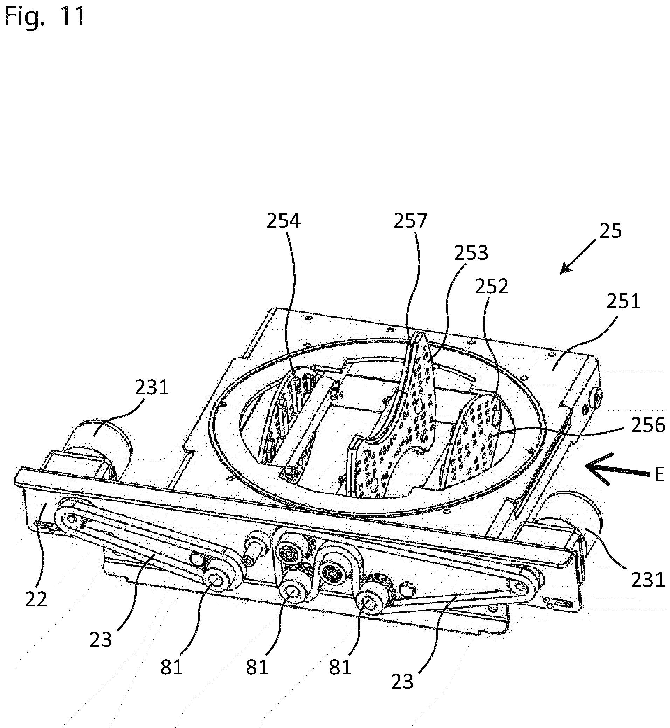

Fig. 11 zeigt den Drehrost 25 im Zustand der Universalabreinigung bzw. in einem geöffneten Zustand, welche bevorzugt während eines Anlagenstillstands durchgeführt wird. Dabei werden alle drei Drehrostelemente 252, 253 und 254 gedreht, wobei das erste und zweite Drehrostelement 252, 253 bevorzugt in die entgegengesetzte Richtung gedreht werden wie das dritte Drehrostelement 254. Realisiert wird damit einerseits eine vollständige Entleerung des Drehrosts 25, und andererseits wird die Schlacke nunmehr an vier ungeraden Außenkanten aufgebrochen. Mit anderen Worten wird eine vorteilhafte 4-fache Brecherfunktion realisiert. Das vorstehend in Bezug auf Fig. 9 zu der Geometrie der Außenkanten Erläuterte gilt auch in Bezug auf Fig. 10.

Zusammengefasst realisiert der vorliegende Drehrost 25 neben dem Normalbetrieb (vgl. Fig. 9) vorteilhaft zwei unterschiedliche Arten der Abreinigung (vgl. Fig. 10 und 11), wobei die Teilabreinigung eine Abreinigung während des Betriebs der Anlage 1 erlaubt.

Im Vergleich dazu sind marktübliche Drehrostsysteme nicht ergonomisch und haben durch ihre rechteckige Geometrie nachteilige Totecken, in welchen die Primärluft den Brennstoff nicht optimal durchströmen kann. An diesen Ecken kommt es gehäuft zu einer Schlackenbildung. Dies sorgt für eine schlechtere Verbrennung mit einem schlechteren Wirkungsgrad.

Der vorliegende einfache mechanische Aufbau des Drehrosts 25 gestaltet diesen robust, zuverlässig und langlebig.

### (Drehrost mit einer Reinigungseinrichtung)

Nachstehend wird mit Bezug auf die Figuren 12a bis 12d eine erfindungsgemäße Reinigungseinrichtung 125 für einei erfindungsgemäßen Drehrost 25 erläutert.

In Fig. 12a ist ein Drehrost 25 mit einem Drehrostelement 252 in einem ersten Zustand dargestellt. In diesem ersten Zustand, der der geschlossenen Position bzw. der Arbeitsposition der Fig. 9 entsprechen kann, ist die Verbrennungsfläche 258 in etwa horizontal ausgerichtet. In dem ersten Zustand kann der Brennstoff auf der Verbrennungsfläche 258 zur Verbrennung liegen.

Die Strich-Punkt-Linie der Fig. 12a gibt eine beispielhafte Horizontale H an. Diese steht zumindest annähernd senkrecht zur Richtung der Erdbeschleunigung. An dieser Horizontalen H kann sich die Arbeitsposition des Drehrosts 25 beziehungsweise des Drehrostelements 252 orientieren, wobei die Verbrennungsfläche 258 zumindest annähernd parallel zur Horizontalen H ausgerichtet ist.

Das Drehrostelement 252 ist mittels einer Lagerwelle 81, vorliegend mit einem beispielhaft dargestellten rechteckigen Querschnitt, drehbar gelagert. Eine der Drehrichtungen ist mit dem Pfeil D1 angegeben. Die Drehachse der Lagerwelle 81 ist in Fig. 12a mit einem Kreis mit Punkt innerhalb der Lagerwelle 81 gekennzeichnet. Die Lagerwelle 81 lagert das Drehrostelement 252, wobei das Drehrostelement 252 auf der Lagerwelle 81 fixiert sein kann. Alternativ (nicht dargestellt) kann die Lagerwelle auch seitlich an dem Drehrostelement 252 vorgesehen sein, oder (nicht dargestellt) kann die Lagerwelle 81 ein integraler Bestandteil des Drehrostelements 252 sein.

Die Lagerwelle 81 ist wiederum relativ zur Biomasseheizanlage 1 drehbar gelagert vorgesehen. Die Drehung der Lagerwelle 81 und damit des Drehrostelements 252 erfolgt über eine (in den Figuren 12a bis 12d zur Vereinfachung nicht dargestellte) Antriebseinrichtung, beispielsweise über einen Elektromotor 231.

Vorzugsweise kann die Kopplung zwischen der Antriebseinrichtung und der Lagerwelle 81 flexibel und nicht starr vorgesehen sein. Beispielsweise kann die Kopplung mittels eines flexiblen Zahnriemens erfolgen. Auch kann die Kopplung mittels eines Zahnradgetriebes mit einem Spiel erfolgen.

An der Lagerwelle 81 des Drehrostelements 252 ist die Reinigungseinrichtung 125 angebracht. Alternativ (nicht dargestellt) kann die Reinigungseinrichtung 125 auch unmittelbar an dem Drehrostelement 252 angebracht sein. Die Lagerwelle 81 weist eine (geometrische) Drehachse 832 auf, um die das Drehrostelement 252 gedreht wird.

Die Reinigungseinrichtung 125 ist an der Unterseite des Drehrostelements 252 vorgesehen. Dabei kann die Reinigungseinrichtung 125 frei an dem Drehrostelement 252 hängen, ohne andere Teile der Biomasse-Heizanlage 1 zu berühren.

Die Reinigungseinrichtung 125 weist eine Aufhängung 122 mit einem Gelenk 123 auf. Die Aufhängung 112 erstreckt sich von dem Drehrostelement 252 weg und beabstandet das Gelenk 123 von der Lagerwelle 81.

Das Gelenk 123 sieht eine Drehachse für einen Schlagarm 124 vor, welcher durch das Gelenk 123 in Bezug auf die Längserstreckung des Schlagarms 124 in etwa mittig drehbar gelagert ist. Der Schlagarm 124 ist länglich ausgebildet und hat beispielsweise die Form eines Stabes oder Schaftes. Der Schlagarm 124 weist dabei ein erstes Ende 124a und ein zweites Ende 124b auf. Das zweite Ende 124b kann einen Schlagarmkopf 126 zum Anschlagen auf eine Anschlagfläche 128b vorsehen.

Am ersten Ende 124a des Schlagarms 124 ist ein Masseelement 127 befestigt. Das Masseelement 127 ist bevorzugt aus einem Metall hergestellt und kann als Gewicht und auch als Schlagelement im Sinne eines Hammerkopfes dienen. Insofern kann das Masseelement 127 ebenso einen Schlagarmkopf 126 darstellen.

Das Masseelement 127 selbst kann einstückig oder auch mehrstückig vorgesehen sein. Beispielsweise kann das Masseelement 127 ein einzelnes Gusselement sein, oder es kann aus mehreren Metallteilen bestehen, welche miteinander verschweißt oder verschraubt sind. Auch kann das Masseelement 127 mit dem Schlagarm 124 einstückig oder mehrstückig vorgesehen sein. Beispielsweise kann das Masseelement 127 mit dem Schlagarm 124 als ein einzelnes Gussteil hergestellt sein.

Der Schlagarm 124 mit dem Masseelement 127 der Fig. 12a bis 12d kann zusammengefasst auch als Fallhammer bezeichnet werden.

Am zweiten Ende 124b des Schlagarms 124 ist eine Abschrägung vorgesehen, mit der ein Schlagarmkopf 126 mit einer Fläche vorgesehen ist, die im ersten Zustand flächig an der Unterseite des Drehrostelements 252 bzw. an einer Anschlagfläche 128b des Drehrostelements 252 anliegt.

Damit ist die maximale Auslenkung des Schlagarms 123 mit dem Masseelement 127 in eine Richtung begrenzt. In anderen Worten ist das Masseelement 127, welches an dem Schlagarm 124 befestigt ist, von dem Drehrostelement 252 maximal beabstandet angeordnet. Durch das Gewicht des Masseelements 127 verbleibt der Schlagarm 124 in dem ersten Zustand stabil in der in Fig. 12a dargestellten Lage in seiner Ausgangsposition.

Der in Fig. 12a dargestellte Winkel η mit dessen gestrichelten gezeichneten Schenkeln gibt den Bewegungsbereich des Schlagarms 124 an. In anderen Worten ist die Reinigungseinrichtung 215 derart eingerichtet, dass sich der Schlagarm 124 in diesem Winkelbereich η frei bewegen kann. Hierfür ist allerdings vorteilhaft kein eigener bzw. gesonderter Antrieb vorgesehen. Vielmehr wird der Antrieb zur Drehung des Drehrostelements 252 auch für die Funktion der Reinigungseinrichtung 125 und damit das Abklopfen des Drehrosts 25 indirekt mitbenutzt. Dabei wird der Drehrost 25 aufgrund der Lage des Schlagarms und des definierten Winkelbereichs η genau dann abgeklopft, wenn der Drehrost 25 zur Reinigung von Verbrennungsrückständen gedreht wird. In anderen Worten kann der Fallstartpunkt der Fallhammerkonfiguration mechanisch derart eingerichtet sein, dass der Drehrost 25 dann abgeklopft wird, wenn die Verbrennungsfläche 258 nach unten überhängt.

In dem ersten Zustand kann beispielsweise die Verbrennung des Brennstoffs auf der Verbrennungsfläche 258 des Drehrostelements 252 erfolgen. Dabei verbleiben Verbrennungsrückstände, unter anderem Asche und Schlacke, auf dem Rost. Diese Verbrennungsrückstände können zudem an dem Drehrostelement 252 fest anhaften oder anbacken, und insbesondere können auch Öffnungen 256 (in Fig. 12a nicht dargestellt) des Drehrostelements 252 verstopfen, was die Verbrennung verschlechtert.

Fig. 12b zeigt den Drehrost 25 in einem zweiten Zustand, in welchem der Drehrost 25 mit dem Drehrostelement 252 und der Reinigungseinrichtung 125 gemeinsam in Bezug auf die Fig. 12a in Richtung des Pfeils D1 weiter gedreht worden sind.

Im Laufe der Drehung in Richtung des Pfeils D1 vom ersten Zustand in den zweiten Zustand wird die Reinigungseinrichtung 125 integral mit dem Drehrostelement 252 bewegt. Bei dieser Bewegung wird der Schlagarm 124 zusammen mit dem Masseelement 127 angehoben; die potentielle Energie des Masseelements 127 wird erhöht.

Dabei verbleibt der Schlagarm 124 im zweiten Zustand in seiner Ausgangswinkelposition. Der Schlagarm 124 hat sich mit dem Masseelement 127 noch nicht relativ zu dem Drehrostelement 252 bewegt.

Dreht man den Schlagarm 124 über diesen zweiten Zustand hinaus weiter in Richtung des Pfeils Dl, was in Fig. 12c dargestellt ist, in einen dritten Zustand, überschreitet der Schlagarm 124 mit dem Masseelement 127 die Fallstartposition Fl, von der aus der Schlagarm 124 mit dem Masseelement 127 unter dem Einfluss der Erdbeschleunigung auf eine Anschlagfläche 128a des Drehrostelements 252 herabfällt, bzw. von der aus der Schlagarm 124 mit dem Masseelement 127 seine Ausgangswinkelposition relativ zu dem Drehrostelement 252 verlässt. In anderen Worten kippt der Schlagarm 124 mit dem Masseelement 127 im dritten Zustand um, überstreicht den Winkelbereich η, und erreicht eine Fallendposition Fe bzw. eine Endwinkelposition, bei der das Masseelement 127 an dem Drehrostelement 252 anschlägt.

Damit initiiert die fortgesetzte Drehung des Drehrostelements 252 über die Fallstartposition Fl eine Beschleunigungsbewegung des Masseelements 127, bei der die Lageenergie bzw. potentielle Energie des Masseelements 127 in kinetische Energie umgewandelt wird.

Die Fallstartposition F1 ergibt sich aus den üblichen Gesetzen der Mechanik unter Berücksichtigung der Wirkungsrichtung der Erdbeschleunigung. Die Fallstartposition F1 kann beispielsweise durch relative Position des Masseschwerpunkts Ms (welcher in Fig. 12b nur rein zur schematisch zur Veranschaulichung eingezeichnet ist) zur Position des Lagers 124 mit seiner Drehachse definiert werden.

In Fig. 12c ist im Detail ein Beginn der (Herab-) Fallbewegung des Schlagarms 124 ab einer Fallstartposition Fl mit dem Masseelement 127 gestrichelt dargestellt, und ein Ende der Herabfallbewegung des Schlagarms 124 mit dem Masseelement 127 ist mit durchgezogenen Linien dargestellt. Am Ende der Herabfallbewegung des Schlagarms 124 mit dem Masseelement 127 schlägt das Masseelement 127 auf der Anschlagfläche 128a des Drehrostelements 252 an. Die Fallstartposition stellt allgemein eine Position des Masseelements 127 und/oder des Schlagarms 124 bei Drehung des Drehrosts 25 dar, ab dem die Fallbewegung beginnt.

Die Fallbewegung des Schlagarms 124 mit dem Masseelement 127 ist im Prinzip eine Drehbewegung. Impulsphysikalisch betrachtet ist der Impuls des Schlagarms 124 mit dem Masseelement 127 beim Anschlag auf die Anschlagfläche 128a gleich der Impulssumme der verteilten Masse ∑ mi ^{∗} vi des Fallhammers, wobei die Geschwindigkeit vi der einzelnen Masseninkremente mi des Fallhammers von dem Radius der Drehbewegung der einzelnen Masseninkremente abhängt.

Mit diesem Impuls erfolgt ein Stoß oder ein Anklopfen auf bzw. an das Drehrostelement 252.

Dieser Stoß oder das Anklopfen bewirkt eine Erschütterung des Drehrostelements 252 und, insbesondere bei einer flexiblen Kopplung zwischen Antriebseinrichtung und Lagerwelle 81, eine schnelle Hin- und Herbewegung des Drehrostelements 252 um dessen Drehachse. Damit werden Verbrennungsrückstände auf dem Drehrostelement 252 abgeklopft und auch abgeschüttelt.

Der Stoß oder das Anklopfen des Masseelements 127 auf der Anschlagfläche 128a des Drehrostelements 252 resultiert zusammengefasst in einer Klopfwirkung, mit welcher das Drehrostelement 252 von Verbrennungsrückständen, beispielsweise Asche oder Schlacke, abgereinigt werden kann.

In Fig. 12d ist ein vierter Zustand dargestellt, bei welchem sich das Drehrostelement 252 weiter in Richtung des Pfeils D1 gedreht hat. Hierbei liegt das Masseelement 127 auf der ersten Anschlagfläche 128a auf, und das zweite Ende 124b des Schlagarms 124 liegt nicht auf der Anschlagfläche 128 auf.

Die Drehbewegung in Richtung des Pfeils D1 kann nun entweder an einer vordefinierten Position stoppen und dann in Richtung des Pfeils D2 entgegengesetzt fortgesetzt werden, oder es kann die Drehbewegung weiter in Richtung des Pfeils D1 fortgesetzt werden, bis eine 360 Grad Drehung erfolgt ist. Dabei kann die Drehbewegung in Richtung des Pfeils D2 insbesondere derart fortgeführt werden, dass das Drehrostelement 252 wieder auf seine Arbeitsposition der Fig. 12a zurückbewegt wird.

In beiden vorgenannten Fällen der Fortführung der Drehbewegung (weiter in Richtung des Pfeils D1 oder in Richtung des Pfeils D2) kann wiederum eine weitere Fallstartposition erreicht werden, in welcher sich der Schlagarm 124 in die Ausgangsposition der Fig. 12a bzw. in seine Ausgangswinkelposition zurückbewegen wird. Hierbei fällt das Masseelement 127 zurück, wobei nunmehr das zweite Ende des Schlagarms 124b mit dem dortigen Schlagarmkopf 126 auf die Anschlagfläche 128b anschlägt. Dabei gilt das vorteilhafte Hebelgesetz.

Damit kann mit der vorstehend erläuterten Mechanik bei der (optionalen) Rückkehr des Drehrostelements 252 in seine Ausgangsposition ein zweiter Stoß oder ein zweites Anklopfen auf bzw. an das Drehrostelement 252 erfolgen, was die Abreinigung des Drehrostelements 252 verbessert.

Versuche mit einer Experimentalanlage haben gezeigt, dass die Reinigungseinrichtung 125 mit der vorstehend erläuterten Konfiguration zu einer sehr effizienten Abreinigung des Rostes 25 führt.

Diese effiziente Abreinigung hat insbesondere die folgenden Gründe:
Das Anklopfen bzw. der Impuls auf das Drehrostelement 252 erfolgt von der Unterseite des Drehrostelements, die der verunreinigten oder verschlackten Verbrennungsfläche 258 gegenüberliegt. Damit wird der Großteil der Verunreinigung oder Verschlackung von der Verbrennungsfläche 258 aus der idealen Richtung abgeklopft, d. h. die Verbrennungsrückstände werden vom Rost 25 weggeklopft.

Das Anklopfen auf das Drehrostelement 252 erfolgt zudem bei dem ersten Anklopfen unmittelbar auf das Drehrostelement 252 selbst.

Das Masseelement 127 kann weiterhin im Vergleich zur Masse des Drehrostelements 252 ein erhebliches Gewicht aufweisen, beispielsweise 100 bis 1000 Gramm. Aufgrund der vorstehend erläuterten Fallstrecke und der Erdbeschleunigung ist der resultierende Impuls vergleichsweise groß, womit neben der losen Asche auch stärker anhaftende Verunreinigungen oder Verschlackungen entfernt werden können.

Bei einer Hin- und Rückdrehung oder eine vollständigen Umdrehung des Drehrostelements 252 erfolgt ein zweimaliges Anschlagen oder Anklopfen, womit die Klopfwirkung zweifach erzeugt wird.

Zudem bestehen die weiteren Vorteile:
Die Initiierung der Beschleunigungsbewegung erfolgt durch die Drehung des Drehrostelements 252, d. h. immanent zu dem Zeitpunkt, zu dem der Rost zur Abreinigung gekippt wird, ohne jedoch einen eigenen Antrieb oder eine eigens gesteuerte Auslösevorrichtung zu benötigen. Damit wird die Klopfwirkung konstruktiv bedingt automatisch zum richtigen Zeitpunkt bewirkt.

Dabei kann die Fallstartposition vorteilhaft derart festgelegt sein, dass die Verbrennungsfläche 258 beim Abklopfen nach unten zeigt, womit die beim Stoß oder Anklopfen entfernten Verbrennungsrückstände direkt in den Aschebehälter bzw. -raum der Biomasse-Heizanlage 1 fallen können.

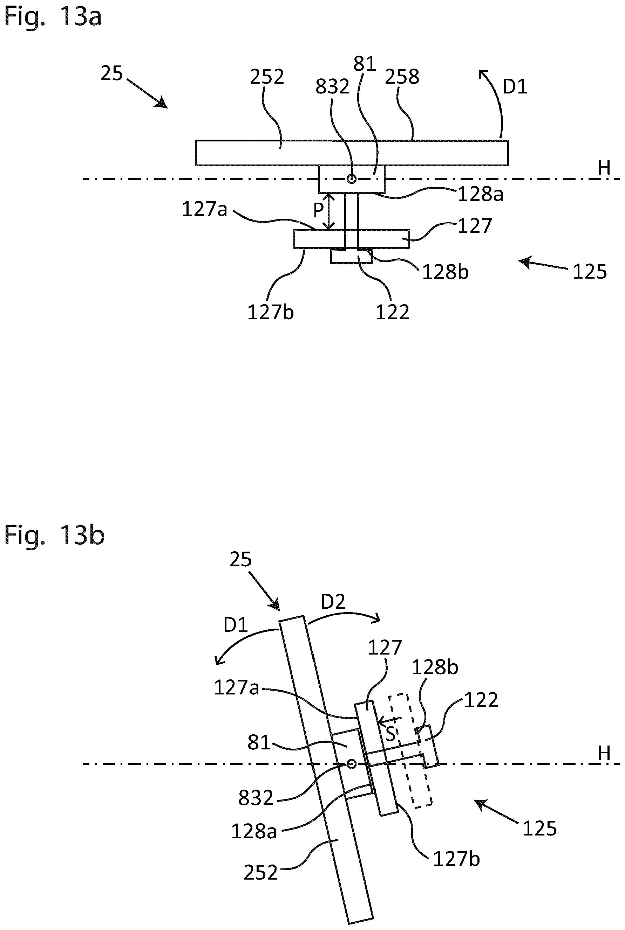

Nachstehend wird mit Bezug auf die Figuren 13a und 13b ein zweites allgemeines Beispiel des erfindungsgemäßen Prinzips einer Reinigungseinrichtung 125 für einen Drehrost 25 erläutert.

Eine Initiierung einer Beschleunigungsbewegung des Masseelements 127 kann auch ohne die in den Figuren 12a bis 12d gezeigte Fallhammer-Konfiguration erfolgen, wie folgt erläutert:
Die Fig. 13a zeigt ein Drehrostelement 252 eines Drehrosts 25 mit einer Lagerachse 81 in einer Arbeitsposition des Drehrostelements 252, so wie das auch in Fig. 12a gezeigt ist.

Anstelle der Fallhammer-Konfiguration der Fig. 12a kann nun eine Aufhängung 122 als Führung für ein Masseelement 127 dienen. Beispielsweise kann die Aufhängung 122 in Stift- oder Stabform mit einem Endanschlag mit einer Anschlagfläche 128b vorgesehen sein. Auf der Aufhängung 122 kann das Masseelement 127 derart beweglich vorgesehen sein, dass sich dieses in der Längsrichtung der Aufhängung 122 hin- und her bewegen kann (vgl. der Doppelpfeil P der Fig. 13a). Beispielsweise kann das Masseelement 127 als eine Lochscheibe ausgestaltet sein, durch deren mittiges Loch die Aufhängung 122 durchgeführt ist. Das Masseelement weist auf seinen beiden Seiten eine erste Fläche 127a und eine zweite Fläche 127b auf. In der in Fig. 12a gezeigten Position liegt die zweite Fläche 127b des Masseelements 127 auf dem Endanschlag bzw. der (zweiten) Anschlagfläche 128b der Aufhängung 122 auf.

Wird nun das Drehrostelement 252 in Richtung des Pfeils D1 gedreht, so wie das in der Fig. 13 gezeigt ist, wird das Masseelement 127 bei Erreichen einer Fallstartposition auf der Aufhängung 122 nach unten gleiten bzw. fallen (vgl. der Pfeil S der Fig. 13b), und mit dessen ersten Fläche 127a auf der (ersten) Anschlagfläche 128b anschlagen. Damit kann eine Klopfwirkung erzeugt werden, so wie das auch in Bezug auf die Fig. 12a bis 12d beschrieben ist.

Wird das Drehrostelement 252 in Folge entweder in Richtung des Pfeils D1 oder in Richtung des Pfeils D2 weitergedreht, dann kann wiederum eine weitere Fallstartposition erreicht werden, aus der das Masseelement 127 zurückgleitet bzw. fällt, und mit seiner zweiten Fläche 127b auf die zweite Anschlagfläche 128b aufschlägt.

Insofern können auch mit diesem zweiten Beispiel einer Reinigungseinrichtung 125 der Fig. 13a und 13b in etwa die gleichen Vorteile und Effekte erzielt werden, wie bei dem ersten Beispiel der Fig. 12a bis 12d.

### (Drehrost 25 mit Drehrostelementen 252, 253, 254 und mit Reinigungseinrichtungen 125)

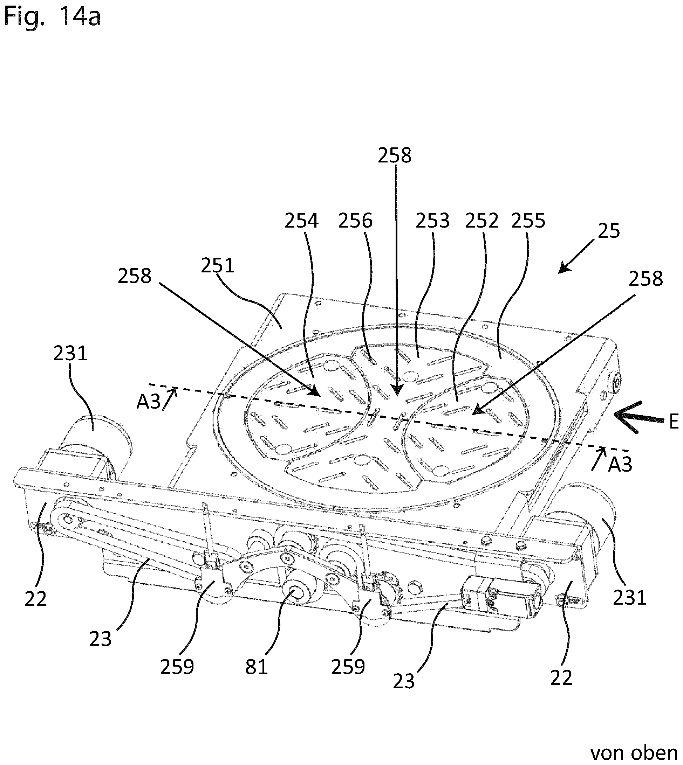

Die Fig. 14a zeigt einen Drehrost 25 mit drei Drehrostelementen 252, 253, 254 und mit jeweiligen Reinigungseinrichtungen 125 aus einer schrägen Draufsicht auf den Drehrost 25.

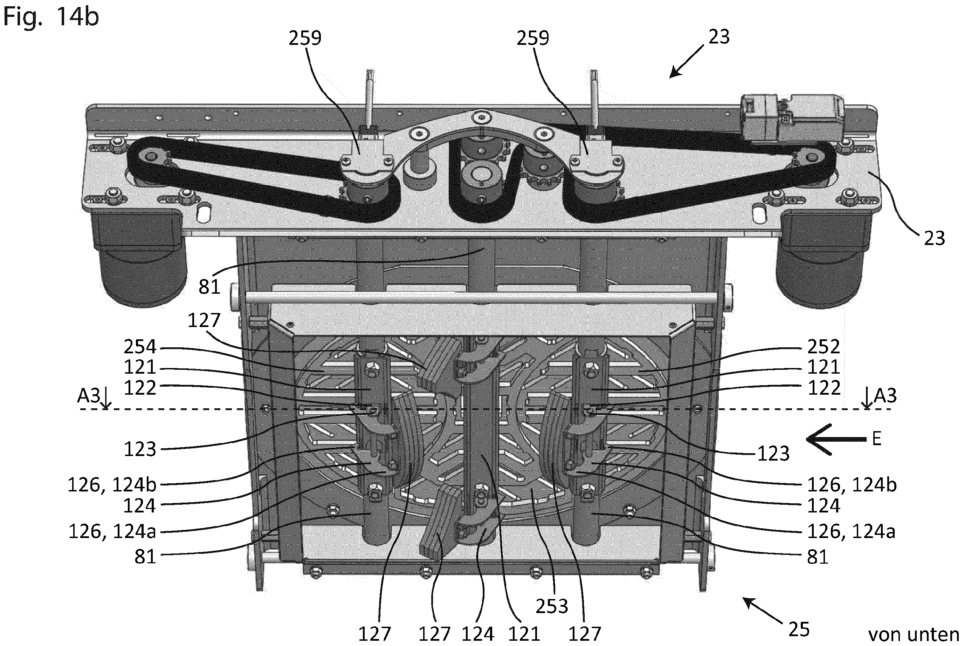

Die Fig. 14b zeigt den Drehrost 25 der Fig. 14 a mit drei Drehrostelementen 252, 253, 254 und mit jeweiligen Reinigungseinrichtungen 125 aus einer schrägen Untersicht auf den Drehrost 25.

Der Drehrost 25 mit den drei Drehrostelementen 252, 253, 254 wurde vorstehend in Bezug auf die Figuren 8 und 9 näher beschrieben, weshalb nachstehend zur Vermeidung von Wiederholungen hauptsächlich die Reinigungseinrichtung 125 erläutert wird.

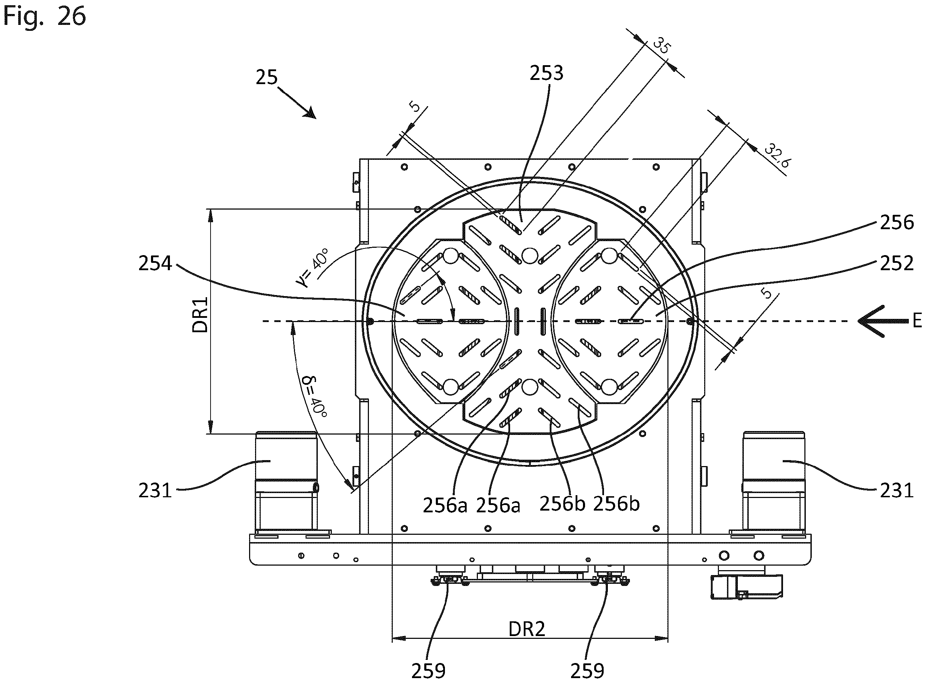

Die Figuren 14a und 14b zeigen den Drehrost 25 in geschlossener Position bzw. in einer Arbeitsposition, wobei alle Drehrostelemente 252, 253 und 254 horizontal ausgerichtet bzw. geschlossen sind. Dies ist die Position im Regelbetrieb. Durch die gleichmäßige Anordnung der Vielzahl der Öffnungen 256 wird eine gleichmäßige Durchströmung des Brennstoffbetts 28 (dieses ist in Fig. 14a und 14b nicht dargestellt) auf der Verbrennungsfläche 285 des Drehrosts 25 sichergestellt. Die Öffnungen 256, die sich in Form und Funktion von denen der Fig. 9 unterschieden, sind später in Bezug auf Fig. 26 näher beschrieben. Die Einschubrichtung bzw. -achse des Brennstoffs auf den Drehrost 25 ist mit dem Pfeil E angegeben.

Die Motoren 31 können die Lagerachsen 81 der drei Drehrostelemente 252, 253, 254 zur Drehung dieser über eine Drehmechanik 23 antreiben. Die Drehmechanik 23 koppelt die Lagerachse 81 mit den Motoren 31 über einen Zahnriemen und Zahnräder, wobei das erste und das zweite Drehrostelement 252, 253 gemeinsam gedreht werden, und das dritte Drehrostelement 254 unabhängig von dem ersten und zweiten Drehrostelement 252, 253 gedreht werden können. Alternativ (nicht dargestellt) können aber auch alle drei Drehrostelemente 252, 253, 254 unabhängig voneinander gedreht werden, falls beispielsweise drei Motoren 31 vorgesehen sind.

Es sind in Fig. 14a und 14b zwei Drehlagesensoren 259 vorgesehen, welche die Drehlage der Lagerachsen 81 erfassen können. Diese Drehlagesensoren 259 können beispielsweise magnetisch-induktive Sensoren sein. Dies dient der Regelung der Drehlage der drei Drehrostelemente 252, 253, 254.

In der Fig. 14b, die den Drehrost 25 von schräg unten zeigt, sind weiterhin vier Reinigungseinrichtungen 125 dargestellt. Das erste und das dritte Drehrostelement 252, 254 weisen jeweils eine Reinigungseinrichtung 125 auf, während das zweite Drehrostelement 253 zwei Reinigungseinrichtungen 125 aufweist. Alternativ (nicht dargestellt) kann jedoch auch beispielsweise nur eine Reinigungseinrichtung 125 pro Drehrostelement vorgesehen sein, oder aber es kann beispielsweise nur eine Reinigungseinrichtung 125 für den Drehrost 25 insgesamt vorgesehen sein.

Das Vorsehen von zwei Reinigungseinrichtungen 125 für das mittlere Drehrostelement 253 verbessert die Klopfwirkung auf das Drehrostelement 253 und damit die Abreinigung dessen. Die Taillierung des mittleren Drehrostelements 253 resultiert in zwei Hauptflächen dessen, an denen entsprechend auch jeweils eine Reinigungseinrichtung 125 vorgesehen ist. Dies zeigt beispielhaft, dass das vorliegende Konzept einer Reinigungseinrichtung 125 sehr flexibel an unterschiedliche und/oder auch komplexe Rostformen angepasst werden kann. Dabei kann die Reinigungseinrichtung 125 auch genau an derjenigen Stelle oder Fläche des Rosts 25 zum Einsatz kommen, an welcher der größte Anfall an Verunreinigungen erwartet werden kann. In anderen Worten kann die Reinigungseinrichtung vorteilhaft derart eingerichtet sein, dass die Klopfwirkung unmittelbar an den abzureinigenden Stellen des Rostes 25 erzeugt wird.

Die vier Reinigungseinrichtungen 125 sind an der Unterseite der Drehrostelemente 252, 253, 254 vorgesehen. Die Reinigungseinrichtungen 125 weisen eine Befestigung 121, eine Aufhängung 122 mit einem Lager 123 und einen drehbar gelagerten Schlagarm 124 mit einem an einem daran befestigten Masselelement 127 auf.

In Fig. 14b ist die Reinigungseinrichtung 125 mittels der Befestigung 121 an den Lagerachsen 81 befestigt, beispielsweise angeschraubt. An der Befestigung 121 ist die Aufhängung 122 vorgesehen, die in der Arbeitslage der Figuren 14a und 14b nach unten hervorsteht. Die Befestigung 121 und die Aufhängung 122 können beispielsweise als ein Metallformteil vorgesehen sein, oder aber auch als gesonderte Teile vorgesehen und miteinander verschraubt sein. In der Aufhängung 122 ist ein Lager 123 als Drehachse für den Schlagarm 124 vorgesehen. Mittels der Aufhängung wird das Lager 123 und damit die Drehachse des Schlagarms 124 von dem Drehrostelement 252, 253, 254 beabstandet.

Der Schlagarm 124 weist aus Stabilitätsgründen zwei formgleiche Schlagarmelemente auf, die jeweils um das Lager 123 drehbar angeordnet sind. Allerdings kann der Schlagarm 124 auch nur ein oder auch drei Schlagarmelemente aufweisen. Die Schlagarmelemente sind an deren erstem Ende miteinander mittels eines Blechs oder Metallstücks verbunden. Daran ist das Masseelement 127 angebracht, vorliegend beispielhaft verschraubt. Das Masseelement 127 kann aber auch mit dem Schlagarm anders, beispielsweise durch Verschweißen, verbunden sein.

Auch hier gilt betreffend des Schlagarms 124 das Hebelgesetz mit dem Lager 123 als Drehpunkt. Der Schlagarmkopf 126 am zweiten Ende des Schlagarms 124a, der auf der Anschlagfläche 128b anschlägt, befindet sich auf der Seite des kürzeren Hebels. Das Masseelement 127 befindet sich auf der längeren Seite des Hebels. Vorzugsweise weist der Schlagarm 124 auf der kürzeren Seite vom zweiten Ende 124b bis zum Lager 123 weniger als 50% der Länge des Schlagarm 124 auf der längeren Seite vom ersten Ende 124a bis zum Lager 123 auf. Dies steigert die (zweite) Klopfwirkung erheblich.

Die vier Masseelemente 127 der Fig. 14b sind in deren Form an die Form der jeweiligen Drehrostelemente 252, 253, 254 derart angepasst, dass die jeweiligen Masseelemente 127 mit ihrer gesamten Schlagfläche auf dem korrespondierenden Drehrostelement 252, 253, 254 aufliegen können, und die Masseelemente 127 insofern im Falle des Aufliegens auf dem Drehrostelement nicht über die Fläche der jeweiligen Drehrostelement 252, 253, 254 hinausragen.

In Fig. 14b hängen die Schlagarme 124 mit den Masseelementen 127 nach unten in deren Ausgangsposition, und die Masseelemente 127 sind von den Drehrostelementen 252, 253, 254 beanstandet. Bei Drehung eines einzelnen oder von mehreren Drehrostelementen 252, 253, 254 werden die Drehrostelemente 252, 253, 254 durch die jeweilige Reinigungseinrichtung 125 abgereinigt, so wie das im Prinzip in Bezug auf die Fig. 12a bis 12d erläutert ist, und wie dies nachstehend im Einzelnen anhand der folgenden Figuren erläutert ist.

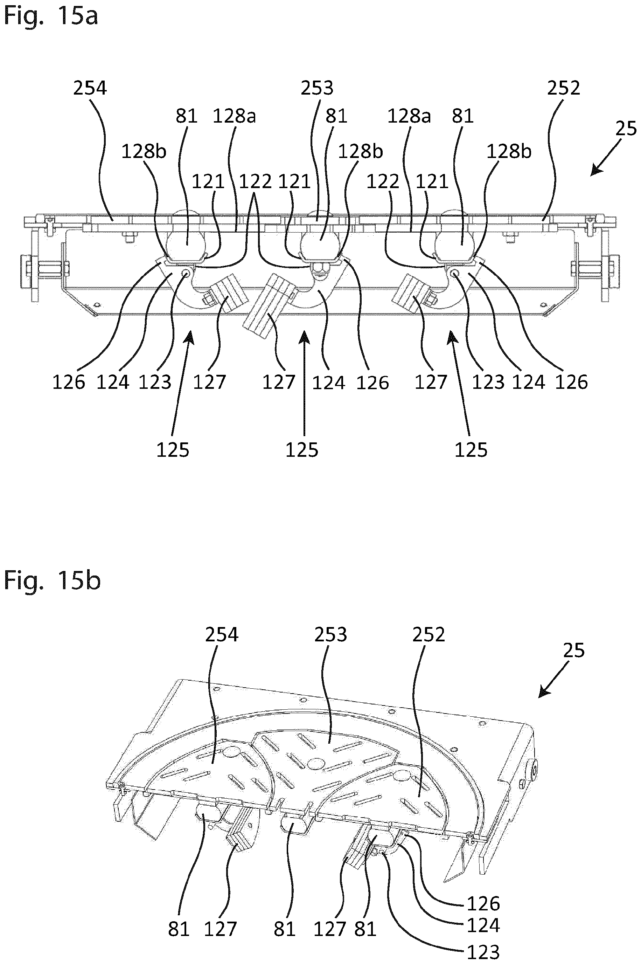

Die Figuren 15a bis 25b zeigen den Rost 25 der Figuren 14a und 14b nacheinander bei der Ausführung eines beispielhaften stufenweisen und vollständigen Abreiniungsvorgangs bzw. - verfahrens.

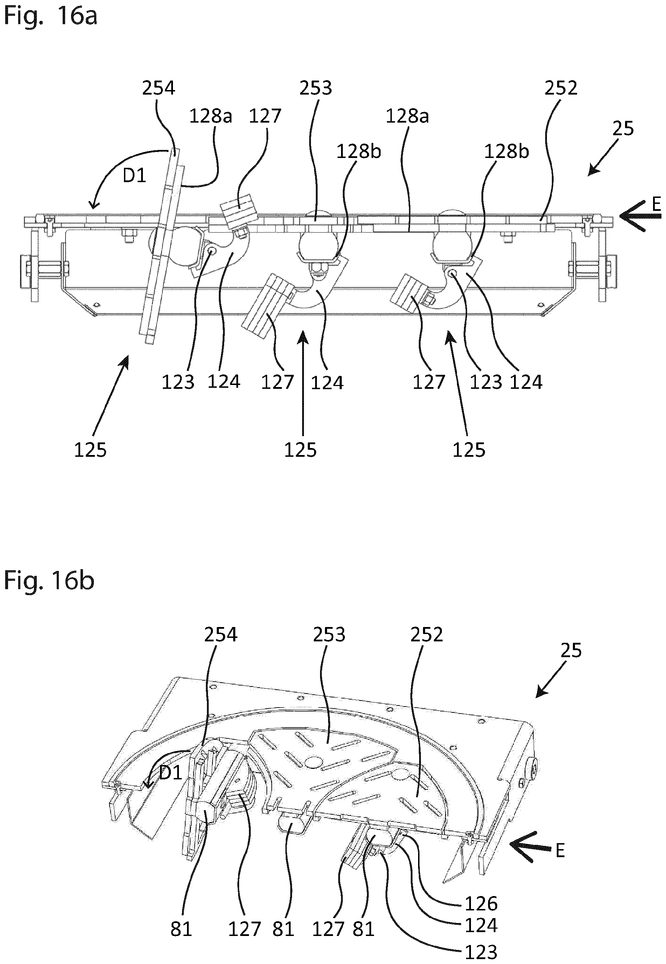

Um Wiederholungen zu vermeiden wird betreffend der Merkmale und der Funktion der Reinigungsreinrichtungen 25 auf die Erläuterungen zu den Fig. 14a und 14b verwiesen. Ebenso sind aus Gründen der Übersichtlichkeit in den Fig. 16a bis 25b nicht alle Bezugszeichen der Fig. 15a und 15b wiederholt dargestellt. Die entsprechenden Merkmale sind jedoch identisch. Weiter ist in der Fig. 15b, und analog in den folgenden Figuren, aufgrund der Schnittposition nur eine von zwei Reinigungseinrichtungen 25 des zweiten Drehrostelements 253 dargestellt.

Von den in den Figuren 15a bis 25b dargestellten Verfahrensschritten können jedoch auch nur einzelne Abschnitte ausgeführt werden. Beispielsweise kann nur eine Teilabreinigung eines einzelnen Drehrostelements 252, 253, 254 durchgeführt werden, was den Fig. 15a bis 18b entspricht. Es kann generell jedes Drehrostelement 252, 253, 254 einzeln gedreht und damit einzeln abgereinigt werden. Auch könnten beispielsweise alle Drehrostelemente 252, 253, 254 gleichzeitig gedreht werden, wenn beispielsweise keine Drehrostlippen oder keine gegenseitigen Drehbegrenzungen vorhanden sind. Zudem kann eine volle Drehung eines Drehrostelements 252, 253, 254 um 360 Grad erfolgen, oder aber es kann eine Hin- und Rückdrehung eines Drehrostelements 252, 253, 254 beispielsweise nur um bis zu 180 Grad erfolgen. Auch kann der Rost 25 alternativ nur ein Drehrostelement oder auch nur zwei Drehrostelemente aufweisen.

Figuren 15a und 15b zeigen eine vertikale Querschnittsansicht und eine dreidimensionale Schnittansicht auf den Rost 25 der Fig. 14a in einem ersten Zustand. Dies ist der Arbeitszustand des Rosts 25, auf dem Brennstoff auf der Verbrennungsfläche 258 aufliegt, verbrannt wird, und Verbrennungsrückstände entstehen. Diese Verbrennungsrückstände, beispielsweise Asche oder Schlacke, liegen auf dem Rost 25 auf und können auch fester an dem Rost 25 anhaften. Zudem können Verbrennungsrückstände auch in die Perforation bzw. die Öffnungen 256 des Rosts gelangen und in diesen Öffnungen 256 haften, wobei hier die Durchströmung des Brennstoffbetts 28 verschlechtert wird.

Nachdem beispielsweise eine vorbestimmte Brenndauer verstrichen ist und/oder nachdem ein Glutbetthöhensensor (nicht dargestellt) eine vorbestimmte Aschehöhe (und damit -menge) erfasst hat, bestimmt eine Anlagensteuerung (nicht dargestellt), dass eine Teil- oder eine Vollabreinigung des Rosts 25 erfolgen soll. Vorliegend bestimmt die Anlagensteuerung, dass eine stufenweise Vollabreinigung des Rosts 25 erfolgen soll.

Die Figuren 16a und 16b zeigen eine vertikale Querschnittsansicht und eine dreidimensionale Schnittansicht auf den Rost 25 der Fig. 14a in einem zweiten Zustand.

In diesem zweiten Zustand ist das dritte Drehrostelement 254 in Richtung des Pfeils D1 gedreht worden. Dabei wird das Masseelement 127 der Reinigungseinrichtung 125 des dritten Drehrostelements 254 mit der Kraft eines der Motoren 231 der Drehmechanik 23 angehoben, wobei dessen potentielle Energie vergrößert wird. Die anderen Drehrostelemente 252, 253 verbleiben in der Ausgangslage. Damit wird zuerst dasjenige Drehrostelement gedreht, welches vom Brennstoffeinschub E am weitesten beabstandet ist. In diesem Zustand fällt die lose Asche vom dritten Drehrostelement 254 nach unten zur Ascheaustragung. Allerdings kann noch Asche oder Schlacke am dritten Drehrostelement 254 anhaften.

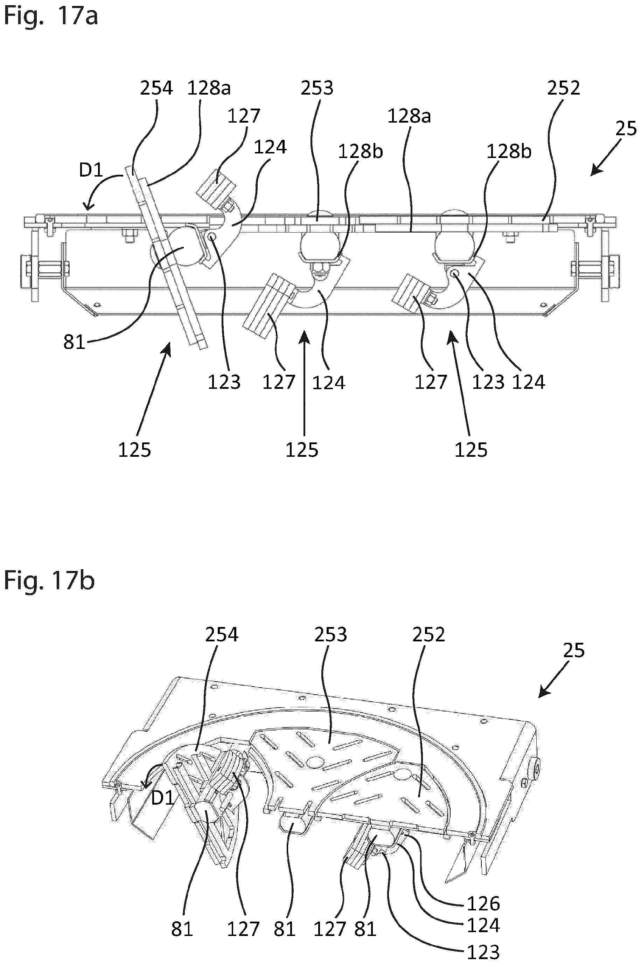

Die Figuren 17a und 17b zeigen eine vertikale Querschnittsansicht und eine dreidimensionale Schnittansicht auf den Rost 25 der Fig. 14a in einem dritten Zustand.

In diesem dritten Zustand ist das dritte Drehrostelement 254 noch weiter in Richtung des Pfeils D1 gedreht worden. Die Verbrennungsfläche 258 des dritten Drehrostelements 254 hängt nun über, womit die lose Asche noch besser vom Drehrostelement 254 hinabfallen kann. Allerdings kann weiterhin noch Asche oder Schlacke am dritten Drehrostelement 254 anhaften. Die erfindungsgemäße Reinigungseinrichtung 125 hat den Zweck, eben diese schwieriger zu entfernenden Verbrennungsrückstände vom Rost 25 zu entfernen.

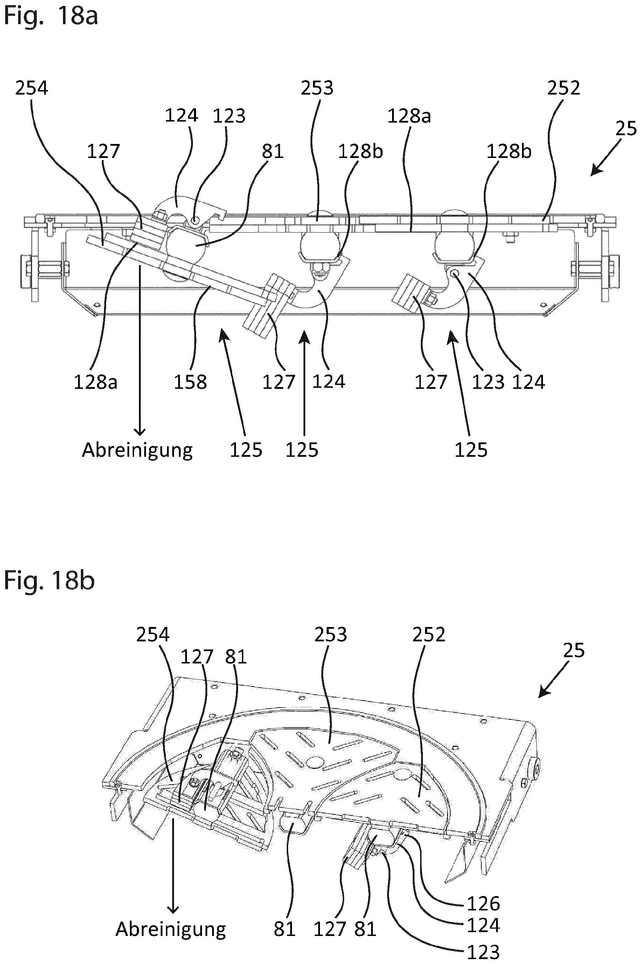

Die Figuren 18a und 18b zeigen eine vertikale Querschnittsansicht und eine dreidimensionale Schnittansicht auf den Rost 25 der Fig. 14a in einem vierten Zustand.

In diesem vierten Zustand ist das dritte Drehrostelement 254 noch weiter in Richtung des Pfeils D1 gedreht worden. Dabei hat der Schlagarm 124 mit dem Masseelement 127 die Fallstartposition überschritten, und das Masseelement 127 ist auf der Anschlagfläche 128a des dritten Drehrostelements 254 aufgeschlagen. Damit wird, wie in Bezug auf die Fig. 12a bis 12d erläutert ist, eine Klopfwirkung auf das dritte Drehrostelement 254 erzeugt, und es wird auch fester anhaftende Asche oder Schlacke vorteilhaft abgeklopft. Dabei zeigt die Verbrennungsfläche 258 vorteilhaft weitgehend nach unten, womit diese Asche oder Schlacke direkt zur Ascheabfuhr fallen kann und sich nicht an anderen Stellen (beispielsweise Totecken oder andere Flächen in der Brennkammer 24) erneut ansetzen kann.

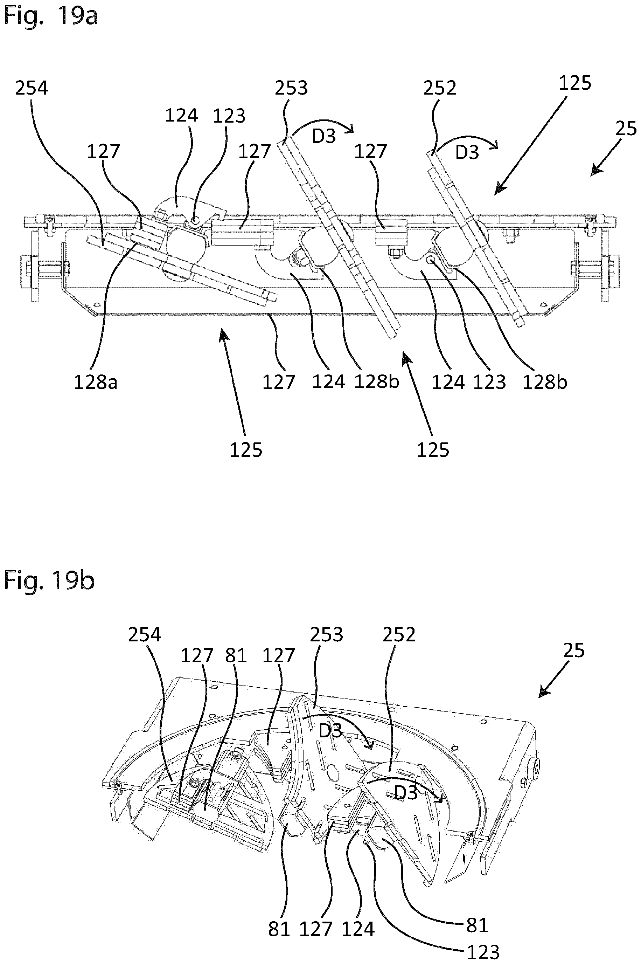

Die Figuren 19a und 19b zeigen eine vertikale Querschnittsansicht und eine dreidimensionale Schnittansicht auf den Rost 25 der Fig. 14a in einem fünften Zustand.

In diesem fünften Zustand sind das erste und zweite Drehrostelement 252, 253 gemeinsam in Richtung des Pfeils D3 gedreht worden. Dabei ist die Drehrichtung umgekehrt zur Drehrichtung D1. Dabei werden weiter die Masseelemente 127 der Reinigungseinrichtungen 25 des ersten und zweiten Drehrostelements 252, 253 angehoben. Das dritte Drehrostelement 254 verbleibt in einer stationären Drehlage.

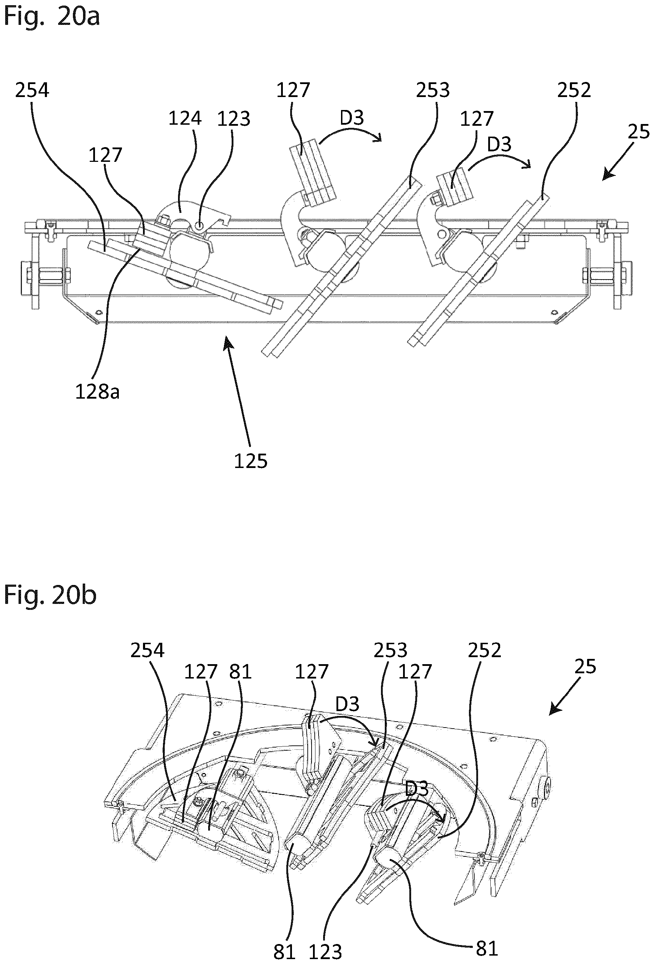

Die Figuren 20a und 20b zeigen eine vertikale Querschnittsansicht und eine dreidimensionale Schnittansicht auf den Rost 25 der Fig. 14a in einem sechsten Zustand.

In diesem sechsten Zustand sind das erste und zweite Drehrostelement 252, 253 gemeinsam in Richtung des Pfeils D3 weiter gedreht worden. Die Masseelemente 127 befinden sich kurz vor deren Fallstartposition. Das dritte Drehrostelement 254 verbleibt in einer stationären Drehlage.

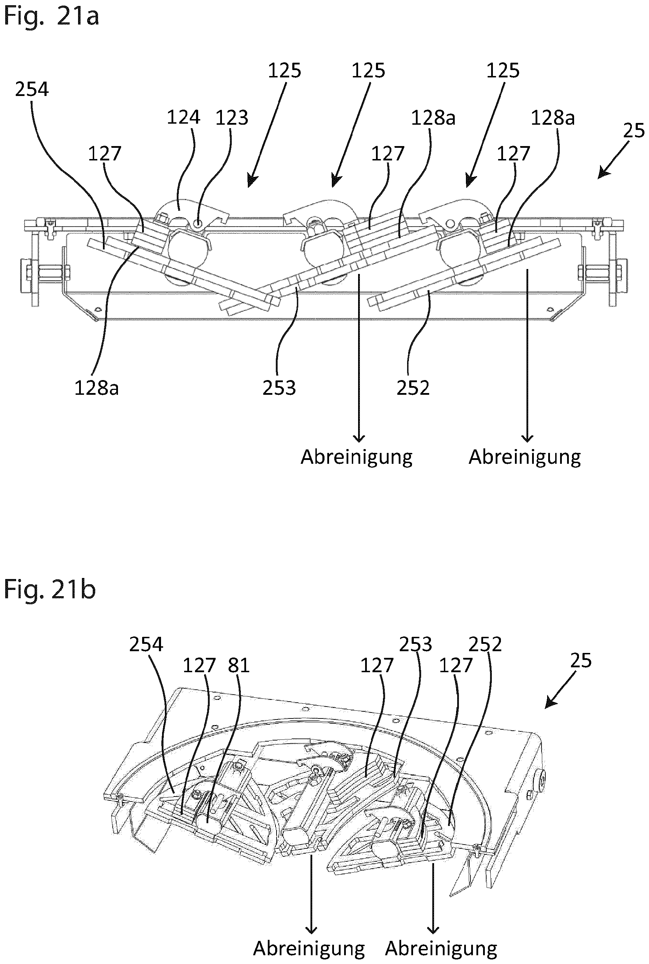

Die Figuren 21a und 21b zeigen eine vertikale Querschnittsansicht und eine dreidimensionale Schnittansicht auf den Rost 25 der Fig. 14a in einem siebten Zustand.

In diesem siebten Zustand sind das erste und zweite Drehrostelement 252, 253 gemeinsam in Richtung des Pfeils D3 weiter gedreht worden. Dabei haben die Masseelemente 127 deren Fallstartpositionen überschritten, und sind jeweils auf die Anschlagflächen 128a jeweils des ersten und zweiten Drehrostelements 252, 253 herabgefallen und haben die Drehrostelemente 252, 253 abgeklopft. Das dritte Drehrostelement 254 verbleibt in einer stationären Drehlage.

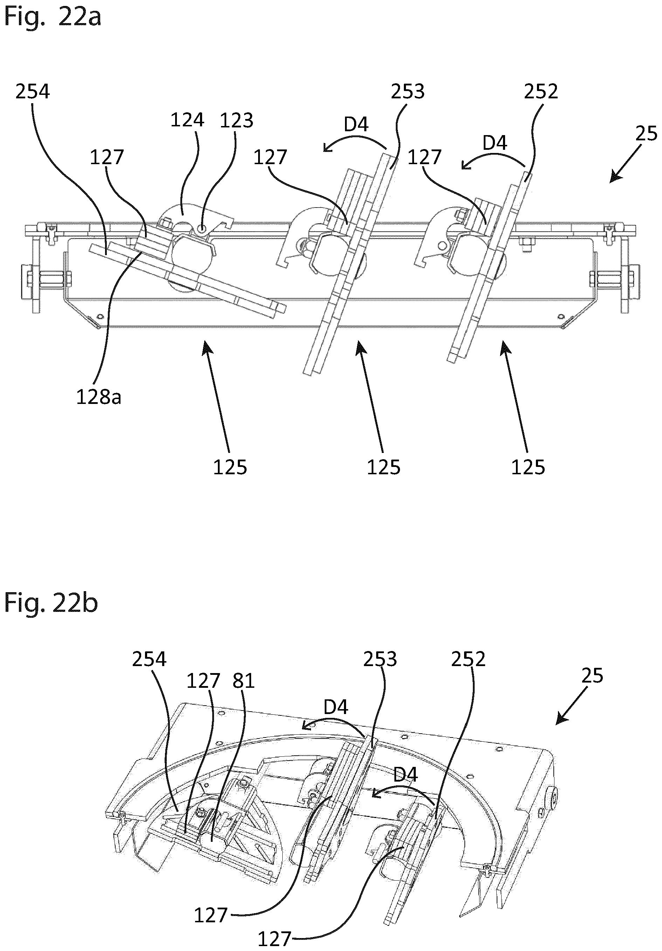

Die Figuren 22a und 22b zeigen eine vertikale Querschnittsansicht und eine dreidimensionale Schnittansicht auf den Rost 25 der Fig. 14a in einem achten Zustand.

In diesem achten Zustand sind das erste und zweite Drehrostelement 252, 253 gemeinsam in Richtung des Pfeils D4 entgegen der Drehrichtung D3 zurückgedreht gedreht worden. Dabei liegen die Masseelemente 127 auf den jeweiligen Drehrostelementen 252, 253 auf und erhalten wiederum potentielle Energie. Das dritte Drehrostelement 254 verbleibt in einer stationären Drehlage.

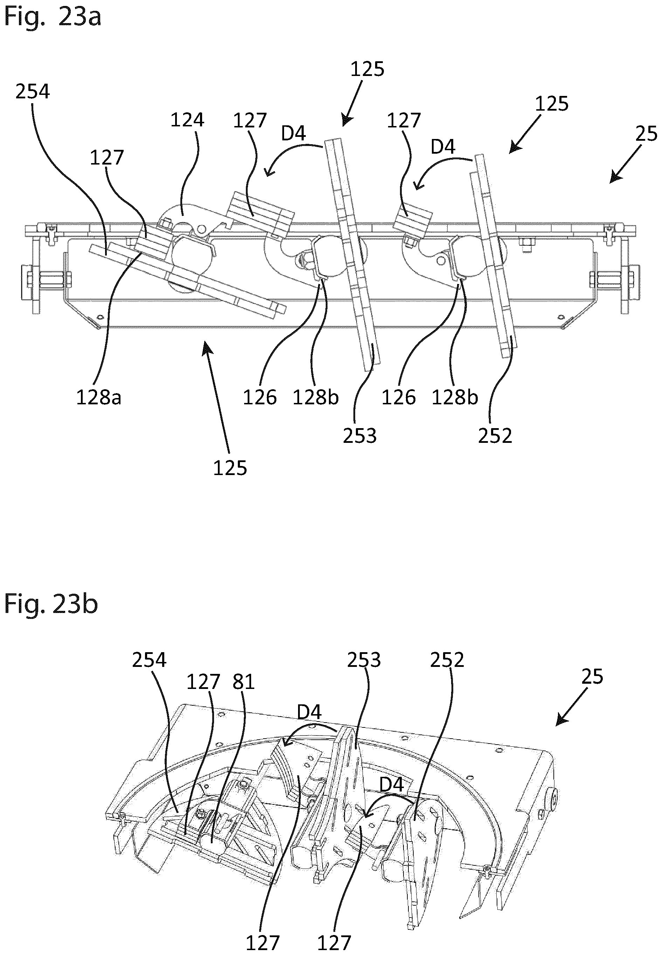

Die Figuren 23a und 23b zeigen eine vertikale Querschnittsansicht und eine dreidimensionale Schnittansicht auf den Rost 25 der Fig. 14a in einem neunten Zustand.

In diesem neunten Zustand sind das erste und zweite Drehrostelement 252, 253 weiterhin gemeinsam in Richtung des Pfeils D4 zurückgedreht gedreht worden. Das dritte Drehrostelement 254 verbleibt in einer stationären Drehlage.

Dabei haben die Masseelemente 127 ihre jeweiligen Fallstartpositionen überschritten und sind zurückgefallen. Dabei schlagen die Schlagarmköpfe 126 auf den Anschlagflächen 128b der Reinigungseinrichtung auf und entfalten die schon beschriebene Klopfwirkung zur Abreinigung des Rosts 25. Praxisversuche haben gezeigt, dass diese zweite Klopfwirkung bei der Rückdrehung sogar noch stärker ist, als die erste Klopfwirkung bei der Hindrehung (D3). Dies liegt einerseits an dem Ort des Anschlagens bzw. Anklopfens, der näher an der Drehasche 81 angeordnet ist, wobei sich die Schlagenergie gleichmäßiger auf oder in dem Drehrostelement 252, 253 ausbreiten kann, und andererseits an der Schlagarmkonfiguration mit einer asymmetrischen Hebelanordnung. Dabei liegt der Schlagarmkopf 126 auf der kürzeren Seite des Hebels.

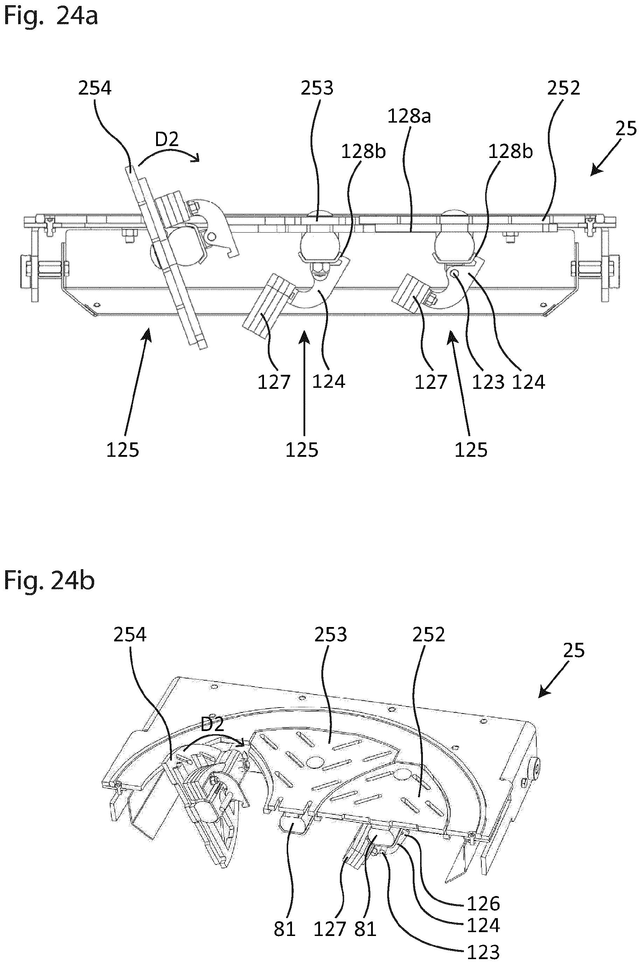

Die Figuren 24a und 24b zeigen eine vertikale Querschnittsansicht und eine dreidimensionale Schnittansicht auf den Rost 25 der Fig. 14a in einem zehnten Zustand. Dabei sind das erste und das zweite Drehrostelement 252, 253 in deren Ausgangspositionen zurückgekehrt. Das dritte Drehrostelement 254 wird nun in die Richtung des Pfeils D2 zurückgedreht. Die potentielle Energie des Masseelements 127 wird erhöht.

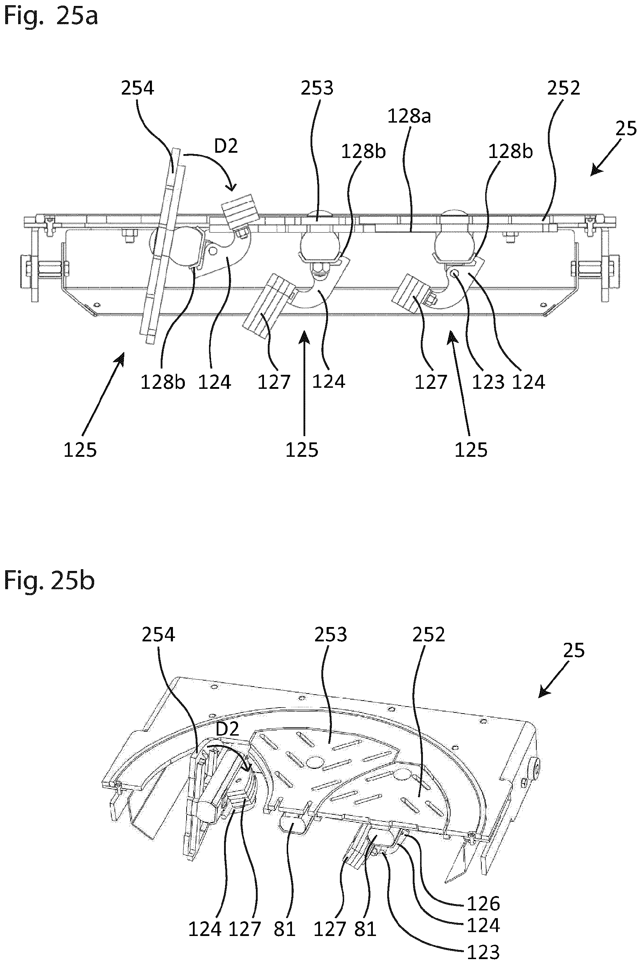

Die Figuren 25a und 25b zeigen eine vertikale Querschnittsansicht und eine dreidimensionale Schnittansicht auf den Rost der Fig. 14a in einem elften Zustand.

Dabei hat das Masseelement 127 der Reinigungseinrichtung 125 des dritten Drehrostelements 254 dessen Fallstartpositionen überschritten und ist auf die Anschlagfläche 128b des dritten Drehrostelements 25 herabgefallen und hat die Drehrostelemente 252, 253 abgeklopft.

Nach dem elften Zustand kehrt das dritte Drehrostelement 254 in seine Ausgangsposition zurück. Das Reinigungsverfahren kehrt somit in den ersten Zustand zurück.

Die Fig. 26 zeigt eine Draufsicht auf den Drehrost 25 der Fig. 14 mit einer erfindungsgemäßen Perforation.

Der Drehrost 25 der Fig. 26 weist eine Perforation auf, wobei die Perforation aus einer Mehrzahl von schlitzförmigen Öffnungen 256 besteht, die in der Draufsicht auf den Drehrost 25 derart angeordnet sind, dass eine erste Anzahl der schlitzförmigen Öffnungen 256a in einem ersten Winkel λ und nicht parallel zu einer (Achse der) Einschubrichtung des Brennstoffs auf den Drehrost 25 angeordnet ist, und eine zweite Anzahl der schlitzförmigen Öffnungen 256b in einem zweiten Winkel δ und nicht parallel zu einer Einschubrichtung des Brennstoffs auf den Drehrost 25 angeordnet ist.

Dabei können die Winkel λ und δ vorzugsweise übereinstimmen. Ein Schenkel des Winkels λ und ein Schenkel des Winkels δ erstreckt sich durch die Längsmittelachse der jeweiligen schlitzförmigen bzw. der sich länglich erstreckenden Öffnung 256 (vgl. auch die beispielhaften Angaben zur Winkelbestimmung des Winkels λ und des Winkels δ in Fig. 26). Der andere Schenkel des Winkels λ und der andere Schenkel des Winkels δ wird jeweils durch eine Längsachse gebildet, die parallel zur (Achse der) Einschubrichtung verläuft. Alternativ oder additiv kann der andere Schenkel des Winkels λ und der andere Schenkel des Winkels δ durch die längere Mittelachse (Hauptachse) der ovalen Verbrennungsfläche des Drehrosts 25 ausgebildet werden.

Diese im Allgemeinen zur Einschubrichtung winklig vorgesehene Anordnung der schlitzförmigen Öffnungen 256 verhindert das Entstehen einer Luftbarriere bei dem Einschub der Pellets oder des Hackguts, da sich diese auf der Verbrennungsfläche 258 mit einer deutlich geringeren Wahrscheinlichkeit aufstauen. Beispielsweise bei quer zur Einschubrichtung vorgesehenen schlitzförmigen Öffnungen ist die Wahrscheinlichkeit größer, dass sich die Pellets oder die Hackschnitzel an den Kanten der Öffnungen fangen und kein gleichmäßiger Durchschub von Brennstoff stattfinden kann. Auch ist es bei einem Rost 25, insbesondere mit der vorstehend beschriebenen komplexen Geometrie der Drehrostelemente 252, 253, 254, mit der winkligen Anordnung der schlitzförmigen Öffnungen 256 vorteilhaft möglich, eine Anordnung der Öffnungen 256 mit einer möglichst gleichmäßigen Verteilung der Luftdurchströmung des Brennstoffbetts vorzusehen.

Zudem haben längliche bzw. schlitzförmige Öffnungen 256 den Vorteil, dass diese einfach herzustellen sind und dass diese eine erhebliche Öffnungsfläche für den Luftstrom aufweisen, ohne jedoch dass der Brennstoff durch den Rost hindurchfallen kann.

Diese schlitzförmigen Öffnungen 256 können bevorzugt eine Breite von 4,6 mm +-0,5 mm (oder + 0,4 mm und - 1 mm) und/oder eine Länge von 35 mm +- 10 mm aufweisen. Auch können die schlitzförmigen Öffnungen 256 eine Breite von 4,5 mm +-0,6 mm und/oder eine Länge von 40 mm +- 20 mm aufweisen. Diese Maße werden bestimmt, so wie dies in Fig. 26 ersichtlich ist.

Zu Vorstehendem haben Versuche ergeben, dass diese Größenmaße insbesondere betreffend der in deren Größe genormten Pellets eine optimale Öffnungsgröße für den Luftstrom darstellen, dabei durch die erfindungsgemäße Reinigungseinrichtung 125 gut abzuklopfen sind, und die schlitzförmigen Öffnungen zudem in der Herstellung einfach herstellbar sind.

Weiters kann der erste Winkel (λ) größer 30 Grad und kleiner 60 Grad sein, und/oder es kann der zweite Winkel (δ) größer 30 Grad und kleiner 60 Grad sein. Bevorzugt kann der erste Winkel (λ) 40 Grad +- 10 Grad sein. Weiterhin bevorzugt kann der zweite Winkel (δ) 40 Grad +- 10 Grad sein.

In diesen Winkelbereichen ist die Staugefahr des Brennstoffs beim Einschub und ebenso die Verschmutzungsintensität der Öffnungen 256 vorteilhaft geringer.

Für eine Verbesserung der Anordnung der Öffnungen 265 im Drehrost 25 ist es im Übrigen schon ausreichend, wenn nur ein Teil, bevorzugt zumindest 80%, der schlitzförmigen Öffnungen 256 winklig zur Einschubrichtung angeordnet sind. Auch können die schlitzförmigen Öffnungen 256 auch nur in einem ersten Winkel vorgesehen sein, und müssen nicht zwingend mit den beiden Winkeln λ und δ vorgesehen sein.

Eine Perforation eines Rosts soll einerseits eine ausreichende und möglichst gleichmäßige Durchströmung des Brennstoffbetts mit Luft sicherstellen, wobei andererseits jedoch der Brennstoff nicht unverbrannt vom Rost herunterfallen darf. Experimente hierzu haben aufgezeigt, dass rein ovale oder kreisrunde Öffnungen schneller verschlacken und zusetzen, womit die Luftzufuhr ins Brennstoffbett empfindlich gestört werden kann. Durch die Verwendung zumindest einer Art an winklig angeordneten Schlitzen wird eine ausreichende Luftdurchströmung sichergestellt, während es zudem die Wahrscheinlichkeit eines Durchfallens des Brennstoffs durch den Rost 25 verringert wird.

Die vorstehend beschriebenen schlitzförmigen Öffnungen sind zudem aufgrund dieser Formgebung effizienter bzw. leichter abzuklopfen, womit eine Synergie zwischen der wirksamen Reinigungseinrichtung 125 und der mit dieser Reinigungseinrichtung besser abzuklopfenden Form der Öffnungen 256 derart besteht, dass die Reinigung des Drehrosts 25 insgesamt verbessert wird. Zudem kann bei der vorliegend komplexen Geometrie der Drehrostelemente 252, 253, 254 die Fläche dieser Elemente mit winklig angeordneten schlitzförmigen Öffnungen 256 gleichmäßiger durchbrochen werden, bzw. können die Öffnungen 256 auf diese Weise gleichmäßiger verteilt werden, um eine möglichst gleichmäßige Durchströmung des Brennstoffbetts sicherzustellen.

### (Weitere Aspekte der Offenbarung)

Der Drehrost 25 der Fig. 9 bis 11 ist zwar ohne die Reinigungseinrichtung 125 dargestellt, kann jedoch jederzeit mit einer der in den nachfolgenden Figuren dargestellten Reinigungseinrichtungen 125 kombiniert werden.

Obwohl die Reinigungseinrichtung in den Figuren 9 bis 11 nicht dargestellt ist, kann das in Bezug auf die Figuren 12a bis 26 Erläuterte auch auf den Drehrost 25 der Figuren 9 bis 11 Anwendung finden, wobei eine verbesserte Abreinigung des Drehrosts 25 insbesondere bei der Teil- und Universalabreinigung erzielt werden kann. Damit kann die technische Lehre betreffend der Reinigungseinrichtung 125 mit der technischen Lehre betreffend der Figuren 9 bis 11 kombiniert werden, so wie das dem Fachmann sinnvoll erscheint.

Vorliegend ist der Drehrost 25 beispielhaft mit drei Drehrostelementen 252, 253, 254 beschrieben. Allerdings kann der Drehrost 25 auch nur ein Drehrostelement 252 aufweisen, oder aber auch zwei Drehrostelemente 252, 253. Grundsätzlich ist ein Drehrost 25 mit einer Mehrzahl von Drehrostelementen denkbar. Insofern ist die vorliegende Offenbarung nicht auf eine spezifische Anzahl von Drehrostelementen 252, 253, 254 beschränkt.

Weiter kann jedes Drehrostelement 252, 253, 254 eines, zwei oder mehrere Reinigungseinrichtungen 125 aufweisen. Ebenso können ein Drehrostelement oder mehrere Drehrostelemente aus der Gesamtzahl von Drehrostelementen des Drehrosts 25 auch keine Reinigungseinrichtung 125 aufweisen. Beispielsweise kann nur eines der Drehrostelemente 252, 253, 254 eine Reinigungseinrichtung 125 aufweisen.

Vorliegend wird die Rezirkulationseinrichtung 5 mit einer Primärrezirkulation und einer Sekundärrezirkulation beschrieben. Die Rezirkulationseinrichtung 5 kann jedoch in deren Basiskonfiguration auch nur eine Primärrezirkulation und keine Sekundärrezirkulation aufweisen. Bei dieser Basiskonfiguration der Rezirkulationseinrichtung können entsprechend die für die Sekundärrezirkulation erforderlichen Komponenten vollständig entfallen, beispielsweise können der Rezirkulationseintrittskanalteiler 532, der Sekundärrezirkulationskanal 57 und eine zugehörige Sekundärmischeinheit 5b, welche erläutert wird, sowie die Rezirkulationsdüsen 291 entfallen.

Es kann wiederum alternativ auch nur eine Primärrezirkulation derart vorgesehen sein, dass zwar die Sekundärmischeinheit 5b und die zugehörigen Kanäle entfallen, und das Gemisch der Primärrezirkulation jedoch nicht nur unter den Drehrost 25 zugeführt wird, sondern dieses auch (beispielsweise über einen weiteren Kanal) zu den in dieser Variante vorgesehenen Rezirkulationsdüsen 291 zugeführt wird. Diese Variante ist mechanisch einfacher und damit kostengünstiger, und weist jedoch trotzdem die Rezirkulationsdüsen 291 zur Drallbildung der Strömung in der Brennkammer 24 auf.

Am Eingang der Rauchgasrezirkulationseinrichtung 5 können ein Luftmengensensor, eine Unterdruckdose, ein Temperatursensor, ein Abgassensor und/oder ein Lambda-Sensor vorgesehen sein.

Weiter können anstatt von nur drei Drehrostelementen 252, 253 und 254 auch zwei, vier oder mehr Drehrostelemente vorgesehen sein. Beispielsweise fünf Drehrostelemente könnten mit der gleichen Symmetrie und Funktionalität angeordnet sein, wie die vorgestellten drei Drehrostelemente. Zudem können die Drehrostelemente auch unterschiedlich zueinander geformt oder ausgebildet sein. Mehr Drehrostelemente haben den Vorteil, dass die Brecherfunktion verstärkt wird.

Zu den angegebenen Maßen ist anzumerken, dass auch abweichend von diesen andere Maße bzw. Maßkombinationen vorgesehen werden können.

Anstelle der konvexen Seiten der Drehrostelemente 252 und 254 können auch konkave Seiten dieser vorgesehen sein, wobei die Seiten des Drehrostelements 253 in Folge komplementär konvex geformt sein können. Dies ist funktional annähernd gleichwertig.

Als Brennstoffe der Biomasse-Heizanlage können auch andere Brennstoffe als Hackgut oder Pellets verwendet werden.

Der Drehrost kann alternativ auch als Kipprost bezeichnet werden.

Die vorliegend offenbarte Biomasse-Heizanlage kann auch ausschließlich mit einer Art eines Brennstoffs befeuert werden, beispielsweise nur mit Pellets.

Die Brennkammersteine 29 können auch ohne die Rezirkulationsdüsen 291 vorgesehen sein. Dies kann insbesondere für den Fall gelten, bei welchem keine Sekundärrezirkulation vorgesehen ist.

Die Geometrie insbesondere des Umfangs der der Drehrostelemente 252, 253, 254 kann von der in Fig. 26 dargestellten Geometrie abweichen. Damit kann die Lehre betreffend der winkligen Anordnung der schlitzförmigen Öffnungen 256 der Fig. 26 auch auf andere Arten und Formen von Rosten Anwendung finden. Zudem können beispielsweise auch Kipp- oder Schieberoste mit der winkligen Anordnung der schlitzförmigen Öffnungen 256 vorgesehen werden.

### (Bezugszeichenliste)

- 1: Biomasse-Heizanlage
- 11: Kessel
- 12: Kesselfuß
- 13: Kesselgehäuse
- 14: Wasserzirkulationseinrichtung
- 15: Gebläse
- 16: Außenverkleidung

- 125: Reinigungseinrichtung
- 121: Befestigung mit Anschlag
- 122: Aufhängung
- 123: Drehachse/Lager/Gelenk
- 124: Schlagarm
- 124a, 124b: erstes Ende, zweites Ende des Schlagarms
- 126: Schlagarmkopf
- 127: Masseelement
- 127a, 127b: Fläche des Masseelements
- 128a, 128b: Anschlagfläche

- 2: Brenneinrichtung
- 21: erste Wartungsöffnung für die Brenneinrichtung
- 22: Drehmechanikhalterung
- 23: Drehmechanik
- 24: Brennkammer
- 25: Drehrost
- 26: Primärverbrennungszone der Brennkammer
- 27: Sekundärverbrennungszone bzw. Strahlungsteil der Brennkammer
- 28: Brennstoffbett
- 29: Brennkammersteine
- A1: erste Horizontalschnittlinie
- A2: erste Vertikalschnittlinie
- 201: Zündeinrichtung
- 202: Brennkammerschräge
- 203: Brennkammerdüse
- 211: Dämmmaterial bspw. Vermiculite
- 231: Antrieb bzw. Motor(en) der Drehmechanik
- 251: Bodenplatte des Drehrosts
- 252: Erstes Drehrostelement
- 253: Zweites Drehrostelement
- 254: Drittes Drehrostelement
- 255: Übergangselement
- 256: Öffnungen
- 257: Rostlippen
- 258: Verbrennungsfläche
- 259: Drehlagesensor

- 260: Auflageflächen der Brennkammersteine
- 261: Nut
- 262: Vorsprung
- 263: Ring
- 264: Halterungssteine
- 265: Schräge der Halterungssteine

- 291: Sekundärluft bzw. Rezirkulationsdüsen

- 3: Wärmetauscher
- 31: Wartungsöffnung für Wärmetauscher
- 32: Kesselrohre
- 33: Kesselrohreintritt
- 34: Wendekammereintritt
- 35: Wendekammer
- 36: Federturbulator
- 37: Band- oder Spiralturbulator
- 38: Wärmetauschmedium

- 331: Isolation am Kesselrohreintritt

- 4: Filtereinrichtung
- 41: Abgasausgang
- 42: Elektrodenversorgungsleitung
- 43: Elektrodenhalterung
- 44: Filtereintritt
- 45: Elektrode
- 46: Elektrodenisolation
- 47: Filteraustritt
- 48: Käfig
- 49: Rauchgaskondensator

- 411: Rauchgaszuleitung zum Rauchgaskondensator
- 412: Rauchgasausgang aus dem Rauchgaskondensator
- 481: Käfighalterung
- 491: erster Fluidanschluss
- 491: zweiter Fluidanschluss
- 493: Wärmetauscherrohr
- 4931: Rohrhalteelement
- 4932: Rohrbodenelement
- 4933: Schlaufen/Umkehrstellen
- 4934: erste Zwischenräume der Wärmetauscherrohre zueinander
- 4935: zweite Zwischenräume der Wärmetauscherrohre zu der Außenwand des Rauchgaskondensators
- 4936: Durchlässe
- 495: Kopfelement
- 4951: Kopfelementströmungsführung
- 496: Kondensataustritt
- 4961: Kondensatsammeltrichter
- 497: Flansch
- 498: Seitenfläche mit Wartungsöffnung
- 499: Halterungseinrichtung für den Rauchgaskondensator

- 5: Rezirkulationseinrichtung
- 50: Ringkanal um Brennkammersteine
- 52: Luftventil
- 53: Rezirkulationseintritt
- 54: Primärmischkanal
- 55: Sekundärmischkanal oder Sekundärtemperierungskanal
- 56: Primärrezirkulationskanal
- 57: Sekundärrezirkulationskanal
- 58: Primärluftkanal
- 59: Sekundärluftkanal

- 5a: Primärmischeinheit
- 5b: Sekundärmischeinheit

- 521: Ventilstellaktor
- 522: Ventilstellachsen
- 523: Ventilflügel
- 524: Ventilgehäuse
- 525: Ventilvorkammer
- 526: Ventildurchtrittsöffnung
- 527: Ventilkörper
- 528: Ventilfläche
- 531: Rezirkulationseintrittskanal
- 532: Rezirkulationseintrittskanalteiler

- 541: Primärdurchtritt
- 542: Primärmischkammer
- 543: Primärmischkammeraustritt
- 544: Primärreziventileintritt
- 545: Primärluftventileintritt
- 546: Primärmischkammergehäuse

- 551: Sekundärdurchtritt
- 552: Sekundärmischkammer
- 553: Sekundärmischkammeraustritt
- 554: Sekundärreziventileintritt
- 555: Sekundärluftventileintritt
- 556: Sekundärmischkammergehäuse

- 581: Primärlufteintritt
- 582: Primärluftsensor
- 591: Sekundärlufteintritt
- 592: Sekundärluftsensor

- 6: Brennstoffzufuhr
- 61: Zellradschleuse
- 62: Achse der Brennstoffzufuhr
- 63: Übersetzungsmechanik
- 64: Brennstoffzufuhrkanal
- 65: Brennstoffzufuhröffnung
- 66: Antriebsmotor
- 67: Brennstoff-Förderschnecke

- 7: Ascheabfuhr
- 71: Ascheaustragungsschnecke
- 711: Schneckenachse
- 712: Zentrierungsscheibe
- 713: Wärmetauscherabschnitt
- 714: Brennerabschnitt
- 72: Motor der Ascheabfuhr mit Mechanik
- 73: Übergangsschnecke
- 731: rechter Unterabschnitt - nach links steigende Schnecke
- 732: linker Unterabschnitt -nach rechts steigende Schnecke
- 74: Aschebehälter
- 75: Übergangschneckengehäuse
- 751: Öffnung des Übergangsschneckengehäuses
- 752: Begrenzungsblech
- 753: Hauptkörperabschnitt des Gehäuses
- 754: Befestigungs- und Trennelement
- 755: Trichterelement

- 81: Lagerachsen
- 82: Drehachse der Brennstoff-Niveauklappe
- 83: Brennstoff-Niveauklappe
- 831: Hauptfläche
- 832: Mittenachse der Drehachse bzw. Lagerwelle 81
- 833: Oberflächenparallele
- 834: Öffnungen

- 84: Lagerkerbe
- 85: Sensorflansch
- 86: Glutbetthöhenmessmechanik

- 9: Reinigungseinrichtung
- 91: Reinigungsantrieb
- 92: Reinigungswellen
- 93: Wellenhalterung
- 94: Fortsatz
- 95: Turbulatorhalterungen
- 951: Drehlageraufnahme
- 952: Fortsätze
- 953: Durchlässe
- 954: Ausnehmungen
- 955: Drehlagergestänge
- 96: zweiarmiger Schlaghebel
- 97: Anschlagkopf

- E: Einschubrichtung des Brennstoffs
- S*: Strömungspfeile

- Fl: Fallstartposition
- D1: erste Drehrichtung
- D2: zweite Drehrichtung
- H: Horizontale
- FS: Schlagkraft
- Ms: Masseschwerpunkt
- S: Herabfallrichtung
- Le: Längsachse der Schlitze

## Patentansprüche

1. Drehrost (25) für eine Biomasseheizanlage (1), aufweisend zumindest ein Drehrostelement (252, 253, 254);
zumindest eine Lagerachse (81), mittels der das Drehrostelement (252, 253, 254) drehbar gelagert ist;
**dadurch gekennzeichnet, dass** zumindest eine an einem der Drehrostelemente (252, 253, 254) angebrachte Reinigungseinrichtung (125) vorgesehen ist, wobei die Reinigungseinrichtung (125) ein relativ zum Drehrostelement (252, 253, 254) bewegliches Masseelement (127) aufweist; wobei die Reinigungseinrichtung (125) derart eingerichtet ist, dass bei Drehung des Drehrostelements (252, 253, 254) eine Beschleunigungsbewegung des Masseelements (127) initiiert wird, so dass die Reinigungseinrichtung (125) eine Klopfwirkung auf das Drehrostelement (252, 253, 254) ausübt, um das Drehrostelement (252, 253, 254) abzureinigen.

2. Drehrost (25) für eine Biomasseheizanlage (1) gemäß Anspruch 1, wobei die Reinigungseinrichtung (125) derart eingerichtet ist, dass das Masseelement (127) bei Drehung des Drehrostelements (252, 253, 254) zur Initiierung der Beschleunigungsbewegung auf eine Fallstartposition (F1) angehoben wird, von dem aus das Masseelement (127) unter dem Einfluss der Erdbeschleunigung herabfällt, um die Klopfwirkung auf das Drehrostelement (252, 253, 254) zu erzeugen.

3. Drehrost (25) für eine Biomasseheizanlage (1) gemäß Anspruch 1 oder 2, wobei
die Reinigungseinrichtung (125) derart eingerichtet ist, dass
das Masseelement (127) der Reinigungseinrichtung (125) bei dessen Beschleunigungs- oder Fallbewegung auf eine Anschlagfläche (128a, 128b, 128c) des Drehrostelements (252, 253, 254) anschlägt.

4. Drehrost (25) für eine Biomasseheizanlage (1) gemäß einem der vorausgehenden Ansprüche, wobei
die Reinigungseinrichtung (125) derart eingerichtet ist, dass
das Masseelement (127) der Reinigungseinrichtung (125) bei dessen Beschleunigungs- oder Fallbewegung einen Schlagarm (124) auslenkt, so dass dieser auf eine Anschlagfläche (128a, 128b, 128c) anschlägt.

5. Drehrost (25) für eine Biomasseheizanlage (1) gemäß einem der vorausgehenden Ansprüche, wobei
die Reinigungseinrichtung (125) derart eingerichtet ist, dass
bei Drehung des Drehrostelements (252, 253, 254) in eine erste Richtung (D1) und bei Drehung des Drehrostelements (252, 253, 254) in eine zweite Richtung (D2), die der ersten Richtung entgegengesetzt ist, jeweils ein Anschlagen auf eine Anschlagfläche (128a, 128b) erfolgt.

6. Drehrost (25) für eine Biomasseheizanlage (1) gemäß einem der vorausgehenden Ansprüche, wobei
die Reinigungseinrichtung (125) an der Unterseite des Drehrostelements (252, 253, 254), die einer Verbrennungsfläche (258) des Drehrostelements (252, 253, 254) entgegengesetzt ist, angebracht ist.

7. Drehrost (25) für eine Biomasseheizanlage (1) gemäß einem der vorausgehenden Ansprüche, wobei
die Reinigungseinrichtung (125) das Folgende aufweist:
eine an dem Drehrostelement (252, 253, 254) angebrachte Aufhängung (122) mit einem Gelenk (123);
einen Schlagarm (124) mit einem ersten Ende (124a) und einem zweiten Ende (124b), wobei das Masseelement (127) an einem der Enden (124a, 124b) des Schlagarms (124) vorgesehen ist;
wobei der Schlagarm (124) über das Gelenk (123) um eine Drehachse des Gelenks (123) schwenkbar mit der Aufhängung (122) verbunden ist.

8. Drehrost (25) für eine Biomasseheizanlage (1) gemäß einem der vorausgehenden Ansprüche, wobei
die Lagerachse (81) des Drehrostelements (252, 253, 254) zumindest annähernd parallel zu der Drehachse des Gelenks (123) des Schlagarms (124) vorgesehen ist; und/oder
die Lagerachse (81) zumindest annähernd horizontal angeordnet ist.

9. Drehrost (25) für eine Biomasseheizanlage (1) gemäß einem der Ansprüche 2 bis 8, wobei
der Schlagarm (124) zwischen der Fallstartposition (F1) und einer Fallendposition (Fe) um einen vordefinierten Winkel (µ) schwenkbar angeordnet ist; und/oder die Reinigungseinrichtung (125) ausschließlich an dem Drehrostelement (252, 253, 254) angebracht ist und mit diesem in Verbindung steht.

10. Drehrost (25) für eine Biomasseheizanlage (1) gemäß einem der vorausgehenden Ansprüche, wobei
die Reinigungseinrichtung (125) mit dem Masseelement (127) derart eingerichtet ist, dass das Masseelement (127) eine ebene Schlagfläche (127a) aufweist, die beim Anschlagen zumindest annähernd parallel zu einer Anschlagfläche (128a, 128b) ausgerichtet ist.

11. Drehrost (25) für eine Biomasseheizanlage (1) gemäß einem der vorausgehenden Ansprüche, wobei
zumindest eine Anschlagfläche (128a, 128b, 128c) auf der Unterseite des Drehrostelements (252, 253, 254) und/oder auf der Lagerachse (8) und/oder auf der Reinigungseinrichtung (125) vorgesehen ist.

12. Drehrost (25) für eine Biomasseheizanlage (1) gemäß einem der vorausgehenden Ansprüche,
wobei die Drehrostelemente (252,253, 254) eine Verbrennungsfläche (258) für den Brennstoff ausbilden;
wobei die Drehrostelemente (252, 253, 254) Öffnungen (256) für die Luft zur Verbrennung aufweisen,
wobei die Öffnungen (256) länglich in Form eines Schlitzes ausgebildet sind, wobei eine Längsachse (Le) der Öffnungen (256) in einem Winkel von 30 bis 60 Grad zu einer Brennstoffeinschubrichtung (E) vorgesehen ist.

13. Drehrost (25) für eine Biomasseheizanlage (1) gemäß einem der vorausgehenden Ansprüche, wobei
der Drehrost (25) ein erstes Drehrostelement (252), ein zweites Drehrostelement (253) und ein drittes Drehrostelement (254) aufweist, die jeweils um die jeweilige Lagerachse (81) um zumindest 90 Grad drehbar angeordnet sind.

14. Drehrost (25) für eine Biomasseheizanlage (1) gemäß Anspruch 13, wobei
der Drehrost (25) weiter eine Drehrostmechanik (23) aufweist, die derart konfiguriert ist, dass diese das dritte Drehrostelement (254) unabhängig von dem ersten Drehrostelement (252) und dem zweiten Drehrostelement (253) drehen kann, und dass diese das erste Drehrostelement (252) und das zweite Drehrostelement (253) gemeinsam miteinander und unabhängig von dem dritten Drehrostelement (254) drehen kann.

15. Drehrost (25) für eine Biomasseheizanlage (1) gemäß einem der vorausgehenden Ansprüche, wobei
der Drehrost (25) eine Perforation aufweist; und wobei
die Perforation aus einer Mehrzahl von schlitzförmigen Öffnungen (256) besteht, die in der Draufsicht auf den Drehrost (25) derart angeordnet sind, dass:
eine erste Anzahl der schlitzförmigen Öffnungen (256a) in einem ersten Winkel (λ) und nicht parallel zu einer Einschubrichtung des Brennstoffs auf den Drehrost (25) angeordnet ist.

16. Drehrost (25) für eine Biomasseheizanlage (1) gemäß Anspruch 15, wobei
eine zweite Anzahl der schlitzförmigen Öffnungen (256b) in einem zweiten Winkel (δ) und nicht parallel zu einer Einschubrichtung des Brennstoffs auf den Drehrost (25) angeordnet ist.

17. Drehrost (25) für eine Biomasseheizanlage (1) gemäß Anspruch 15 oder 16, wobei
der erste Winkel (λ) größer 30 Grad und kleiner 60 Grad ist; und
der zweite Winkel (δ) größer 30 Grad und kleiner 60 Grad ist.

18. Drehrost (25) für eine Biomasseheizanlage (1) gemäß Anspruch 15 bis 17, wobei
eine Verbrennungsfläche (258) des Drehrosts (25) eine im Wesentlichen ovale oder
elliptische Verbrennungsfläche (258) konfiguriert; und
die Einschubrichtung (E) des Brennstoffs gleich einer längeren Mittelachse der ovalen Verbrennungsfläche des Drehrosts (25) ist.

19. Verfahren zum Abreinigen eines Drehrosts (25) einer Biomasseheizanlage (1), wobei der Drehrost (25) das Folgende aufweist:
zumindest ein Drehrostelement (252, 253, 254);
zumindest eine Lagerachse (81), mittels der das Drehrostelement (252, 253, 254) drehbar gelagert ist;
zumindest eine an einem der Drehrostelemente (252, 253, 254) angebrachte Reinigungseinrichtung (125), wobei die Reinigungseinrichtung (125) ein relativ zum Drehrostelement (252, 253, 254) bewegliches Masseelement (127) aufweist;
wobei das Verfahren die folgenden Schritte aufweist:
Drehen des Drehrostelements (252, 253, 254) in eine erste Richtung (D1) und damit einhergehendes Bewegen des Masseelements (127) der Reinigungseinrichtung (125);
Initiieren einer Beschleunigungsbewegung des Masseelements (127);
Anschlagen des Masseelements (127) mit Klopfwirkung auf einer Anschlagfläche (128a, 128b) entweder des Drehrostelements (252, 253, 254) oder der Reinigungseinrichtung (125) zur Abreinigung des Drehrostelements (252, 253, 254).

20. Verfahren zum Abreinigen eines Drehrosts (25) einer Biomasseheizanlage (1), gemäß Anspruch 19, wobei
das Masseelement (127) bei Drehung des Drehrostelements (252, 253, 254) zur Initiierung der Beschleunigungsbewegung auf eine Fallstartposition (F1, F2) angehoben wird, von dem aus das Masseelement (127) unter dem Einfluss der Erdbeschleunigung herabfällt, um die Klopfwirkung auf das Drehrostelement (252, 253, 254) zu erzeugen.

21. Verfahren zum Abreinigen eines Drehrosts (25) einer Biomasseheizanlage (1), gemäß Anspruch 19 oder 20, wobei
bei Drehung des Drehrostelements (252, 253, 254) in eine erste Richtung (D1, D3) und bei Drehung des Drehrostelements (252, 253, 254) in eine zweite Richtung (D2, D4), die der ersten Richtung entgegengesetzt ist, jeweils ein Anschlagen auf eine Anschlagfläche (128a, 128b) erfolgt.

## Claims

1. Rotary grate (25) for a biomass heating system (1), possessing
at least one rotary grate element (252, 253, 254);
at least one bearing axis (81), by means of which the rotary grate element (252, 253, 254) is rotatably mounted;
**characterised in that**
at least one cleaning device (125) is attached to one of the rotary grate elements (252, 253, 254),
wherein the cleaning device (125) possesses a mass element (127) that is movable relative to the rotary grate element (252, 253, 254);
wherein the cleaning device (125) is configured in such a way that when the rotary grate element (252, 253, 254) rotates it initiates an acceleration movement of the mass element (127), such that the cleaning device (125) exerts a knocking effect on the rotary grate element (252, 253, 254) in order to clean the rotary grate element (252, 253, 254).

2. Rotary grate (25) for a biomass heating system (1) according to claim 1, wherein
the cleaning device (125) is configured in such a way that
on rotating the rotary grate element (252, 253, 254) to initiate the acceleration movement, the mass element (127) is raised to a fall start position (F1), from which the mass element (127) falls down due to gravity in order to produce the knocking effect on the rotary grate element (252, 253, 254).

3. Rotary grate (25) for a biomass heating system (1) according to claim 1 or 2, wherein
the cleaning device (125) is configured in such a way that
when the mass element (127) of the cleaning device (125) accelerates or falls it strikes against a stop surface (128a, 128b, 128c) of the rotary grate element (252, 253, 254).

4. Rotary grate (25) for a biomass heating system (1) according to one of the preceding claims, wherein
the cleaning device (125) is configured in such a way that
when the mass element (127) of the cleaning device (125) accelerates or falls it deflects a strike arm (124), such that this arm strikes against a stop surface (128a, 128b, 128c).

5. Rotary grate (25) for a biomass heating system (1) according to one of the preceding claims, wherein
the cleaning device (125) is configured in such a way that
when rotating the rotary grate element (252, 253, 254) in a first direction (D1) and when rotating the rotary grate element (252, 253, 254) in a second direction (D2) that is opposite to the first direction, there results in each case a strike against a stop surface (128a, 128b).

6. Rotary grate (25) for a biomass heating system (1) according to one of the preceding claims, wherein
the cleaning device (125) is attached to the underside of the rotary grate element (252, 253, 254) opposite a combustion surface (258) of the rotary grate element (252, 253, 254).

7. Rotary grate (25) for a biomass heating system (1) according to one of the preceding claims, wherein
the cleaning device (125) possesses the following:
a suspension (122) with a hinge (123) attached to the rotary grate element (252, 253, 254);
a strike arm (124) with a first end (124a) and a second end (124b), wherein the mass element (127) is attached to one of the ends (124a, 124b) of the strike arm (124).
wherein the strike arm (124) is connected through the hinge (123) with the suspension (122) so as to be pivotable about a rotational axis of the hinge (123).

8. Rotary grate (25) for a biomass heating system (1) according to one of the preceding claims, wherein
the bearing axis (81) of the rotary grate element (252, 253, 254) is disposed at least approximately parallel to the rotational axis of the hinge (123) of the strike arm (124); and/or
the bearing axis (81) is arranged at least approximately horizontally.

9. Rotary grate (25) for a biomass heating system (1) according to one of claims 2 to 8, wherein
the strike arm (124) is arranged between the fall start position (F1) and a fall end position (Fe) and can pivot through a predefined angle (µ); and/or
the cleaning device (125) is exclusively located on the rotary grate element (252, 253, 254) and is connected to it.

10. Rotary grate (25) for a biomass heating system (1) according to one of the preceding claims, wherein
the cleaning device (125) with the mass element (127) is disposed such that the mass element (127) has a flat striking surface (127a) that on striking is aligned at least approximately parallel to a stop surface (128a, 128b).

11. Rotary grate (25) for a biomass heating system (1) according to one of the preceding claims, wherein
at least one stop surface (128a, 128b, 128c) is provided on the underside of the rotary grate element (252, 253, 254) and/or on the bearing axis (8) and/or on the cleaning device (125).

12. Rotary grate (25) for a biomass heating system (1) according to one of the preceding claims, wherein
the rotary grate elements (252, 253, 254) form a combustion surface (258) for the fuel;
wherein the rotary grate elements (252, 253, 254) possess openings for the air for the combustion,
wherein the openings (256) are longitudinally shaped in the form of a slit, wherein a longitudinal axis (Le) of the openings (256) is provided at an angle of 30 to 60 degrees to a fuel insertion direction (E).

13. Rotary grate (25) for a biomass heating system (1) according to one of the preceding claims, wherein
the rotary grate (25) possesses a first rotary grate element (252), a second rotary grate element (253) and a third rotary grate element (254), each arranged to be rotatable by at least 90 degrees around their respective bearing axle (81).

14. Rotary grate (25) for a biomass heating system (1) according to claim 13, wherein
the rotary grate (25) additionally possesses a rotary grate mechanism (23) that is configured in such a way that it can rotate the third rotary grate element (254) independently of the first rotary grate element (252) and the second rotary grate element (253), and that it can rotate the first rotary grate element (252) and the second rotary grate element (253) in concert and independently of the third rotary grate element (254).

15. Rotary grate (25) for a biomass heating system (1) according to one of the preceding claims, wherein
The rotary grate (25) possesses a perforation; and wherein
the perforation consists of a plurality of slit-shaped openings (256) that in the top view are disposed on the rotating grate (25) such that:
a first number of the slit-shaped openings (256a) is disposed on the rotating grate (25) at a first angle (A) and not parallel to an insertion direction of the fuel.

16. Rotary grate (25) for a biomass heating system (1) according to claim 15, wherein
a second number of the slit-shaped openings (256b) is disposed on the rotating grate (25) at a second angle (δ) and not parallel to an insertion direction of the fuel.

17. Rotary grate (25) for a biomass heating system (1) according to claim 15 or 16, wherein
the first angle (A) is greater than 30 degrees and less than 60 degrees; and
the second angle (δ) is greater than 30 degrees and less than 60 degrees.

18. Rotary grate (25) for a biomass heating system (1) according to claims 15 to 17, wherein
a combustion surface (258) of the rotary grate (25) configures a substantially oval or elliptical combustion surface (258); and
the direction of insertion (E) of the fuel is equal to a longer central axis of the oval combustion surface of the rotary grate (25).

19. Method for cleaning a rotary grate (25) of a biomass heating system (1), wherein the rotary grate (25) possesses the following:
at least one rotary grate element (252, 253, 254);
at least one bearing axis (81), by means of which the rotary grate element (252, 253, 254) is rotatably mounted;
at least one cleaning device (125) attached to one of the rotary grate elements (252, 253, 254),wherein the cleaning device (125) possesses a mass element (127) that can move relative to the rotary grate element (252, 253, 254);
wherein the method comprises the following steps:
rotating the rotary grate element (252, 253, 254) in a first direction (D1) and thereby a concomitant movement of the mass element (127) of the cleaning device (125);
initiating an accelerating movement of the mass element (127);
striking the mass element (127) with a knocking effect on a stop surface (128a, 128b) of either the rotary grate element (252, 253, 254) or the cleaning device (125) for cleaning the rotary grate element (252, 253, 254).

20. Method for cleaning a rotary grate (25) of a biomass heating system (1) according to claim 19, wherein
by rotating the rotary grate element (252, 253, 254) to initiate the acceleration movement, the mass element (127) is raised to a fall start position (F1, F2), from which the mass element (127) falls down due to gravity so as to produce the knocking effect on the rotary grate element (252, 253, 254).

21. Method for cleaning a rotary grate (25) of a biomass heating system (1) according to claim 19 or 20, wherein
by rotating the rotary grate element (252, 253, 254) in a first direction (D1, D3) and by rotating the rotary grate element (252, 253, 254) in a second direction (D2, D4) that is opposite to the first direction, there results in each case a strike against a stop surface (128a, 128b).

## Revendications

1. Grille rotative (25) pour une installation de chauffage à biomasse (1) comprenant au moins un élément de grille rotative (252, 253, 254), au moins un axe de palier (81) par lequel l'élément de grille rotative (252, 253, 254) est monté à rotation,
grille rotative **caractérisée en ce que**
il est prévu au moins une installation de nettoyage (125) sur l'un des éléments de grille rotative (252, 253, 254),
* l'installation de nettoyage (125) comprenant un élément massique (127) mobile par rapport à l'élément de grille rotative (252, 253, 254),
* l'installation de nettoyage (125) étant conçue pour que pendant la rotation de l'élément de grille rotative (252, 253, 254), elle initie un mouvement d'accélération de l'élément massique (127) pour que l'installation de nettoyage (125) exerce un effet de frappe sur l'élément de grille rotative (252, 253, 254) pour nettoyer cet élément de grille rotative (252, 253, 254).

2. Grille rotative (25) pour une installation de chauffage à biomasse (1) selon la revendication 1,
selon laquelle
l'installation de nettoyage (125) est installée de façon que l'élément massique (127), lors de la rotation de l'élément de grille rotative (252, 253, 254), soit soulevé en position de début de chute (F1) pour initier le mouvement d'accélération, et à partir de là, l'élément massique (127) chute sous l'effet de la gravité pour générer l'effet de frappe sur l'élément de grille rotative (252, 253, 254).

3. Grille rotative (25) pour une installation de chauffage à biomasse (1) selon la revendication 1 ou 2,
selon laquelle
l'installation de nettoyage (125) est réalisée pour que l'élément massique (127) frappe l'installation de nettoyage (125) lors de son mouvement de chute ou d'accélération sur une surface de butée (128a, 128b, 128c) de l'élément de grille rotative (252, 253, 254).

4. Grille rotative (25) pour une installation de chauffage à biomasse (1) selon l'une des revendications précédentes,
selon laquelle
l'installation de nettoyage (125) est conçue pour que :
- lors de son mouvement d'accélération ou de chute l'élément massique (127) de l'installation de nettoyage (125), dévie un bras de frappe (124) pour que ce bras frappe contre une surface de butée (128a, 128b, 128c).

5. Grille rotative (25) pour une installation de chauffage à biomasse (1) selon l'une quelconque des revendications précédentes,
selon laquelle
l'installation de nettoyage (125) est conçue pour avoir chaque fois une frappe sur une surface de frappe (128a, 128b) pour une rotation de l'élément de grille rotative (252, 253, 254) dans une première direction (D1) et pour une rotation de l'élément de grille rotative (252, 253, 254) dans une seconde direction (D2), opposée à la première direction.

6. Grille rotative (25) pour une installation de chauffage à biomasse (1) selon l'une des revendications précédentes,
selon laquelle
l'installation de nettoyage (125) est sur le dessous de l'élément de grille rotative (252, 253, 254) à l'opposé de la surface de combustion (258) de l'élément de grille rotative (252, 253, 254).

7. Grille rotative (25) pour une installation de chauffage à biomasse (1) selon l'une des revendications précédentes,
selon laquelle
l'installation de nettoyage (125) comprend :
- une suspension (122) avec une articulation (123) sur l'élément de grille rotative (252, 253, 254),
- un bras de frappe (124) avec une première extrémité (124a) et une seconde extrémité (124b), l'élément massique (127) étant prévu à l'une des extrémités (124a, 124b) du bras de frappe (124),
- le bras de frappe (124) étant relié par l'articulation (123) autour d'un axe de rotation de l'articulation (123) de manière à pouvoir pivoter avec la suspension (122).

8. Grille rotative (25) pour une installation de chauffage à biomasse (1) selon l'une des revendications précédentes,
selon laquelle
l'axe de palier (81) de l'élément de grille rotative (252, 253, 254) est au moins sensiblement parallèle à l'axe de rotation de l'articulation (123) du bras de frappe (124), et/ou
l'axe de palier (81) est au moins sensiblement horizontal.

9. Grille rotative (25) pour une installation de chauffage à biomasse (1) selon l'une des revendications 2 à 8,
selon laquelle
le bras de frappe (124) est monté pivotant entre la position de début de chute (F1) et une position de fin de chute (Fe) d'un angle prédéfini (µ), et/ou
l'installation de nettoyage (125) est uniquement installée sur l'élément de grille rotative (252, 253, 254) auquel elle est reliée.

10. Grille rotative (25) pour une installation de chauffage à biomasse (1) selon l'une des revendications précédentes,
selon laquelle
l'installation de nettoyage (125) est conçue avec l'élément massique (127) pour que l'élément massique (127) présente une surface de frappe (127a), plane qui, lors de la frappe, est au moins pratiquement parallèle à une surface de frappe (128a, 128b).

11. Grille rotative (25) pour une installation de chauffage à biomasse (1) selon l'une des revendications précédentes,
selon laquelle
le dessous de l'élément de grille rotative (252, 253, 254) et/ou l'axe de palier (8) et/ou l'installation de nettoyage (125) ont au moins une surface de frappe (128a, 128b, 128c).

12. Grille rotative (25) pour une installation de chauffage à biomasse (1) selon l'une des revendications précédentes,
selon laquelle
- l'élément de grille rotative (252, 253, 254) forme une surface de combustion (258) pour le combustible,
- l'élément de grille rotative (252, 253, 254) comportant des orifices (256) pour l'air de combustion,
- les orifices (256) ont une forme allongée comme des fentes, et
- l'axe longitudinal (Le) des orifices (256) fait un angle compris entre 30 et 60 degrés par rapport à une installation d'introduction du combustible (E).

13. Grille rotative (25) pour une installation de chauffage à biomasse (1) selon l'une des revendications précédentes,
selon laquelle
la grille rotative (25) comporte un premier élément de grille rotative (252), un second élément de grille rotative (253) et un troisième élément de grille rotative (254), ces éléments étant montés à rotation d'au moins 90 degrés, sur un axe de palier (81) respectif.

14. Grille rotative (25) pour une installation de chauffage à biomasse (1) selon la revendication 13,
selon laquelle
la grille rotative (25) comporte en outre un mécanisme de grille rotative (23) configuré pour pouvoir tourner le troisième élément de grille (254) indépendamment du premier élément de grille (252) et du second élément de grille (253) et en ce que ce mécanisme relie entre eux le premier élément de grille (252) et le second élément de grille (253) et peut tourner indépendamment du troisième élément de grille rotative (254).

15. Grille rotative (25) pour une installation de chauffage à biomasse (1) selon l'une des revendications précédentes,
selon laquelle
la grille rotative (25) a une perforation, et
la perforation se compose d'un ensemble d'orifices en forme de fente (256) qui, en vue de dessus sur la grille rotative (25) sont organisés pour qu'un premier ensemble d'orifices en forme de fente (256a) fasse un premier angle (À) et n'est pas parallèle à la direction d'introduction du combustible sur la grille rotative (25).

16. Grille rotative (25) pour une installation de chauffage à biomasse (1) selon la revendication 15,
selon laquelle
un second nombre d'orifices en forme de fente (256b) est prévu suivant un second angle (δ) et n'est pas parallèle à la direction d'engagement du carburant sur la grille rotative (25).

17. Grille rotative (25) pour une installation de chauffage à biomasse (1) selon l'une des revendications 15 ou 16,
selon laquelle
le premier angle (À) est plus grand que 30 degrés et plus petit que 60 degrés, et
le second angle (δ) est plus grand que 30 degrés et plus petit que 60 degrés.

18. Grille rotative (25) pour une installation de chauffage à biomasse (1) selon les revendications 15 à 17,
selon laquelle
la surface de combustion (258) de la grille rotative (25) est configurée pratiquement comme une surface de combustion (258) ovale ou elliptique, et
la direction d'introduction du combustible (E) est égale à l'axe médian le plus long de la surface de combustion ovale de la grille rotative (25).

19. Procédé de nettoyage d'une grille rotative (25) d'une installation de chauffage à biomasse (1) selon lequel
la grille rotative (25) a les éléments suivants :
au moins un élément de grille rotative (252, 253, 254),
au moins un axe de palier (81) pour le montage à rotation de l'élément de grille rotative (252, 253, 254),
au moins une installation de nettoyage (125) sur l'élément de grille rotative (252, 253, 254), cette installation de nettoyage (125) ayant un élément massique (127), mobile par rapport à l'élément de grille rotative (252, 253, 254),
le procédé comprenant les étapes suivantes consistant à :
- tourner l'élément de grille rotative (252, 253, 254) dans une première direction (D1) et ainsi déplacer de l'élément massique (127) de l'installation de nettoyage (125),
- initier un mouvement d'accélération de l'élément massique (127),
- frapper avec l'élément massique (127) par un effet de frappe sur une surface de butée (128a, 128b) de l'élément de grille rotative (252, 253, 254) ou de l'installation de nettoyage (125) pour nettoyer l'élément de grille rotative (252, 253, 254).

20. Procédé de nettoyage d'une grille rotative (25) d'une installation de chauffage à biomasse (1) selon la revendication 19,
selon lequel
l'élément massique (127), lors de la rotation de l'élément de grille rotative (252, 253, 254), est soulevé dans une position de début de chute (F1, F2) pour initier le mouvement de l'accélération, position à partir de laquelle l'élément massique (127) sous l'effet de la gravité, chute pour créer un effet de frappe sur l'élément de grille rotative (252, 253, 254).

21. Procédé de nettoyage d'une grille rotative (25) d'une installation de chauffage à biomasse (1) selon la revendication 19 ou 20,
selon lequel
on a chaque fois une frappe sur une surface de frappe (128a, 128b) par la rotation de l'élément de grille rotative (252, 253, 254) dans une première direction (D1, D3) et par la rotation de l'élément de grille rotative (252, 253, 254) dans une seconde direction (D2, D4) opposée à la première direction.
